# EUROPEAN PATENT SPECIFICATION

(11) **EP 4 559 986 B1**
(45) Date of publication and mention of the grant of the patent: **07.10.2026**
(21) Application number: 23857245.7
(22) Date of filing: 14.08.2023
(51) Int. Cl.: C09D 133/00, C09D 5/02, C09D 7/40, C09D 7/61, C09D 7/63, C10M 125/02, C10M 129/26, C10M 129/40, C10M 129/44, F16L 15/04, C10N 10/02, C10N 10/04, C10N 20/06, C10N 40/00, C10N 50/02

(54) **COATING DRUG FOR FORMING SOLID LUBRICATING FILM, PRODUCTION METHOD FOR SAID COATING DRUG, OIL WELL PIPE REPAIRING METHOD, LUBRICATION IMPROVING METHOD FOR OIL WELL PIPE, AND OIL WELL PIPE**
BESCHICHTUNGSMITTEL ZUR BILDUNG EINES FESTEN SCHMIERFILMS, HERSTELLUNGSVERFAHREN FÜR DIESES BESCHICHTUNGSMITTEL, ÖLBOHRROHRREPARATURVERFAHREN, SCHMIERVERBESSERUNGSVERFAHREN FÜR ÖLBOHRROHR UND ÖLBOHRROHR
AGENT CHIMIQUE DE REVÊTEMENT POUR FORMATION DE FILM LUBRIFIANT SOLIDE AINSI QUE PROCÉDÉ DE FABRICATION DE CELUI-CI, PROCÉDÉ DE RÉPARATION DE TUYAU POUR PUITS DE PÉTROLE, PROCÉDÉ AMÉLIORANT LA LUBRIFICATION DE TUYAU POUR PUITS DE PÉTROLE, ET TUYAU POUR PUITS DE PÉTROLE

(30) Priority: 25.08.2022 JP 2022134376
(43) Date of publication of application: 28.05.2025
(73) Proprietor: JFE Steel Corporation, Tokyo 100-0011 (JP); Toyo Drilube Co., Ltd., Tokyo 155-0032 (JP)
(72) Inventor: ISHIGURO Yasuhide, Tokyo 100-0011 (JP); GOTO Seigo, Tokyo 100-0011 (JP); KOGA Takashi, Tokyo 100-0011 (JP); KAWAI Takamasa, Tokyo 100-0011 (JP); OZAKI Seiji, Tokyo 100-0011 (JP); SATO Hideo, Tokyo 100-0011 (JP); FUJIMOTO Sachiko, Tokyo 100-0011 (JP); TAKANO Jun, Tokyo 100-0011 (JP); OKUBO Akira, Tokyo 155-0032 (JP); SHODA Koichi, Tokyo 155-0032 (JP); KOBAYASHI Ryota, Tokyo 155-0032 (JP); KUBO Ryota, Tokyo 155-0032 (JP); TOYOSAWA Kota, Tokyo 155-0032 (JP)
(74) Representative: Haseltine Lake Kempner LLP
(86) International application number: PCT/JP2023/029434
(87) International publication number: WO 2024/043132

(56) References cited:
- EP-B1- 1 548 346
- WO-A1-2009/072486
- JP-A- 2008 537 062
- JP-A- 2014 501 885
- JP-A- H08 300 087
- JP-A- H1 036 876
- JP-A- S6 284 193
- JP-A- S6 284 193

## Description

### Technical Field

This disclosure provides technologies suitable for a coating agent for forming a solid lubrication coating film and for repairing a thread portion of oil country tubular goods using the coating agent and improving the lubrication performance of the thread. That is, this disclosure provides technologies related to lubrication of a metal surface of a metal component such as a connection for oil country tubular goods using a solid lubrication coating film.

This disclosure is used, for example, in a case where lubricity needs to be further increased by one level for an existing solid lubrication coating film. That is, this disclosure also includes applications on an existing solid lubrication coating film for purposes of improving lubricity and avoiding galling including a preventive meaning thereof. However, a case where lubrication is realized only by the solid lubrication coating film of this disclosure is also included as an intended target of this disclosure.

In addition, this disclosure relates to, for example, lubrication of a threaded joint for oil country tubular goods and is used in a case where light galling occurs only in a thread part of both the thread part and a seal part constituting a thread portion which is a component of a connection for oil country tubular goods. For example, this disclosure relates to a chemical agent intended to be applied for the purpose of partially repairing a region of a scraped portion on site or on a field location, when the galled part is scraped and cured with a grinder, sandpaper, a file, or the like. A partial repair is also referred to as a touch-up.

### Background Art

Oil country tubular goods that have been used in oil/gas drilling sites and production have long had a thread portion (joint portion) at which make-up/break-out has been performed, and the thread portion has been lubricated with a wet lubricating compound. Accordingly, lubrication with a lubricating compound is still widely performed.

For example, when oil country tubular goods are made of a carbon steel-based material, a Mn phosphate chemical conversion film is formed as a base on a threaded surface. In addition, when the oil country tubular goods are made of a stainless steel-based or high-alloy steel-based material, an electroplating film including Cu plating is formed as a base on a threaded surface on a box connection (female thread) side. Thereafter, a lubricating compound is applied to one or both of a box connection and a pin connection to impart lubricity.

The lubricating compound is a compound that has long been made of grease or the like containing a group of heavy metals such as Pb, Zn, or graphite. At present, there are environmentally friendly compounds not containing heavy metals, and these compounds have already been used. In addition, a lubrication technology using a dry solid lubrication coating film technique is not widely used but has also been used.

The wet compound forms a wet lubrication film. On the other hand, a lubrication technology using a solid lubrication coating film is called a dry technology or a greaseless technology. The Lubrication technology using the solid lubrication coating film is becoming one of important technologies capable of achieving lubrication of oil country tubular goods used in oil/gas drilling sites and production.

However, no matter how the lubrication technology is improved, some cases of defective make-up occur, although occurring rarely. Accordingly, for example, when the defective make-up causes a seal part to gall and become damaged, a box connection and a pin connection thereof are determined to have failed. The failed box connection is discarded. In addition, among the pin connections of the actual length that have failed, a pin connection having even slight damage at a seal part of an actual length of the failed pin connection is often threaded again after only a pin thread part is cut off. In the worst case thereof, even in a situation where the pin connection and the box connection strongly mesh with each other and cannot be unmeshed, both threads are discarded.

Here, an actual length of a pin connection in this specification indicates 10 m or longer.

However, in a case where the seal part remains intact and only a crest region part is slightly damaged, a touch-up (partial repair) is performed. For example, at a well site, a touch-up is performed on a lightly galled part of a crest region part of a box connection or a crest region part of a pin connection. That is, a damaged part and the vicinity thereof are scraped and cured with a grinder, sandpaper, a file, or the like. During curing, a Mn phosphate chemical conversion treatment of a base for the purpose of lubrication or a base film such as an electroplated layer is destroyed by the curing. Therefore, in the related art, a commercially available lubrication paste, a lubrication spray, or the like is applied to repair a seal portion and maintain lubrication.

Such a scene where a touch-up (partial repair) needs to be performed at a well site may occur at a certain rate as a matter of course. In addition, in a case of severe galling, there is a portion where a metal part of the severely galled part is scraped off by curing. Therefore, it is preferable to use a repair agent that fills the scraped part.

Such repair is rarely performed by applying only a lubricating compound of the related art, that is, a compound containing a group of heavy metals such as Pb, Zn, or graphite. The repair is performed using a group of commercially available repair products (repair agent) which are an anti-gall spray, paste, or compound. The field of anti-gall lubricants is broad. For example, there are many types ranging from an anti-gall lubricant made of only mineral oil to an anti-gall lubricant obtained by dispersing metal powder (Zn-based or Ni-based powder) in a mineral oil or the like or dispersing a lubricant (black lead, MoS₂, BN, PTFE, or silicone) or the like.

At a portion where a load condition is severe (a place for heavy-duty application) like lubrication of a connection for oil country tubular goods, it is common to use a commercially available product having a trade name of Molykote (Molykote (trademark): manufactured by Dow Corning Corp. or DuPont de Nemours, Inc.) and a similar product group thereof. Molykote itself is now a brand name. Therefore, examples of Molykote do not necessarily contain MoS₂ but include a product composed of a Zr-based material, a F-based material, or graphite and a mixed product thereof, as main components. However, in this specification, Molykote mainly includes MoS₂. In addition, in the following description, Molykote and the similar product group thereof may also be collectively referred to as Molykote.

Lubrication of the connection for oil country tubular goods can also be achieved by Molykote or other anti-gall sprays, pastes themselves. However, the products are expensive. Therefore, it is also not very common to achieve lubrication of a connection for oil country tubular goods by performing application treatment at a working yard near a well or by using a product itself alone at a make-up site of the well.

Regarding a utilization method of Molykote in the field of oil country tubular goods, the following is used, only in a case of abnormal lubrication. That is, it is a common usage to apply Molykote to a pipe at a time of a touch-up at a well site after curing a galled portion at the make-up site of the well. However, Molykote is a lubricant that ensures high lubricity and does not fill a repair part unlike putty. Molykote is merely a repair material.

Molykote in this specification mainly contains MoS₂ and an oil-based solvent of mineral oil (organic solvent-based) and synthetic oil. That is, Molykote is made by dispersing and incorporating MoS₂ into a mineral oil such as white mineral oil, polyalphaolefin (PAO), or polyalkylene glycol (PAG). Accordingly, it is common to apply a spray or paste-like Molykote to a portion to be repaired. The white mineral oil is baby oil and also stable oil that is a colorless liquid at an ambient temperature and is non-volatile. Further, examples of Molykote include a product obtained by mixing lithium soap or calcium soap as a thickener with a mineral-based oil as a base to impart a viscosity to the oil.

As described above, a galled thread of a crest region can be used again by performing a touch-up at a well site. At this time, Molykote is applied to an entire surface of a thread portion and the make-up is performed. Alternatively, after Molykote is applied only for repair and dried, a lubricating compound (API-Mod or the like) may be applied to the entire surface of the thread portion, and make-up may be performed again. In this case, the lubricating compound is used after mineral oil is dried.

The touch-up at the well site is a relief measure in a case of light galling of a crest region, for a purpose of maintaining the sealability of the thread. However, in a case where a seal part is even lightly galled, the part cannot be repaired. In addition, in a case where lubrication is predicted to be insufficient in advance, there is also a case where Molykote is applied in a preventive manner to further improve lubricity entirely by one level.

On the other hand, Molykote containing MoS₂ has also been pointed out to have a problem. That is, it has been pointed out that there is a very high risk that a connection will crack due to hydrogen embrittlement due to MoS₂ at a well without leaving an interval from a date when the connection was installed.

Recently, the strength and hardness of the oil country tubular goods have been increased, and the concern has become problematic. For example, NPL 1 describes a report that when a spray lubricant containing MoS₂ is applied to oil country tubular goods made of a Ni-based alloy, the oil country tubular goods crack. In addition, there is also a widespread notion among oil/gas engineers that MoS₂ is changed to H₂S, resulting in a high risk of hydrogen embrittlement. Hence, there is a high need to avoid use of Molykote containing MoS₂ as a chemical agent to be used for a touch-up at a well site.

In addition, in lubrication of a connection for oil country tubular goods, not only a method using a wet compound of the related art for lubrication but also a "technology using a solid lubrication coating film" of a new technology may need a touch-up at a well site as described above.

According to the investigation of the inventors, unlike a case of using a lubricating compound, lubrication with a solid lubrication coating film tends to cause light galling.

The lubricating compound is in a form of a viscous liquid-like paste. Therefore, the compound moves in conjunction with make-up/break-out. On the other hand, the solid lubrication coating film does not move and is unavoidably slightly scraped by the make-up/break-out. Accordingly, it cannot be expected that fragments and peeled off pieces derived from the solid lubrication coating film itself always move in conjunction with the make-up/break-out. When secondary products such as the fragments or the like clog a thread gap, the secondary products develop into galling. Therefore, a touch-up at a well site is still regarded as important also in lubrication with the solid lubrication coating film.

Here, in a case of light galling of a crest part of the solid lubrication coating film, it is also conceivable to use Molykote as in a case in the related art. However, there is a concern about a crack problem that may be derived from MoS₂ as described above, and there is a high demand for avoiding Molykote containing MoS₂.

In addition, the solid lubrication coating film is a dry solid lubrication film and is referred to as a dry coating film. If a paste-like or spray-like Molykote is used in a touch-up at a well site, another problem arises in the case of the solid lubrication coating film.

That is, Molykote is dissolved in solvents ranging from mineral-based oil to synthetic oil such as white oil, PAO, or PAG. Therefore, rather than a situation in which a film formed by Molykote is completely dried, the film is often a slightly wet film. Consequently, Molykote does not conform to the technical idea of the dry solid lubrication coating film. Strictly speaking, Molykote does not fall within the technical category of solid lubrication coating films which is set on a premise that the solid lubrication coating films are "dry". Even in a case of being in the form of a spray, Molykote can be regarded as a dry coating film once Molykote is dried. However, in many cases, a solid lubrication component and a binder resin component are mixed into a white oil-based solvent, and time for drying is taken. There are many cases where a semi-wet state is maintained even after a long time of drying, and a completely dried state is not reached.

In addition, fire is strictly prohibited at a well site. The well site should prioritize drying and avoid using toluene, xylene, benzene, and other volatile organic solvents (VOC) having a low boiling point and a low flash point.

In addition, PFAS-containing fluororesin dispersed in a fluorine solvent (HFE etc.) has a low boiling point, thus, having a quick drying property. Accordingly, unlike VOC in the related art, fluororesin has a high flash point and does not cause fire or explosion so that a film that can be safely and early dried can be provided. However, the fact that the use of PFAS in TSCA in April 2021 was significantly regulated makes it possible to determine that products containing PFAS are practically unusable.

In addition to the touch-up at the well site, there are the following cases of use. That is, there is a case where it is necessary to further improve the lubricity characteristics of an existing solid lubrication coating film itself by one level instead of a partial repair as will be expected in the touch-up. This is a viewpoint that is not found in a technology for making up a base coating film with a compound in the related art. Further, the base coating film is formed by a chemical conversion treatment or electroplating.

As described above, in the lubrication technology for a thread for oil country tubular goods in the related art, an Mn phosphate chemical conversion film or an electroplating film is applied as a base on a box connection (female thread) side. Thereafter, the lubricating compound is applied to spread over lubrication surfaces of both threads to achieve lubricity. The lubricating compound is in the form of a viscous liquid-like paste, and the compound moves in conjunction with make-up/break-out. Therefore, the lubricating compound does not affect a size of the oil country tubular goods, and good lubrication can be expected.

On the other hand, the solid lubrication coating film is strongly affected by a size of an outer diameter and a wall thickness of the oil country tubular goods. In the lubrication of the solid lubrication coating film, the solid lubrication coating film realizes lubrication while being scraped itself little by little. Therefore, the film is often damaged, for example, when misalignment occurs at the time of make-up or when impact is applied to a coupling connection (internal thread) at the time of initial insertion setting of a pin connection (external thread). As a result, lubrication of the solid lubrication coating film generally tends to cause galling.

In particular, in a large-diameter and heavy-walled material, a make-up torque value increases, and a weight of the pin connection also increases. Consequently, in an actual field, in a situation in which the threads are made up while being erected and suspended, damage such as complete peeling of the solid lubrication coating film may occur.

Even if the same chemical agent is used in the solid lubrication coating film, there may occur a situation in which performance that could be realized by a pin connection having a small diameter cannot be realized at all by a pin connection having a large diameter with respect to the lubrication characteristics represented by the number of times of make-up/break-out. Hence, when repairing or the like of the solid lubrication coating film is performed, a new lubrication coating film is formed to cover the entire solid lubrication coating film that is already present. Alternatively, a partially weak part is covered to be protected with a new lubrication coating film (lubrication supporting film). As described above, there is a case where it is necessary to improve lubrication, particularly in a large-diameter and heavy-walled oil country tubular goods.

In this case, in a case where the base film is not considered, the entire structure of the solid lubrication coating film is a two-layer film structure. The case where the base film is not considered is, for example, a case where a phosphoric acid chemical conversion film or an electroplating film is not considered.

The entire two-layer film structure and partial film reinforcement are described in, for example, PTLs 1 and 2. The PTLs describe a part having a two-layer structure, particularly a portion intended for a shoulder portion, for the purpose of partial reinforcement. That is, as the part having the two-layer structure, an example where a surface layer side has a high hardness (PTL 1) and an example where a surface layer side has a high friction coefficient (PTL 2) are disclosed.

In addition, there are many examples of the entire two-layer structure. For example, PTLs 3 and 4 can exemplify the structure. The PTLs provide entire two-layer structures.

In PTL 3, a solid lubrication coating film (only a binder resin) not containing a solid lubricant is formed on a surface layer, and a normal solid lubrication coating film containing the solid lubricant is formed on a lower layer. However, in the two-layer structure in PTL 3, the outermost layer (solid lubrication coating film without solid lubricant) covers a lack of rust prevention capability of the solid lubrication coating film which becomes porous due to the solid lubricant being contained. In this manner, an object of PTL 3 is to enhance corrosion resistance capability.

In PTL 4, a viscous liquid-like lubrication layer is formed at a lower layer, and thereby the liquid-like lubrication layer moves in conjunction with make-up/break-out as in lubrication using a compound of the related art. In this manner, an object of PTL 4 is to constantly maintain lubrication in a self-repairing manner. In addition, in PTL 4, the solid lubrication coating film of the upper layer serves as a cover of the viscous liquid-like lubrication layer of the lower layer. Moreover, when a very strong surface pressure is applied, the solid lubrication coating film of the upper layer is easily broken and forms a lubrication layer integrally with the lower layer. In addition, in PTL 4, the hardness of a layer is designed such that the upper layer is hard and the lower layer is soft, and the layers fulfil most of the lubricating function.

Here, as described above, further application of a lubricant to a thread portion for oil country tubular goods and addition of a lubrication film structure have an effect of a touch-up at a well site and an effect of further improving lubrication by one level in a case where oil country tubular goods have a large diameter. At this time, it is preferable to standardize a chemical agent to be used. That is, both operations can be used in the same work area at a well site. Therefore, the lubrication realized with one chemical agent is effective for improving the usability of the user. Additionally, the lubrication with one chemical agent is considered to be effective also in order to avoid an error in application between two chemical agents side by side. In this case, in a chemical agent design, corrosion resistance can be excluded from necessary properties. The desired necessary properties are to make it possible to perform a touch-up at a well site, to ensure lubricity, and to improve lubrication when the oil country tubular goods have a large diameter.

However, this technical idea has not been found in the previous prior literature.

In addition, as technologies in the related art, there are technologies described in PTLs 5 to 7.

PTL 5 exemplifies that an acrylic silicone resin is formed on a UV cured film, and the acrylic silicone resin contains a metal soap as a solid lubricant. In addition, water-based and oil-based lacquer-based sprayable acrylic silicone resins are exemplified, and it is described that oil-based acrylic silicone resins are good. That is, a water-based binder resin is not actively used.

PTL 6 describes that a viscous liquid or semi-solid lubrication coating film and a dry solid coating film formed thereon are provided, and both coating films contain a solid lubricant.

PTL 7 exemplifies an acrylic resin as a thermoplastic resin. It is described that a nonvolatile component includes a metal soap or a wax as an example. In addition, it is also described that the wax is effective not only for preventing a heat scratch but also for reducing the fluidity of a lubrication coating film forming composition and improving the coating film strength. In addition, it is described that any one of animal wax, plant wax, mineral wax, and synthetic wax can be used.

In addition, as technologies in consideration of a make-up at an actual well in the related art, there are, for example, PTLs 8 and 9, NPL 2, and the like.

PTL 8 states that an initial set was tested at an angle of 6 degrees using a vertical power tong, assuming misalignment, and using a short pin having a size of 7".

Here, a length of a short pin in this specification refers to a general length of a pin used for the connection testing of API RP 5C5 2017. Specifically, the length is about 1 m.

PTL 9 describes an example where misalignment by five degrees was tested and evaluated using a vertical power tong and a short pin having a size of 9 to 5/8".

NPL 2 is a paper in which a vertical power tong is used to evaluate lubrication by placing a weight of 5 kN (about 500 kg) at a front end on an opposite side of a make-up side of a short pin, that is, at an upper end portion of the pin when the pin is erected and tightened. PTL10 discloses a threaded joint for steel pipes having a lubricating coating comprising a solid lubricant and an acrylate/methacrylate polymer binder resin coating including a dispersed metal soap.

### Citation List

### Patent Literature

PTL 1: JP 2015-506445 A
PTL 2: JP 5722752 B
PTL 3: JP 2008-527249 A
PTL 4: JP 2004-53013 A
PTL 5: JP 2016-028211 A
PTL 6: JP 2008-537062 A
PTL 7: JP 2009 057754 A
PTL 8: JP 2002-327874 A
PTL 9: WO 2017/110685
PTL 10: EP 1548346 B1

### Non Patent Literature

NPL 1: Steven S. Shademan; John W. Martin; Al P. Davis, NACE CORROSION 2012, Paper No 2012-1095
NPL 2: Tsuru et al., Journal of the Japanese Association for Petroleum Technology, Vol. 61, No. 6 (1996) pp. 527 to 536.

### Summary of Invention.

The invention is defined in the appended claims.

### Technical Problem

Designing of a coating agent obtained by using a water-soluble or water-dispersible polymer as a binder resin as a matrix component and dispersing and using a metal soap and black lead as a solid lubricant in the water-soluble or water-dispersible polymer is rarely found in the related art. Hereinafter, the black lead is also referred to as graphite.

The metal soap referred to in this disclosure is a salt of a higher fatty acid and a metal ion other than alkali metals. An alkaline soap is a so-called soap used daily and is defined as a salt of a higher fatty acid and an Na ion or a K ion among alkali metal ions. Salts of alkali metals other than Na and K are used as metal soaps.

Here, in this disclosure, a case of a chemical agent on the premise of an aqueous solvent will be further observed. The aqueous solvent refers to a solvent containing water as a main component.

In this case, since the metal soap itself has water repellency and is insoluble in water, the metal soap is reported not to be easily mixed with an aqueous solvent. The metal soap is also reported to be insoluble even in alcohol groups. A substance in which the metal soap is considered to be slightly soluble is a chemical agent group of volatile organic compounds (VOC) which is also called a thinner. However, the chemical agent group includes chemical agents which are often harmful to health and is known as chemical agents classified into toluene, xylene, benzene, a VOC group classified as mineral spirits, an ether group, and oil that is widely referred to as mineral oil.

As described above, in the related art, the metal soap itself is considered not to be easily mixed directly with an aqueous polymer. Therefore, in the related art, the metal soap is formulated by dissolving the metal soap itself in the VOC mentioned above and, then, opacifying the metal soap in a solvent composed of water as a main component. Accordingly, when water vaporizes and evaporates, the VOC also volatilizes at the same time. As a result, the metal soap can be dispersed in the water-soluble or water-dispersible polymer. This is exemplified in, for example, PTLs 5 to 7. However, in consideration of safety and environment for workers, in consideration of environment, and in a place where fire is strictly prohibited, the chemical agent group called the thinner is highly likely to be unusable because the chemical agent group volatilizes. The place where fire is strictly prohibited is, for example, an oil/gas drilling environment or the like.

An aqueous (water-soluble or water-dispersible) polymer refers to a polymer using a solvent containing water as a main component, and when a chemical agent is applied to form a film, a water component needs to be dried and removed. Since the solvent of the aqueous polymer is water, there is a method of applying the aqueous polymer after heating an applied target when drying is performed or, conversely, heating a target position to be applied. In either case, when there is no process of promoting vaporization and evaporation of water, drying results in a long waiting time and inefficiency. However, in a case of a touch-up at a well site, since the well site is a fire-prohibited area, desirably, drying can be performed by leaving a drying object simply to nature without using a heater or the like. Alternatively, since a drying environment by a compressed air-based blower, which is often supplied to the well site, can also be expected, drying with the blower may also be considered. The drying environment is, for example, a state of an ambient temperature + (about 5°C to 10°C).

On the other hand, in order to dry the aqueous polymer early, a technology is also known in which a volatile organic solvent is added, and a film is formed by good use of volatile heat of the volatile organic solvent. For example, PTL 5 describes that an oil-based surface layer film may be selected because the acrylic silicon surface layer film forms a dry coating film at a relatively low temperature in a short time. In particular, PTL 5 describes that it is preferable to use an ambient-temperature curing-type film. That is, PTL 5 is an example of attempting early drying by utilizing volatilization of an oily solvent without selecting an aqueous solvent.

In addition, PTL 6 exemplifies only water-based film, water + volatile organic solvent-based film, and a film using an ultraviolet curable resin. Of the films, the latter two films can be early dried. However, with the first only water-based polymer, water needs to be evaporated in a certain method. However, PTL 6 does not clearly describe the method.

In addition, PTL 7 discloses a measure for accelerating a drying time by using a volatile solvent and a chemical agent having a flash point of 30°C or higher. However, in a case where the flash point is about 30°C, if a risk factor such as a spark is present in a hot area such as a hot desert area, there is a high concern that ignition will occur at a well site. Additionally, even when processing is performed in a workshop slightly away from a well, a concern of ignition cannot be denied. A material having a low flash point, that is, a flammable material, has a problem of a high risk of fire and other accidents unless the material is used in a sufficiently controlled environment. That is, how safely and early drying is performed is still an issue.

From the description provided above, the inventors have determined that use of a chemical agent group of volatile organic compounds (VOC) which is also called a thinner (toluene, xylene, benzene, and other organic solvents) to accelerate drying of an aqueous solvent should be avoided because the well site is at a fire-prohibited environment. This is because there is a VOC emission control rule no matter how high the volatility is and effective for early drying. In addition, since the VOC are insoluble in water, the VOC are inconvenient to use.

In addition, even though an exhaust device is prepared, there is a possibility that large-scale investment in equipment will be made. Therefore, in forming a solid lubrication coating film, a problem arises in that it is difficult to use a volatile organic solvent (VOC) harmful to the human body in a coating agent. Hence, the inventors have determined that a chemical agent group of volatile organic compounds (VOC) which is also called a thinner, is harmful to health, and has too high volatility, cannot be used for early drying.

In addition, recently, a fluorine-based solvent (chlorofluorocarbon alternative material or the like) that originally has a quick-drying property and a fluorine-based resin that can be dissolved in the fluorine-based solvent to form a binder resin component of a coating material tends not to be used. In the related art, the fluorine-based compound has a quick drying property to dry immediately after being applied and is good in lubrication and corrosion prevention, thus having been mainly used for the surface treatment. However, due to recent rule strengthening, fluorine-based compounds have become unusable. In the Toxic Substances Control Act (TSCA) of the United States and REACH including restrictions of chemicals of European Union, perfluorooctanesulfonic acid (PFOS) and perfluorooctanoic acid (PFOA) are only regulation targets (chemical species containing fluorine compounds having eight Cs) of the F-based alkyl compounds (F-(CF₂)ₙ-). The compounds having the number of Cs lower than eight were usable without causing any particular problem. However, in the revision of the TSCA of the United States in April 2021, carrying and using or production of a chemical agent of an organofluorine compound (PFAS: a perfluoroalkyl compound and a polyfluoroalkyl compound) are regulated as NG retroactively. Hence, a binder resin containing a fluorine compound (PFAS) cannot be used. Hence, Teflon (registered trademark) (PTFE: polytetrafluoroethylene), perfluoropolyether (PFPE), and hydrofluoroethylene (HFE) as a fluorine-based solvent as a solvent are now only excluded from the application of the TSCA for chemical agents and products that can be used with fluorine. Accordingly, an international trend of designing a solid lubrication coating film without using fluorine is also no longer negligible.

Therefore, for the environment, there is a demand for a chemical agent for which water is used as a solvent and a binder resin has a composition to be soluble in water. Regarding such a chemical agent, there is a demand for a chemical agent for forming a topcoat for a touch-up at a well site or for improving lubrication, from an appropriate solid lubricant or other additives.

Moreover, when a solid lubrication coating film is formed using the chemical agent, a problem also arises in that water as the solvent is less likely to volatilize and evaporation of the water needs a time.

It is necessary to assume that a chemical agent for a touch-up at a well site or for forming a topcoat for improving the lubrication is used at the well site. At the same time, the well site is in a fire-prohibited environment, and there is also a situation where the scaffold is not firm. Therefore, it is difficult to consider installation of a device that enhances drying. In a situation where a water-soluble or water-dispersible polymer-based chemical agent is applied at a well site, there is a demand for quick drying. This is because when a trouble occurs in a well, it is required that a connecting portion in trouble is immediately detached and repairing is performed. Furthermore, it is requested to touch up and make up the connection again after that. In addition, this is to perform as much running as possible without delay since costs of a power tong itself of a make-up device is enormous. The above-described touch-up refers to a partial repair of a galled portion at a well site.

Here, in PTLs 1 to 3, in order to form a film early, an organic solvent having a low or lowish flash point and high volatility is used. That is, PTLs 1 to 3 provide designing of a coating agent on the premise that the coating agent is produced at a place away from an oil/gas well and transported to the well. A chemical agent based on a chemical agent having a low flash point is extremely dangerous to use near an oil/gas well where fire is strictly prohibited.

Moreover, a characteristic evaluation of lubrication characteristics obtained by a touch-up at the well site is not at a level to be evaluated by a simple laboratory experiment or simulation in the related art. Therefore, the characteristic evaluation of the lubrication characteristics obtained by a touch-up at a well site is preferably set to be able to cope with the most severe conditions that can be assumed.

Since a severe condition of applying a self-weight of an actual length pin to a threaded joint is set at an actual well, such a situation cannot necessarily be simulated in an evaluation using a short pin in the laboratory. Hence, unless upper and lower limits of parameters such as upper and lower limits of components of a solid lubrication coating film are set by taking a measure to imitate an actual well or conditions close to the well, the setting has no meaning. That is, it is necessary to accurately set the galling condition and then perform an evaluation under a condition close to the actual well.

That is, in a case of an evaluation of lubrication of a connection for oil country tubular goods using the solid lubrication coating film, the lubrication determined as NG in a make-up test in a laboratory using a short pin having a length of about 1 m in the related art can be determined as NG even at an actual well. However, the inventors have found that the lubrication that is determined as OK in an evaluation with a short pin having a length of about 1 m in a laboratory is not guaranteed to be OK at an actual well. However, in the related art, there have been very few cases where the lubricity of the solid lubrication coating film has been determined to be OK or NG by focusing on this fact described above and assuming conditions in accordance with the actual well. That is, in the past prior literature, a definition range of the upper and lower limits of the parameters of the solid lubrication coating film is set, and there are very few reports in which such a point is taken into consideration in the description.

However, a viscous liquid-like lubricating compound generally used for lubrication of the connection for oil country tubular goods in the related art does not appear to have a significant difference between in a make-up/break-out evaluation using a short pin in a laboratory and in a situation at the actual well. In the viscous liquid-like lubricating compound, the evaluation at the actual well tends to be performed in accordance with the evaluation in the laboratory. This is assumed to be because the compound is the viscous liquid-like lubricating compound and thus is effective to move in conjunction with the make-up/break-out. On the other hand, in the case of using the solid lubrication coating film, fragments derived from the solid lubrication coating film which are unavoidably scraped by the make-up/break-out do not necessarily move in conjunction with the make-up/break-out. Therefore, in the make-up at the actual well where many fragments are unavoidably produced, the fragments are likely to cause clogging. In addition, when peeling occurs to a remarkable extent, galling occurs at a part where the solid lubrication coating film becomes thin or a part where the solid lubrication coating film disappears. In the evaluation of the solid lubrication coating film, it is necessary to perform the evaluation based on such a point described above.

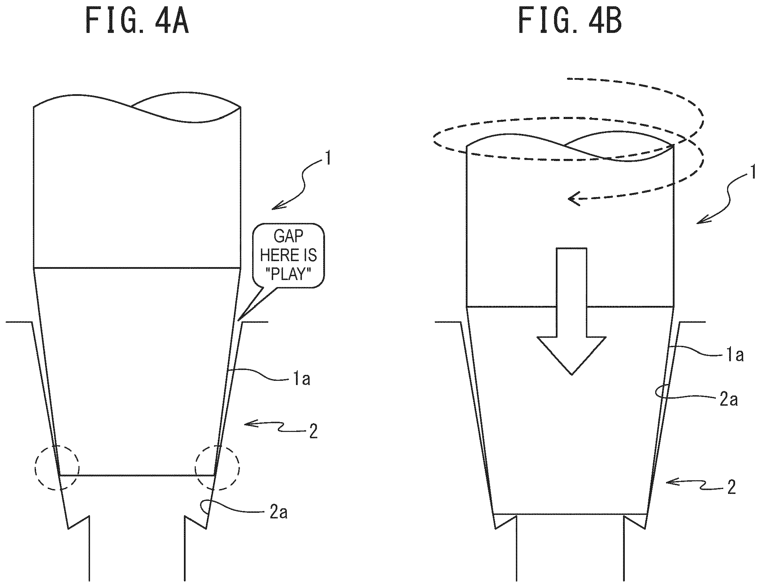

At the actual well, a situation in which a pin connection having an actual length is made up into a box connection is not implemented in an ideal state as described in a textbook. The ideal state is a state where an actual length pin is set to be fitted upright and made up straight into the box connection (FIG. 4B). However, this is a situation that cannot occur with an actual pin having an actual length.

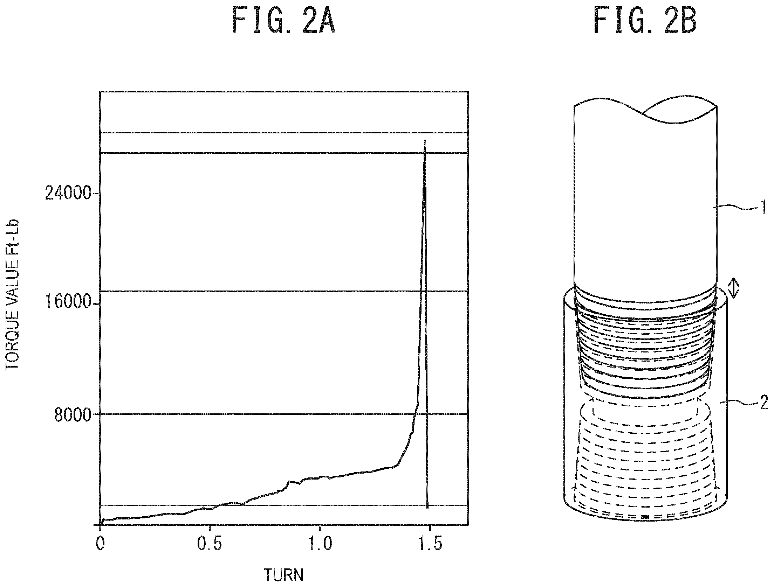

A structure of a connection for oil country tubular goods is a tapered thread structure, and a pin connection enters a box connection in an inserting manner. A short pin that is lightweight and short is easy to handle, and the short pin is often set straight (FIG. 4A). At that time, there is "play (backlash, clearance)" in an imperfect thread part of the tapered thread structure; however, in a case of a short pin, it is possible to tighten up to near a shoulder by hand-tight (FIGS. 2A, 2B, and 4B). The imperfect thread part is, for example, a part where a crest is not perfectly formed and a thread height and a bottom are small.

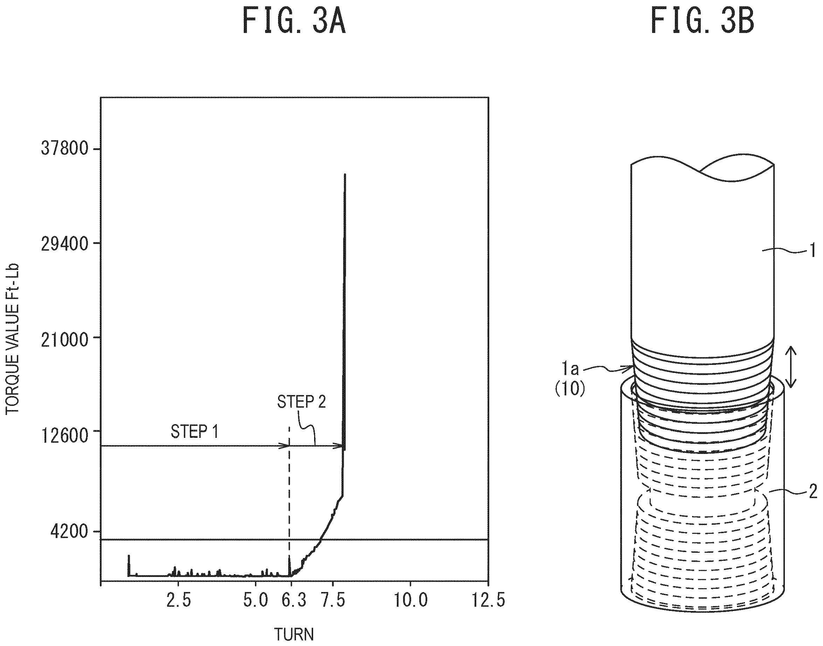

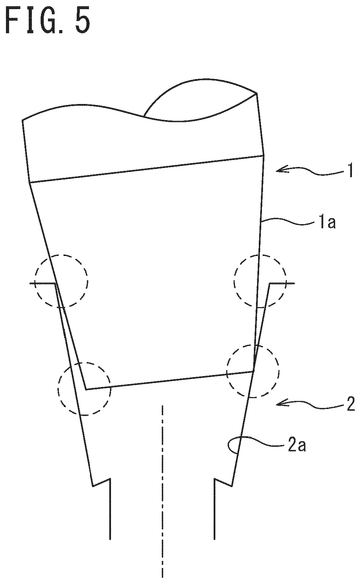

On the other hand, a heavy and long actual length pin is set by being hung with a crane, but is ideally suspended directly below and cannot be set straight. There are many cases where setting is performed slightly obliquely at a time of initial setting by an amount of play of the thread (FIG. 5). Accordingly, the hand tight cannot be performed any more, and of the pin connection crests, about half of the total number of pin crests are exposed very often from the box connection (FIGS. 3A and 3B). The oil country tubular goods have, for example, a tapered thread structure as illustrated in FIG. 5. Therefore, meshing between the threads converges to an original ideal position until the threads are abutted on the shoulder, but at that time, the pin connection has a touch around by the amount of play. Therefore, until the threads mesh with each other, thread surfaces of the threads may be damaged to a significant extent. Accordingly, a self-weight (large load) of the pin connection and an unbalanced load for causing the pin to move eccentrically, that is, an unbalanced load when the pin swings, are superimposed. As a result, in the most severe case, there is a high concern that the solid lubrication coating film will be abnormally scraped or will peel off thoroughly. When a fragment thereof clogs a thread gap, clogging directly results in galling. Even in a case where scraped fragments or powder of the solid lubrication coating film form a secondary product, the thread gap is easily clogged, so that the occurrence of galling is increased. On the other hand, in the case of lubrication of the connection for oil country tubular goods with a lubricating compound, a viscous liquid-like lubricant is used. Therefore, since the coating moves in conjunction with the make-up/break-out, the evaluation method of lubrication in the laboratory by using the short pin and a result at the actual well are substantially the same and represents a good contrast. That is, this is a problem peculiar to the solid lubrication coating film.

This is specifically illustrated in FIGS. 3A and 3B. The make-up/break-out test conditions in FIGS. 3A and 3B represent an example where turning is performed at 15 to 25 rpm until the torque rises, and the turning is performed at 2.5 to 1.5 rpm when the torque has risen. This is a result of testing under severe conditions, for example, at a high turning speed beyond the conditions specified in the instruction manual of the connection (make-up description in the technical package). The connection designed to have lubrication by a solid lubrication coating film was a JFELION (trademark) connection made of a material of 9-5/8", 53.5#, and Q125 as a well make-up material and strength grade. However, FIG. 2A is a torque-turn chart when a make-up is performed using a short pin having a length of about 1 m with a vertical power tong. Since the pin is short, the pin can be easily handled and can be set straight. Moreover, a pin crest can be set by the hand tight without exposure thereof (FIG. 2B). In the torque-turn chart in this case, as illustrated in FIG. 2A, the torque starts to rise from the start of the make-up with the tong, and the make-up is performed beyond the bending point of a shoulder torque. The chart is very commonly found even by a test apparatus in a laboratory or a make-up in a factory, that is, a make-up by a horizontal power tong in a state where axes of a pin connection and a box connection are aligned. The former condition refers to a situation where the pin connection is easy to handle due to the short length thereof, so that the pin connection can be set straight and set manually until the pin crest is hidden by the box connection. The latter condition refers to a situation in which the box connection can be set straight without causing axial misalignment because the short side is set in a situation in which the box connection is attached in a state where a long pipe of the pin connection is placed horizontally. The torque of the pin rises immediately from the beginning of a turn, since the pin connection and the box connection sufficiently mesh with each other at the initial setting stage. The horizontal axis in FIG. 2A represents about 1.5 turns. In addition, FIGS. 2A and 2B illustrate an example where a make-up start position in the power tong can be driven to be tightened by hand tight.

On the other hand, FIG. 3A is a torque-turn chart in a case of one actual length pin of Range-3, that is, 40 feet odd (12 m odd). FIGS. 3A and 3B illustrate a result of a test performed at a simulated well. The unit (size) of the horizontal axis is different from that in FIG. 2A. Further, the simulated well is not a well from which oil and gas are actually produced but an experimental well that is simulatively bored so that an actual length pin can be made up and broken out. There is a rig in which about two to three connected pins can be hung and set in an upper chamber of the well. The simulated well means a device group and an experimental facility that is configured as described above and can perform a make-up/break-out test. However, in the case of the actual length pin, an initial set position can be set only up to a position where about a half of a crest is exposed as illustrated in FIG. 3B. When this state is described with emphasis, the pin is slightly oblique as illustrated in FIG. 5. However, this state is derived from a slight inclination at a level at which an inclined state cannot be visually recognized. This state causes the initial set position of the crest to be stopped halfway. FIG. 3A is a torque-turn chart thereof. This case tends to be a state where the pin is set similarly to the setting at the actual well. However, unlike the case of the short pin in FIG. 2A, FIG. 3A illustrates an example having a characteristic in which torque is not generated and idling occurs. In the example of FIG. 3A, steady torque does not rise until about 6.3 turns, and occasional rises of spike-shaped torque are observed during the turning. The present inventors have found that the spike-shaped torque is directly linked to damage of the solid lubrication coating film and suggest that it is important to evaluate the solid lubrication coating film based on the finding. In the chart of FIG. 3A, the situation without generation of the torque and the occurrence of the idling corresponds to a make-up from the situation of FIG. 5 to a state immediately before the shoulder is abutted. In most cases, the threads do not sufficiently mesh with each other, and some threads are inadvertently abutted strongly against each other and come into a state of not advancing any more in most cases. Therefore, when the actual length pin is made up by the power tong, the box connection and the pin connection are abutted against each other in a state where the load is unbalanced until the threads mesh with each other. That is, this means that the box connection and the pin connection are damaged by each other. Based on this, unless the solid lubrication coating film is evaluated, as already described above, the film determined as OK in the evaluation using the short pin does not necessarily mean OK in the evaluation at the actual well. Therefore, in previous prior literature, upper and lower limit definitions of components, conditions, and other parameters are often defined on the basis of the laboratory evaluation using the short pins as described above and are not considered to necessarily intend a favorable range.

Here, for example, PTLs 8 and 9, NPL 2, and the like are cited as literature in consideration of a make-up at an actual well. However, PTLs 8 and 9 are evaluated using a short pin.

On the other hand, NPL 2 is a paper in which lubrication is evaluated by using a vertical power tong and putting a weight of 5 kN on an upper end of a short pin. NPL 2 is considered to intentionally apply a weight of one actual length pin, that is, a pin having a length of about 40 feet (about 12 m), as determined based on the torque-turn chart of a 7"/29# pin. However, when determined based on the torque-turn chart, make-up behavior is close to that of FIG. 2A instead of FIG. 3A. That is, the test is determined as a made-up evaluation test from a state where the initial set position is set at which the pin connection is made up by hand tight to a level at which the pin connection is not exposed, and the pin connection and the box connection sufficiently mesh with each other. Therefore, in NPL 2, a situation generated at an actual well cannot be simulated.

The invention has been made in view of the above-described points, and an object of the invention is to provide a chemical agent that does not use MoS₂, is environmentally friendly, and can withstand use at an actual well, as a coating agent for repairing a thread portion for oil country tubular goods and improving lubrication.

### Solution to Problem

This disclosure is directed to a technology for lubricating a connection for oil country tubular goods using a solid lubrication coating film.

This disclosure relates to, for example, a chemical agent used for repair performed at a well site in a case where light galling occurs only at a thread part, of the thread part and a seal part of components of a connection for oil country tubular goods due to lubrication of a threaded joint for oil country tubular goods. This disclosure relates to, for example, a chemical agent intended to be applied to a region including a cured part for the purpose of a touch-up after a galled part is cured by being scraped with a grinder, sandpaper, a file, or the like.

Moreover, an object of this disclosure is to form a topcoat with the chemical agent of this disclosure to improve lubrication in a case where lubricity of a solid lubrication coating film already formed needs to be further improved by one level. That is, for the purpose of avoiding galling including a preventive meaning, applying the chemical agent on an existing solid lubrication coating film is also included.

In realizing the purposes, the invention of this disclosure has been made by extracting problems from the above-described technology group in the related art and reflecting the following conditions.

Component design for the chemical agent is performed without using MoS₂ which may be correlated with cracking.

From the viewpoint of ecology, the chemical agent is designed based on water-soluble materials since the materials can be used in consideration of safety of workers and even a fire-prohibited place. At the same time, in order to form a film, water of a solvent can be dried early.

Any harmful heavy metals such as Pb are not used in a solid lubricant.

In addition, as a component of a binder resin, a chemical agent containing PFAS (fluorine-containing acrylic group including PFOS and PFOA) or an alternative fluorine-based solvent having a high global warming potential is not used at all.

This disclosure provides a design in which black lead and a metal soap as solid lubricants are put in an aqueous polymer. The black lead and the metal soap are insoluble in water but are slightly soluble in alcohol. In this disclosure, the black lead and the metal soap are dissolved by taking a measure to dissolve the black lead and the metal soap in alcohol in advance and then mix the black lead and the metal soap in an undiluted solution of an aqueous polymer. Otherwise, the black lead and the metal soap cannot be homogeneously dispersed in a solvent composed of water as a main component. Accordingly, a content suitable for lubrication and early drying was clarified together with homogeneous dispersion.

In addition, the inventors have found that when the black lead is used as the solid lubricant, the black lead as the solid lubricant may be combined with a binder resin at a time of a make-up/break-out and may elongate to form a tape-shaped secondary product. Accordingly, the inventors have found that this tape-shaped secondary product causes a galling risk. Hence, this indicates that when lubrication of black lead is utilized, an appropriate addition amount of the black lead has to be set so that the tape-shaped secondary product does not reach a point of galling even when a solid lubricant of a metal soap is combined in the binder resin of this disclosure to support lubrication.

Here, this disclosure is designed to use a water-soluble or water-dispersible polymer and disperse and distribute a solid lubricant in a binder resin that becomes a soft polymer-based resin film when the film is dried. Further, as one characteristic, a metal soap and black lead are mixed together as a solid lubricant.

In this disclosure, black lead has a part that is held together with a polymer and a part that cannot be held by the polymer and is exposed as black lead as a single substance to fulfil lubrication. Either part of black lead acts to maintain lubricity in conjunction with lubrication of the metal soap.

Black lead is widely used as a lubricant. However, in a structure having a groove such as a connection for oil country tubular goods and in a situation of a dry film such as a solid lubrication coating film, a "release route (direction of extension and deformation)" is limited when black lead as a lubrication component is pressed and deformed. Therefore, when a threaded joint is made up with a strong force, a black tape-shaped thin piece is likely to be formed along a thread groove. The piece is likely to clog a gap between threads to cause galling. According to the observation by the present inventors, for example, the following knowledge was obtained when a formulating fraction of black lead was large for a film made of black lead (solid lubricant) and an epoxy resin (binder resin). That is, at the time of the make-up/break-out, there have been found some examples where a group of tape-shaped fragments including black lead and a binder resin clogs a gap between threads to cause galling.

Further, this phenomenon has not been well reported in other lubrication fields. In a situation in which black lead is used as a lubricant in a state where solubles or oil is dispersed, a problem hardly occurs. In addition, in lubrication in other fields, there is a high tendency to use black lead not in a tape-shaped thin piece but in a powdery form or fine pieces. Therefore, since the black lead easily moves in conjunction with the make-up/break-out, the black lead is unlikely to cause a problem of galling. When the black lead is not held by an organic resin such as a binder resin, a part of the black lead is transferred to surfaces of two objects in a sliding state. In this case, a varnish state occurs and rather improves lubrication. Varnish refers to gloss having metallic luster. In addition, black lead in a state of being dissolved simultaneously when MoS₂ is dissolved in mineral oil-based and synthetic oil-based materials, like Molykote, also hardly causes a problem.

On the other hand, in this disclosure, a water-soluble or water-dispersible polymer is used as a film after water is removed. Therefore, a main focus is on a dry environment. As a result, there is a possibility that the black lead and a polymer material of the binder resin constituting the solid lubrication coating film may form a black tape shape in a constrained state as in a thread groove and may cause galling. As described above, it is found that in formation of a solid lubrication coating film, measures for an amount, a size, and the like need to be taken to make full use of black lead of a solid lubricant.

Therefore, in this disclosure, black lead is used as the solid lubricant, but component design is performed to prevent black lead as the solid lubricant from being combined with the binder resin at the time of the make-up/break-out and from elongating and forming a tape-shaped secondary product. In this manner, it is possible to reduce the galling risk.

In addition, component design different from past ideas is performed in a partial repair by a touch-up or full coating. That is, measures need to be taken for not only improving lubricity simply but also achieving component design for enabling a scraped repair part to be filled.

The solid lubrication coating film and the chemical agent of this disclosure have upper and lower limits of parameters set by evaluating whether or not the solid lubrication coating film and the chemical agent can be used, by an evaluation method suitable for an environment used at an actual well. In this manner, a chemical agent and a solid lubrication coating film which withstand use at an actual well and can support lubrication or can repair a lightly galled part are provided.

Next, a measure to each condition will be described.
(1) Regardless of a mechanism, oil/gas drilling personnel firmly believe that there is a possibility that MoS₂ is likely to result in becoming H₂S or cause hydrogen embrittlement cracking. In order to avoid recognized risk factors as reported in NPL 1, a measure as a component system without using MoS₂ needs to be provided. In this disclosure, the following spray, paste, liquid-like lubrication spray, and lubrication paint are not used. That is, MoS₂ is contained as a main component in the widely spread Molykote and similar products thereof. Accordingly, a solid lubricant such as PTFE, black lead, BN, or silicon is added depending on the situation. Further, a spray or the like developed in a mineral oil-based to synthetic oil-based (white mineral oil, PAO, PAG, etc.) solvent is not used in this disclosure.
   At the same time, in order to realize a well site touch-up (partial repair of the solid lubrication coating film) and the one-step improvement of the lubrication performance of a connection for oil country tubular goods, components are designed to achieve the same or higher performance by using an alternative material.
(2) This disclosure is based on premise that a chemical agent is designed based on a material soluble in water for ecology and use at a well site. On the premise, for an applied chemical agent, water vaporizes and evaporates early to form a film.

It is also necessary to perform applying even at a fire-prohibited place such as a well site. However, a volatile organic compound (VOC) such as toluene, xylene, or benzene as a volatile organic solvent classified as a specific chemical substance cannot be used for a water solvent for early drying. Therefore, there is need to provide a measure for realizing the early drying. The specific chemical substance corresponds to, for example, a working environment measurement target substance in accordance with the rules of OSHA in the United States, U.S. Occupational Safety and Health Administration.

In addition, for the early drying (quick drying), it is conceivable to use a fluorine-based solvent or a fluorine-based binder resin that is highly volatile but nonflammable, but the substances are substantially impossible to use. In the U.S. Toxic Substances Control Act (TSCA), since the revision of the rules at the end of April 2021, a set of chemical agents containing PFAS (fluorine-containing alkyl group including PFOS and PFOA) cannot be used retroactively even with past permissions. In response to a recent increase in environmental awareness, there is a possibility that every country will follow this trend. In contrast to the chemical agent rules that become stricter year by year, it can be reported that HFE as a chlorofluorocarbon alternative is still available at present, but it is better to design a solvent in which HFE is not used.

Hence, in this disclosure, it is not possible to perform quick drying like drying from a moment that applying is performed, by a method using a substance other than a fluorine-based or thinner volatile organic compound (VOC). However, a target that can be achieved with a water-based material is that the water-based material has the early drying performance to the extent that the complete drying can be performed within 30 minutes, preferably within 15 minutes, and more preferably within 5 minutes in such an environment in which a solvent is left at room temperature.

In the vicinity of an oil/gas excavation site, in a fire-prohibited environment, it is strictly prohibited to use a hot air heater or the like that can promote drying and to use a device that emits electric sparks. It is necessary to assume an environment in which the solvent is only left in the atmosphere without using neither a heat treatment furnace nor electricity. Therefore, it is not possible to assume to perform a process of blowing off a solvent by heat treatment at about 50 to 300°C. PTLs 5 to 7 describes that an early drying property is achieved using a highly volatile organic solvent. However, the solvent cannot be used in the environment assumed by this disclosure. In addition, this means that an ultraviolet curable resin as in PTL 5 also needs a device capable of irradiating ultraviolet rays at a well site. Therefore, a device capable of performing the drying and electricity need to be distributed or the like, and PTL 5 is considered having a low possibility of realization as a method for performing the early drying. Since a factory that produces a product with a solid lubrication coating film or a workshop is not a fire-prohibited environment like the well site, it is easy to prepare blowing equipment such as a large fan, a hot air drying device, and drying enhancement equipment using a heat treatment, infrared light, ultraviolet light, or the like. However, as the strictest use condition, it is necessary to assume a situation where only compressed air is present to accelerate drying, and it is difficult to use an electric heater or the like due to fire prohibition.

In a case of drying with such a device intended to promote drying, this disclosure preferably completes drying within 5 minutes, desirably within 3 minutes, and more desirably within 1 minute. This disclosure is to cope with a situation of use at a well site and a situation of use in a manufacturing line without loosening a line speed. Therefore, an additional object of this disclosure is to perform early drying in order to perform drying within the takt time of the production line.

(3) At the same time, in order to cope with the recent increase in environmental awareness, a harmful heavy metal such as Pb is not used in the solid lubricant. In addition, as a component of the binder resin, a set of chemical agents containing PFAS (fluorine-containing acrylic groups including PFOS and PFOA) is not used. Under this condition, this disclosure achieves properties comparable to the lubrication spray, paste, or paint containing MoS₂. Designing is performed to avoid addition of the former. The latter is as described in (2) above provided.

(4) This disclosure is designed to contain black lead and a metal soap in an aqueous polymer, particularly an aqueous acrylic coating film or an aqueous methacrylic coating film.

In particular, the metal soap is reported to be insoluble in water and in alcohol. Therefore, there is need to provide a measure to mix the metal soap with an aqueous polymer undiluted solution to a nearly homogeneous state.

Similarly, when a lubricant using only black lead itself is used, a lubricant obtained by appropriately adding an additive or the like to a solvent such as water solubles or oil and mixing and dispersing the black lead is used. Consequently, in order to design a chemical agent by homogeneous dispersing the black lead in a solvent simply composed of water as a main component, it is necessary to take a measure for the same method as to dissolve the black lead in an aqueous solvent similarly to the metal soap.

The metal soap and the black lead are oils, ethers, and a chemical agent group of volatile organic compounds (VOC) which is also called a thinner. However, this disclosure takes measures for how to dissolve the metal soap and the black lead in a solvent composed of water without using a chemical agent group called thinner.

PTLs 5 to 7 are examples in which volatility of an aqueous solvent is promoted by mixing with a thinner VOC and utilizing the volatility. However, since this disclosure aims to be used in a fire-prohibited environment at a well site under the most severe use conditions, it is not assumed that a thinner organic solvent is used in a method based on the technical ideas.

(5) At the same time, it is necessary to take measures for a component design and a formulating ratio so that the black lead does not become combined with the binder resin at the time of the make-up/break-out and does not elongate to form a tape-shaped secondary product.

In addition, at the time of a touch-up, the chemical agent of this disclosure is applied after curing is performed with a grinder or paper. At this time, the solid lubrication coating film may be lost, a part of the solid lubrication coating film may be lost, or the metal of the thread portion may be scraped and lost. Regarding the black lead, measures are taken to use the black lead to fill the scraped repair part, to achieve lubrication, and not to elongate to form a tape-shaped secondary product. That is, a long tape-shaped object exceeding about 30 mm is not formed. In addition, the black lead is scattered having a short length even with a tape-shaped shape, having a fragmentary and possibly powdery form. That is, the solid lubricant made of the black lead is uniformly transferred to a box connection and a pin connection. That is, the tape-shaped secondary product is not formed, and a powdery or small fragmentary product derived from the solid lubrication coating film or a secondary product thereof moves in conjunction with the make-up/break-out so as not to clog a thread gap. This state can be stably achieved even when the black lead is selected as the solid lubricant.

In addition, this disclosure is different in technical idea from a two-layer structure in an unused stage as disclosed in PTLs 1 to 4. This disclosure does not necessarily coincide with the two-layer structure in which the outermost layer is partially reinforced with a hard film, or a high-strength film is provided as the uppermost layer and disposed to protect an underlying viscoelastic film. The methods provided in the PTLs are not suitable for solving the problems suggested by this disclosure. Also in this disclosure, some parts may have a two-layer structure, but the application field is different.

In addition, a technology in the related art in which only a lubricant is provided on the outermost layer without a binder resin as in a commercially available lubrication spray is also different in the technical ideas from this disclosure. In this disclosure, the solid lubricant is incorporated into a film of a soft binder resin. Along with that, this disclosure also includes a situation in which another type of solid lubrication film is present in addition to the binder resin. This is different in technical ideas from the lubrication spray or the like of the related art.

(6) Whether or not the solid lubrication coating film and the coating agent of this disclosure can be used is evaluated by an evaluation method suitable for an environment used at an actual well. Accordingly, it is necessary to set upper and lower limits of parameters to complete the coating agent for supporting lubrication or repairing a lightly galled part. In an evaluation using a short pin having a length of about 1 m, an evaluation method does not conform to actual use conditions. Therefore, a new measure was taken for the evaluation method. That is, an appropriate evaluation method has been newly presented. That is, a situation in which a self-weight of a heavy actual length pin at the actual well is applied to the box connection and the fact that the threads are made up in a biased state are imitated, and evaluation is performed including an effect of an unbalanced load due to application of the self-weight such that certainty of parameters of this disclosure is provided.

Here, the methods disclosed in PTLs 8 and 9 are results of setting misalignment by five degrees or six degrees and performing a make-up test with a short pin. However, this is considered as an example where the test reflecting actual harshness is not conducted. The pass/fail determination evaluated by the methods is not always reliable. In fact, when a make-up/break-out test is performed using a short pin by applying misalignment of five degrees or six degrees, the following is assumed. That is, an inclination of a pin connection is defined by a clearance of fitting of an imperfect thread portion of a box connection and a tapered part of a front end portion of the pin connection. Therefore, it is difficult to insert even by setting at five degrees or six degrees due to a structure of the threads. As illustrated in FIGS. 4A and 4B, the threads are tapered. Initial rattling occurs only with a slight difference in meshing of the threads, and five to six degrees are impractical. A crest of a male thread (pin) and a crest of a female thread (coupling) are abutted against each other on the way of moving. Therefore, it is structurally impossible to absolutely incline up to a taper angle of the crest. At the same time, even if inclination is possible for a moment, the inclination is not possible to be maintained through several turns. After several turns of the make-up by hand tight, the pin connection comes up and is set straight. Hence, only a front end of the pin connection and a middle portion of the box connection are under a severe condition at the initial moment, and the condition is not particularly severe.

FIG. 5 is a typical example in a situation where an actual length pin, that is, a pin having a length of about 40 feet (≈ about 12 m) is set. The pin is long and heavy. Therefore, even if the actual length pin is lifted by a derrick crane after using a compensator or a stabbing guide, the actual length pin cannot be set vertically. The pin is set to be slightly bent, is caught on the way of moving only by several turns by the hand tight, and does not move any further. This means that a turn from the state of FIG. 5 to the state of FIG. 4B is forcibly performed at the actual well. The upper and lower limits of the parameters cannot be determined to be correctly defined unless the evaluation is performed after simulating such a point described above.

This is common to the previous prior literature. In order to make the definition range meaningful, it is necessary to evaluate the lubricity by a new evaluation method in which simulation suitable for a make-up/break-out at an actual well or a simulated well can be performed.

This disclosure provides a coating agent containing a water-soluble or water-dispersible polymer (aqueous polymer) as a binder resin, a solid lubricant as a mixture of a metal soap and black lead, and a solvent containing water as a main component.

In addition, this disclosure is, for example, a repair technology for a case where light galling occurs only at a thread part of the thread part and a seal part in a configurational element (thread portion) for oil country tubular goods due to lubrication of a threaded joint for oil country tubular goods. That is, this disclosure is the repair technology to be used for repair at a well site. The galled part is cured by bieng scraped with a grinder, sandpaper, a file, or the like. Thereafter, the region including the cured part is repaired by applying the chemical agent of this disclosure for the purpose of a touch-up. Moreover, this disclosure relates to a threaded joint for oil country tubular goods in a state where the chemical agent is formed into a film.

In this disclosure, the water-soluble or water-dispersible polymer (aqueous polymer) is composed of the binder resin, the solid lubricant is composed of black lead and a metal soap, and the solvent is composed of water as a main component. The binder resin is mainly an aqueous acrylic resin or methacrylic resin. In the following description, the two aqueous acrylic resins and methacrylic resins are referred to as aqueous acrylic resins.

Moreover, an object of this disclosure is to improve lubricity in a case where lubricity of the solid lubrication coating film needs to be further increased by one level. Alternatively, another object thereof is to avoid galling including a preventive meaning thereof. This disclosure also includes, for such purposes, technologies for performing application on an existing solid lubrication coating film to form a topcoat.

In order to achieve this, this disclosure is based on the premise that the metal soap is homogeneously mixed into the coating agent. That is, this disclosure is based on the premise that a metal soap that has water repellency and is insoluble in water is well prepared homogeneously.

In addition, when black lead is used as the solid lubricant, the amount of the black lead is balanced with a formulating amount of the aqueous acrylic resin of the binder resin. In this manner, the black lead is finely divided, at the crest for oil country tubular goods, to a powdery and fragmentary form so as not to form a tape-shaped secondary product. Accordingly, the binder resin and the black lead are appropriately mixed and balanced.

In addition, although the early drying property is necessary depending on the application, the chemical agent is prepared to be used even in a fire-prohibited environment at the well site.

Individual conditions described above are reflected to be satisfied, and thereby it is possible to improve lubrication at the time of a favorable partial touch-up repair within a range defined in this disclosure and improve the lubricity of the solid lubrication coating film by one level. In order to solve the problems described in the preceding paragraphs, this disclosure configures the invention by using the following new solutions.

This will be further described.

The chemical agent is designed not to contain MoS₂ and also not to contain MoS₂ in a film formed after drying is performed.

In addition, mineral oil-based to synthetic oil-based white mineral oil, poly-α-olefin (PAO), polyalkylene glycol (PAG), and the like used in commercially available lubricants are not used as a solvent. In this disclosure, instead of MoS₂, black lead and a metal soap which are completely different in technical system from MoS₂ are used as the lubricant.

This disclosure is designed such that both the black lead and the metal soap are used as the solid lubricants, and the solid lubricants are dispersed in an aqueous polymer using water as a solvent. At the same time, when a film is formed, a measure to achieve the early drying is also made. At the same time, by adding a small amount of alkaline soap, lubricity is also further improved.

In the related art, a metal soap is often used as an additive that is added to oil to increase a viscosity. This disclosure does not use the metal soap as a thickener or a viscous agent. In this disclosure, the metal soap is not added to increase the viscosity of an oil-based solvent. In this disclosure, the metal soap has a role of a lubricant and a role as one means for early drying. In addition, this disclosure is also characterized in that the water-repellent metal soap is used by being dispersed in a solvent composed of water as a main component.

In this condition, in a basic configuration of this disclosure, the solvent composed of water as a main component, and a lower alcohol having three or fewer carbon atoms is added to water as a solvent. A formulating ratio thereof is set to 0.5 or more and 10 or less in terms of 100 set as a volume of water, and a total volume of water and these additives accounts for 95% or more by vol% (volume/volume%) of a total solvent volume.

Further, ammonia water may be added as an additive of an additional component of the solvent. This disclosure defines ammonia water 28 to 30% as so-called concentrated aqueous ammonia. However, when thin ammonia water is used, a numerical value is read as reassigned according to a concentration.

In the solid lubricant, 95% or more of a weight of all the solid lubrication components was composed of the black lead and the metal soap. Of all the solid lubrication components, components obtained by formulating with the black lead in a range of 0.5% or more and 5% or less are used. In addition, the alkaline soap may not be defined as the solid lubricant but work effectively for lubrication in a broad sense. The alkaline soap is designed to account for 1% or less including 0.

The binder resin is a water-soluble or water-dispersible polymer. The binder resin had a composition of a coating agent which was a polymer or a copolymer containing a monomer classified as acrylates and methacrylates by 90% or more when a total weight of the binder resin was taken as a denominator.

In addition, this disclosure does not have a composition in which a solid lubricant is added to an oil-based solvent as in many commercially available lubrication sprays and pastes. This disclosure has a composition in which a binder resin-based component and a solid lubricant-based component are contained in an aqueous solvent. Accordingly, components forming a film by volatilization and evaporation of water in the chemical agent are designed to function as the solid lubrication coating film.

A reason for using a solvent composed of water as a main component is that the water-based solvent is intended to ensure the safety of workers, to be usable even when fire is strictly prohibited, and to contain no harmful components.

In this disclosure, the solid lubricant uses the black lead and the metal soap instead of MoS₂. Both the black lead and the metal soap are used as lubricants. Both the black lead and the metal soap serve to achieve good lubrication. The combinations lead to good results and are also effective for lubrication from a state where the threads mesh with each other as illustrated in FIG. 4B. Accordingly, in a situation where a pin is set slightly obliquely (see FIG. 5), which frequently occurs at a time of a make-up of an actual length pin connection, the black lead and the metal soap also function effectively for lubrication until the pin connection settles in a stable position (corresponding to Step 1 in FIG. 3A).

At the same time, an alkaline soap component is also mixed to improve lubrication. In this disclosure, formulating is performed by adding the alkaline soap up to 1% including no addition. The alkaline soap component is a so-called "soap" and is dissolved in water to increase a viscosity of the solvent. Further, the alkaline soap component refers to a component that is in a solid state, including a component that is incorporated into the film or adheres to a surface of the solid lubrication coating film when dried. The alkaline soap component has the following two roles. That is, there is improvement in lubricity brought about by the dried alkaline soap itself, and on the other hand, the alkaline soap component has a role of causing the lubricity to be favorably achieved by being dissolved to cause slime to come out in a wet situation. Accordingly, at an actual well, when the crests are wet due to backflowing mud, rainfall, frost, or the like that sometimes occurs, soapy water-like slime that adheres to a surface or is partially exposed is formed on a film surface. Accordingly, the alkaline soap component can also be expected to function to accelerate lubrication. The reason why the upper limit is set to 1% or less is that addition exceeding the upper limit increases the viscosity of the chemical agent too much, and it may be difficult to uniformly apply the chemical agent.

Since water is the solvent, a water-soluble or water-dispersible polymer is used as the binder resin. At this time, the polymer was a polymer or a copolymer containing a monomer classified as acrylate and methacrylate by 90% or more of the total weight of the binder resin.

Further, the following descriptions have been provided above. The descriptions include "a total volume of water and lower alcohol accounts for 95% or more in the entire solvent", "the black lead and the metal soap are contained in total of 95% or more in the solid lubricant", or "the acrylate- and methacrylate-based resins account for 90% or more in the binder resin". The descriptions mean that even in a case where impurities, trace additives, or substances that are not intentionally added are mixed, the impurities, the trace additives, or the unintentionally added substances are allowable to the extent that amounts thereof are described herein, and do not affect the characteristics.

This disclosure utilizes volatility of the lower alcohols and, if possible, volatility of ammonia in order to eliminate the difficulty of drying the chemical agent and ensure the early drying property. In this manner, the volatility enhances volatilization and evaporation of water.

Moreover, as a suitable range for promoting the early drying property, a size of the solid lubricant was defined to an average particle size of 5 µm or less for both the metal soap and the black lead. Furthermore, in this disclosure, the addition amounts of the metal soap and the black lead are optimized to realize the early drying.

A reduction in the particle size of the solid lubricant is based on the idea of adding a material that increases a surface area in order to promote the early drying of the coating agent that is not yet dried. Moreover, this is because a solid lubricant having a small particle size is effective for lubrication. From the viewpoint of both the early drying and the lubrication, the particle size of the solid lubricant is preferably 5 µm or less, and the smaller the particle size, the better. Preferably, both the metal soap and the black lead have a particle size of 1 µm or less.

In addition, the metal soap and the black lead need to be mixed with a solvent composed of water as a main component so that the metal soap and the black lead do not form lumps. A reason thereof is that, even when an initial particle size is small, it is not possible to realize the idea of increasing a drying speed by gaining the surface area, when the particles gather to form a clump or a lump. In addition, the metal soap and the black lead have water repellency and tend to be insoluble in water. Therefore, in order to dissolve the metal soap and the black lead in a solvent composed of water as a main component, the metal soap and the black lead is once dissolved in a lower alcohol used for the early drying and then dissolved. As a result, the metal soap and the black lead can be homogeneously dispersed in the aqueous solvent.

In order to simultaneously achieve the early drying and the lubricity, it is important to adjust the formulating ratio to an appropriate value. In this disclosure, compounding definitions of the weights of the water-soluble or water-dispersible polymer corresponding to the binder resin, the solid lubricant, and the solvent composed of water as a main component are set to 30% or more, 10% or more, and 40% or more, respectively, as lower limit values with respect to the weight of all the constituent components. In addition, the upper limit values are preferably 40% or less, 20% or less, and 50% or less, respectively.

A reason why this preferred range is set is as follows. A situation of a thin chemical agent, that is, a situation of a large amount of solvent, is allowable, but the viscosity is lowered, the viscosity decreases, and the fluidity of the chemical agent increases. At the same time, since an amount of water component increases, a long drying time is required. Since the chemical agent is thin, the chemical agent can be used as a material, and the lubrication and rust prevention characteristics are secured, when the chemical agent is applied in multiple layers and dried repeatedly each time. However, the usability is poor, and it is difficult to say that such a chemical agent is realistic.

In addition, on the premise that the solid lubricant can be dissolved in the solvent, it is important to perform preparation in which a weight ratio between the binder resin and the solid lubricant as a weight ratio of the solid lubricant to a weight of the binder resin is set to a range of 0.25 to 0.66. More desirably, the weight ratio is preferably in a range of 0.3 or more and 0.5. This proportion results in the formation of a solid lubrication coating film on the threaded surface. In order to uniformly disperse and dispose the solid lubricant in the binder resin, there is a limit value regarding improvement of the lubrication. When an amount of solid lubricant is too much, the entire solid lubricant is not put into the film and only adheres to the surface, and this is disadvantageous for maintaining improved lubrication. Hence, the upper limit of the preferred range is 0.5. Conversely, when the amount is too small, the solid lubricant necessary for lubrication is insufficient, and a target lubrication level cannot be maintained. Thus, the preferred lower limit is 0.3.

In order to take measures to increase the volatility in the solvent for the early drying, the lower alcohol having three or fewer carbon atoms was further added as an additive. Moreover, ammonia water was added depending on the situation. A volume obtained by the sum of the additives was set to 0.5 or more and 10 or less in terms of 100 set as the volume of water. The former lower alcohol is preferably adjusted to be added in an amount of 0.5 or more and 5 or less in terms of 100 set as the volume of water. The ammonia water is allowed to be mixed in a range of 0 or more and 5 or less in terms of 100 set as the volume of water. The ammonia water may also be intended to be used for pH adjustment. However, the drying of the chemical agent is also intended by utilizing the volatility of ammonia. Additionally, the ammonia water referred to herein is the so-called concentrated ammonia water of ammonia water 28 to 30%. When thin ammonia water is used, a numerical value is read as reassigned according to a concentration.

Moreover, in order to promote the early drying, a formulating proportion of the metal soap having the particle size of 5 µm or less and the black lead was set so that a weight ratio of the black lead to the weight of the total solid lubricant was 0.5% or more and 5% or less. Additives of less than 5% of other solid lubricant systems are also allowable, but formulating is performed in which a remaining major component other than the metal soap is predominantly the black lead.

The metal soap functions effectively for the lubrication. However, when use of the metal soap in the fire-prohibited environment is assumed, there is a limit even to prior dissolution of the metal soap using alcohol. An addition amount of the metal soap is limited to homogeneously mix the metal soap in the coating agent composed of the aqueous polymer. Therefore, the upper limit is determined to 5%. In addition, the lower limit is determined to 0.5% or more from the fact that the lower limit means a necessary amount for achieving the early drying due to synergy with fine black lead and is defined to realize lubrication characteristics at the same time.

At the same time, when a lubricant using only the black lead itself is used, a lubricant obtained by appropriately adding an additive or the like to a solvent such as water solubles or oil and mixing and dispersing the black lead is used, in the related art. In principle, the black lead is insoluble in water. Therefore, in order to design a chemical agent by homogeneously dispersing the black lead in a solvent composed of water as a main component, it is necessary to take measures for how to homogeneously disperse the black lead in the same manner as the metal soap as will described below.

This disclosure is based on the premise that the metal soap and the black lead are homogeneously mixed into the coating agent.

However, the metal soap is reported to be soluble in oil but has water repellency and is insoluble in water. Therefore, the metal soap cannot be well opacified in the solvent composed of water as a main component of this disclosure if normal. Consequently, a measure is required. Similarly, the black lead is, in principle, insoluble in water. In the related art, in the case of utilizing only the black lead itself as a lubricant, a lubricant obtained by appropriately adding an additive or the like to a solvent such as oil or solubles and mixing and dispersing the black lead is used. When the black lead is dissolved in an aqueous solvent as it is without any measure, the black lead tends to float on the surface. It is preferable to disperse the black lead as much as possible from the viewpoint of utilizing the black lead as the solid lubricant.

Solutions thereof will be described.

Regarding the metal soap, the present inventors have obtained the following findings through laboratory examination experiments in which a metal soap insoluble in water is mixed with a solvent supporting component to be added to a solvent which is water as a solvent of a water-soluble or water-dispersible polymer (aqueous polymer).

That is, the metal soap is insoluble in both water and ethanol. However, when water and a lower alcohol group including ethanol are compared with each other in actual dissolution, the present inventors have noticed that dispersion/dissolution behavior of the metal soap is different. In the lower alcohol group including ethanol, the metal soap hardly forms a lump and tends to easily become particulates so that the metal soap can be maintained as fine particles. The metal soap may be mixed with alcohol and then strongly agitated or ultrasonically vibrated. On the other hand, in simple water, metal soap particles gather with each other and become larger to form lumps, and a homogeneous dispersion state cannot be obtained.

Hence, the metal soap is once dissolved in a lower alcohol group such as ethanol and then disperse the metal soap even though the metal soap is in an insoluble state. Thereafter, the inventors have conceived that dispersion of the metal soap can be brought close to a homogeneous coating material by developing and mixing the metal soap in the aqueous polymer.

Here, when the coating agent is stationary, the metal soap is separated as time elapses. However, it has been checked that a homogeneous solid lubrication coating film is formed by removing water of the solvent, that is, evaporating/vaporizing the water when the solvent is applied after being opacified again by performing shaking or the like of a container containing the chemical agent.

Further, when the metal soap is directly dissolved in water, the metal soap tends to form lumps, so that there is a high concern that the metal soap will form a heterogeneous film when the metal soap forms a solid lubrication coating film.

In this disclosure, the metal soap is formulated by dispersing and opacifying the metal soap in the lower alcohol and then putting the metal soap into water of the solvent. In this manner, homogeneous formulating of the metal soap is achieved.

Also regarding the black lead, a lower alcohol can also be used in the same manner as dissolving the metal soap in an aqueous solvent. However, in a situation where the lower alcohol as in this disclosure is 10 or less in terms of 100 set as the volume of water, it is difficult to dissolve the black lead as much as the metal soap. In this case, a part of the black lead floats on a solvent surface; however, measures need to be taken to uniformly disperse the black lead by dispersing of most of the black lead, shaking of the entire chemical agent before application, or the like.

From the viewpoint of improving the lubrication behavior to be described below, it is preferable to contain an alkaline soap. Since the alkaline soap is soluble in water, there is no particular problem from the viewpoint of dissolving the alkaline soap in a solvent composed of water as a main component. In this disclosure, the alkaline soap may be dissolved having an upper limit of to 1%. Dissolution of 1% or more is not good because the viscosity of the entire chemical agent increases, and thus it is difficult to perform homogeneous application.

On the other hand, this disclosure is intended to have a composition that can be used in a fire-prohibited environment as the most severe environment. Therefore, in this disclosure, the lower alcohol enables three things of the early drying, the technology for dissolving a metal soap in advance and then dissolving the metal soap in the aqueous solvent, and the consideration of safety by adjusting a flash point to be high to be simultaneously achieved.

Here, the most preferable state is a state where a target flash point is evaluated as nonflammable. However, in an environment where the flash point of the chemical agent is 60°C or higher, it seems that the chemical agent can be used in a fire-prohibited environment in the environment of the well site. Consequently, the utilization of the lower alcohol is allowable up to such a level. Further, volatilization of ammonia may also be utilized. Ammonia water has a flash point considered as nonflammable, and the ammonia water is also used to adjust the pH of an acrylic binder resin constituting the coating agent. Therefore, it is preferable to increase the pH using ammonia water to reach a region close to the upper limit in a pH adjustment range and to utilize the volatility of the ammonia water in combination.

In addition, in this disclosure, the main components of lubrication are the metal soap and the black lead. Component design is performed such that the black lead put for improving the lubrication is combined with the binder resin at the time of the make-up/break-out and does not elongate and does not form a tape-shaped secondary product. In addition, the inclusion of a trace amount of alkaline soap makes it possible to further improve lubrication.

In a state of a film which is not made of only black lead but is made of black lead combined with a binder resin component, the black lead is constrained along a thread groove. At the same time, due to the integration of the black lead with the binder resin, a secondary product having a tape shape (a state similar to a cassette tape) is easily formed. In these cases, the film is difficult to move in conjunction with the make-up/break-out of the thread. As a result, the thread gap is likely to be clogged, and as a result, a possibility of causing galling increases. Hence, it is necessary to set the component design so that the black lead is in a powder form or a fragment form and does not have a tape shape.

Consequently, in a solid lubrication coating film composed of metal soap + black lead (further a trace amount of alkaline soap) and a binder resin, the following is aimed. For example, this disclosure aims to prevent the tape-shaped secondary product that causes galling along the thread groove from being formed when the make-up/break-out is performed and to prevent galling from occurring by changing the tape-shaped secondary product into peeled off pieces or powdery secondary products that are divided from each other, even when the tape-shaped secondary product is formed. On the other hand, since the alkaline soap is easily soluble in the aqueous solvent, the alkaline soap seems to be homogeneously dispersed in the solvent even when the alkaline soap is not observed. Consequently, when the coating film is applied and dried, the alkaline soap is almost distributed in the coating film, and a part thereof is attached to the outermost surface.

As a measure for achieving this, in this disclosure, the amount of the black lead as an accessory component is limited with respect to the binder resin using a metal soap component as a main component. The black lead is effective in improving the lubrication performance. However, when a sliding region for the black lead such as a crest structure is limited, and a route along which a solid lubricant or a secondary product moves is narrow and limited, a tape-shaped secondary product (a state similar to a cassette tape) is formed. As a result, the tape-shaped secondary product clogs a gap of the crests and tends to induce galling. Hence, black lead is formulated in accordance with an addition ratio with the lower limit of 0.5% or more and the upper limit of 5% or less with respect to the total weight of all the solid lubricant components including an alkaline soap component.

Specifically, the lower limit is determined from a black lead content suitable for utilizing an effect of improving lubrication by black lead. In addition, the upper limit of a black lead content is determined to inhibit the formation of the tape-shaped secondary product made of black lead as a main component at the time of the make-up/break-out of the connection due to too much inclusion of black lead.

The solid lubrication coating film structure includes a range from a situation in which the black lead and the metal soap are completely incorporated into the coating film to a case in which the black leads as a single substance are distributed to such an extent that the black leads are present as if the black leads seem to adhere to the outermost surface of the solid lubrication coating film. Accordingly, it is necessary to set the total amount of black lead to the upper limit of 5% or less with respect to the total solid lubricant (including the alkaline soap content).

A more preferable range is preferably 1% or more and 3% or less. When the lower limit is 1% or more and the upper limit is 3% or less, a lubrication improving effect by black lead can be further expected in this order, and formation of a tape-structured secondary product is more easily avoided.

In this disclosure, materials that promote the lubrication are a metal soap and black lead and a trace amount of alkaline soap. The insufficient lubrication behavior of the metal soap is improved by adding the black lead. In addition, it is possible to avoid a state where a sliding part such as a connection for oil country tubular goods is often produced by a black leadcontaining lubricant in a situation in which the sliding part is limited to a narrow region such as a thread groove.

It is necessary to avoid that, due to the addition of black lead, the tape-shaped secondary products are formed at the time of the make-up/break-out of the connection and result in galling.

The reason why it is difficult to form a tape-shaped secondary product derived from black lead when the above-described range is limited is considered as follows.

The black lead is deformed, similarly to each playing card which slides sideways when the stacked playing cards are pressed and caused to slide by fingers. However, when the black lead is present in the binder resin, the binder resin is combined with the black lead and firmly connected to the black lead and is formed into a tape shape, as the black lead content in the film increases. This is the main cause of galling. Small distances between black leads and a large size of individual black leads result in an increase in length of the tape-shaped secondary product. Further, the small distances between the black leads indicate that the density of black leads is low. Hence, the concentration of the black lead of this disclosure needs to be 0.5% or more and 5% or less (in terms of the weight of the total solid lubricant). The lower limit is a value suitable for utilizing the lubrication improving effect of black lead. The upper limit is a value suitable for inducing the tape-shaped secondary product to have a flaky shape or a powdery shape. The concentration of 5% or less is defined based on an experimental result, but it can be estimated that even if individual black leads are deformed, it is difficult for the black lead to be connected to each other to form a long tape shape. Furthermore, a particle size of black lead is preferably 5 µm or less. The tape-shaped secondary product is formed in a case where the individually elongated black leads are connected to each other at the time of the make-up/break-out and a case where the size of the individual black lead is larger than 5 µm. In this case, a shape formed by elongation of a large black lead as a single substance tends to be extended to form a long tape structure. Therefore, the size of black lead is set in order to suppress the connection. At the same time, it cannot be denied that the solid lubrication coating film is considered to have a thickness of about 5 µm in a thin part. When the size of the black lead is larger than the film thickness in a local part, the solid lubrication coating film itself is easily broken starting from an interface between the binder resin and the solid lubricant at the time of the make-up/break-out. Consequently, the setting of the size also has a meaning to avoid such a state.

In addition, the reason why the size of the metal soap is defined as preferably 5 µm or less has also a meaning to avoid that the solid lubrication coating film itself is likely to be broken, similarly to the black lead.

At the same time, since both the metal soap and the black lead are fine structures, a contact area with the solvent increases, and thereby the drying points increase. Consequently, the size of 5 µm or less also contributes to the early drying.

The solid lubrication coating film of this disclosure has a structure in which the binder resin, the black lead, and the alkaline soap are homogeneously contained in the binder resin. However, there is also a part composed of the metal soap, the black lead, and the alkaline soap which are distributed to have a part thereof which adheres to the outermost layer. In any case, the solid lubricants provide the basis for achieving the lubrication of the connection for oil country tubular goods. The metal soap is a dry lubricant as a single substance and functions as a lubricant in a dry state. In addition, when the metal soap has friction heat due to slightly poor lubrication at the time of the make-up/break-out, the metal soap is semi-melted or melted to have a function of forming a lubrication coating film at a portion needing lubrication. This disclosure does not take advantage of an effect of mixing oil and the metal soap into a grease form, which is a common method of utilizing the metal soap.

In a case where lubrication characteristics that cannot be achieved only with the metal soap are required, this disclosure makes it possible to cope with the case by utilizing a lubrication characteristics improving effect using the black lead. The black lead has a strong flat plate-shaped structure which is a structure in which weak bonding and lamination are performed by van der Waals forces, and the structure utilizes a lubrication effect in which a flat plate shape slides when force (torque) is applied to the black lead. In the lubrication behavior limited to the thread groove for oil country tubular goods as described above, a long tape-shaped secondary product is formed, and a measure to determine the content is contrived so that galling does not occur, and the size may be adjusted to a suitable range.

The alkaline soap, similarly to the metal soap, may also function as a dry lubricant in the binder resin. At the same time, the alkaline soap is rather slimy in combination with minute moisture. As a result, there is also a purpose of causing a connection for oil country tubular goods which is always set slightly obliquely to slide due to the effect of the alkaline soap to guide the thread to the meshing with the stable position. In an actual make-up of the connection for oil country tubular goods and the like, there is a situation where a pin having Range-2 or 3 (8 m or 12 m, respectively) is set slightly obliquely. As indicated by reference numeral 1a (10) in FIGS. 5 and 3B to be described below, an initial set position of the connection for oil country tubular goods, that is, a position where the pin connection lightly meshes and the meshing is maintained to some extent by hand tight or the like is rather normal. Accordingly, it cannot be denied that the solid lubrication coating film is scraped more than necessary and damaged when the pin is brought to a state in FIG. 4B while the make-up of several turns is performed by a power tong. The alkaline soap can also serve effectively to guide the pin connection to a regular meshing position by avoiding undue scraping of the solid lubrication coating film more than necessary such that the pin connection slides into the regular position of the box connection. One of the features of this disclosure is that the addition of black lead improves the metal soap-based lubrication, and a minute amount of alkaline soap is contained. In this manner, it is a key to smoothly guide the pin connection, that is, cause the pin connection to slide, into the normal meshing position.

At that time, depending on the addition amount of black lead, it is necessary to take a measure not to cause black lead rather conversely to form a tape-shaped structure along the thread groove and result in galling.

In this disclosure, there are two types of chemical agent design: a case where all of the solid lubricant is incorporated into the film when the solid lubricant is dried into the film, and a case where the solid lubricant is mainly incorporated into the film but is distributed on the film surface. The part outside the film includes a part weakly attached to the film surface and a part simply placed on the outermost layer.

The metal soap and the black lead have two contributions. That is, the solid lubricants have a part which is separated from the film, and each of the solid lubricants individually and in combination contributes to lubrication, and a part which contributes to lubrication as a secondary product combined with the binder resin.

In this disclosure, in order to achieve a high level of lubrication, as described above, the compounding definitions of the weights of the binder resin component composed of an aqueous polymer (acrylic), the solid lubricant, and the solvent composed of water as a main component are set as a preferable range as follows. That is, with respect to the weight of all the constituent components, the lower limit values were set to 30% or more, 10% or more, and 40% or more, respectively, and the upper limit values were set to 40% or less, 20% or less, and 50% or less, respectively.

Here, what is important is that the black lead is 0.5% or more and 5% or less of the total amount of the solid lubricant in terms of a weight ratio. The lower limit is set to 0.5% to maintain high lubrication without forming a tape-shaped secondary product as described above. In addition, at such a level, the black lead can be homogeneously mixed with a solvent composed of water as a main component. The upper limit of 5% or less is to avoid adverse effects due to an excessive amount of black lead. When the black lead is contained exceeding the limit values, in addition to the viewpoint of lubrication, dissolution of the black lead in the aqueous solvent is not successful. In this case, there is a high concern that lumps are formed by association of the black leads. In addition, there is a case in which it is not possible to sufficiently formulate the aqueous solvent. It is also necessary to mix the alkaline soap by 1% as the upper limit. This is to facilitate guidance of the thread to the normal meshing position.

Next, conditions to cope with even the case where a missing part of the curing position is filled with the black lead when the black lead is used for a touch-up will be described.

After curing is performed with a grinder or paper, the chemical agent of this disclosure is applied to repair light galling or the like at the time of thread galling.

At this time, in the state after curing, the solid lubrication coating film may be lost, the solid lubrication coating film may be partially lost, or the metal of the thread portion may be scraped and lost. For example, the thickness on the order of 1 to 2 mm may be lost. Therefore, first, in order to achieve the purpose of filling the portion, in this disclosure, the above-described component regulations are the same, but the compounding definitions of the weights of the aqueous polymer (acrylic), the solid lubricant, and water are set as follows, to have the lower limit values with respect to the weight of all the constituent components. That is, the lower limit values were set to 30% or more, 10% or more, and 40% or more, respectively. In addition, the upper limit values were set to 40% or less, 20% or less, or 50% or less, respectively.

The solid lubricant contained the metal soap as a main component and the black lead and the alkaline soap as added components, and the binder resin was dissolved in the solvent composed of water as a main component and was selected from the water-request or water-soluble binder resins. The chemical agent may be applied on the scraped portion as a center, and at the same time, the chemical agent may be uniformly and thinly applied to other portions. The coating material is physically embedded in the galled position. Once the make-up/break-out is performed, the embedded part is pressed from above. As a result, the scraped and cured part is finally filled with the chemical agent.

In addition, adjustment of the viscosity of the coating agent to 1,000 mPa·sec or lower enables to ensure a state of high fluidity for causing the coating agent to enter the defective part. The viscosity is realized by, for example, increasing the composition of a water-soluble agent. However, when the viscosity is higher than 1000 mPa·sec, it is difficult to achieve the purpose of supporting lubrication or repairing the lightly galled part. Consequently, the concentration range is adjusted in consideration of such a point.

In addition, whether or not the solid lubrication coating film and the coating agent of this disclosure are appropriate was evaluated by an evaluation method suitable for the environment used at the actual well, and upper and lower limits of parameters were defined. In this manner, supporting of the lubrication or repairing of the lightly galled part can be performed to withstand use even at an actual well.

Here, in an evaluation simply using a short pin having a length of about 1 m, the evaluation method does not conform to the actual use conditions, and thus a measure for the evaluation method needs to be taken. In the evaluation using the short pin as described in the patent literature group in the related art, although the NG pins can be sorted out, the OK pins cannot be sorted out. This is because the evaluation using the short pins tends to be milder than the evaluation at an actual well or a simulated well, and the lubrication with the solid lubrication coating film is remarkably different therebetween. As described above, in the case of the solid lubrication coating film, the solid lubrication coating film may be unavoidably scraped. Accordingly, the components form secondary products, and when the secondary products clogs the thread gap, the clogging tends to result in galling.

In the evaluation using a short pin as in the related art, since a pin connection is lightweight and can be made up straight, a problem tends to be hardly detected. In the evaluation using the actual length pin, as illustrated in FIG. 5, the initial set position always does not advance on the way of moving, and the make-up is performed by the power tong from such an obliquely meshing state. Therefore, the solid lubrication coating film is easily scraped, and as a result, galling tends to easily occur. In this disclosure, the upper and lower limits of the parameters are determined after checking an operation in such a situation at the actual well, for accuracy. It is not appropriate to perform evaluation every time at an actual well or a simulated well in consideration of experiment costs and labor.

In this disclosure, hereinafter, an alternative evaluation was performed by a method called an evaluation using weight tong. Further, the method called the evaluation using weight tong is an evaluation method invented by the inventors. In this evaluation method, an evaluation can be performed including an effect of damaging the solid lubrication coating film by applying a self-weight of a heavy actual length pin at the actual well and setting the pin in a biased state. This evaluation provides certainty of the parameters of this disclosure.

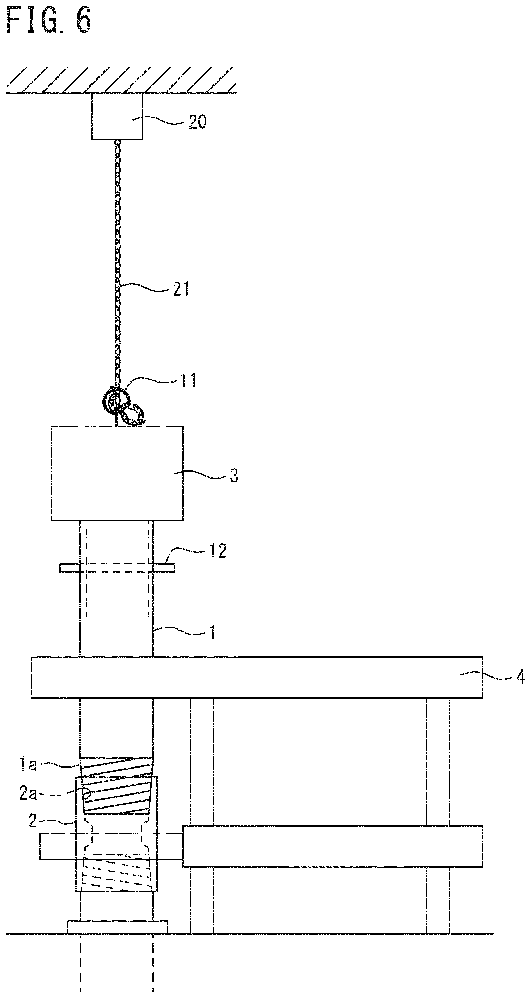

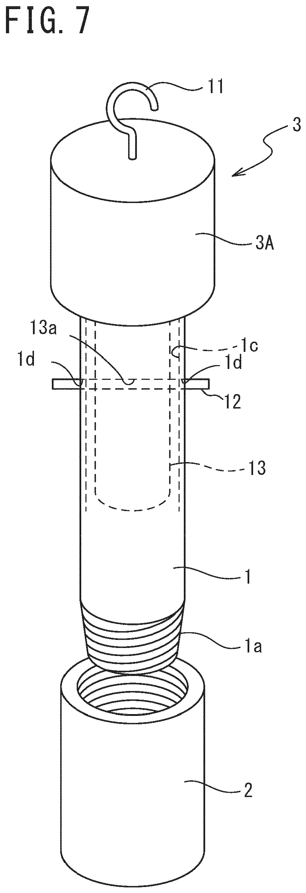

In the evaluation method, a weight corresponding to about one to three actual length pins is attached to an upper end portion of the short pin. Moreover, the initial set position of the connection is set in a state position where about a half of the pin crests are exposed from the box connection. Accordingly, the weight is applied at the time of the make-up, and the weight is not applied at the time of the break-out. In this manner, a make-up at the actual well is simulated. An example of an apparatus is illustrated in FIGS. 6 and 7. A configuration example thereof will be described below.

In this disclosure, the parameters are defined based on an evaluation using a new configuration of an apparatus, and the lubrication performance that can withstand the use even at the actual well is secured.

### Advantageous Effects of Invention

According to the invention, it is possible to provide a chemical agent that does not use MoS₂, is environmentally friendly, and can withstand use at an actual well, as a coating agent for repairing a thread portion for oil country tubular goods and improving lubrication.

### Brief Description of Drawings

FIG. 1 is a view illustrating oil country tubular goods and a threaded joint for the oil country tubular goods;
FIG. 2A is a graph illustrating a make-up chart in a laboratory test in the related art, and FIG. 2B is a view illustrating an initial set position at that time;
FIG. 3A is a graph illustrating a make-up chart at an actual well, and FIG. 3B is a view illustrating an initial set position at that time;
FIGS. 4A and 4B are views simulating a make-up state of the threaded joint for oil country tubular goods;
FIG. 5 is a schematic view illustrating a state of a set of a pin connection and a box connection (description of a crest and the like is omitted);
FIG. 6 is a view for explaining conditions (weight tong) of a new laboratory test (description of a crest and the like is omitted); and
FIG. 7 is a view illustrating an installation example of a weight under conditions (weight tong) of a new laboratory test. In FIG. 7, description of a crest and the like is omitted.

### Description of Embodiments

Next, embodiments of this disclosure will be described.

### (Configuration)

### <Chemical agent>

A chemical agent of this embodiment is a chemical agent for imparting the lubrication performance to a metal surface of a metal component such as oil country tubular goods. The chemical agent contains a solid lubricant, a binder resin, and a solvent component as main components. The main component refers to, for example, a material which unavoidably contains a remainder, or a case where a solid lubricant, a binder resin, and a solvent component account for 95% or more of the total weight.

### [Solvent component]

The solvent component contains water as a main component and a lower alcohol having three or fewer carbon atoms which is added as an additive to the water.

A volume of the additive with respect to water is 10 or less in terms of 100 set as a volume of water.

The water and the additive account for 95% or more of the volume of the solvent.

As the additive, ammonia water may be further added.

The solvent is preferably, for example, 40% or more and 50% or less of a total weight of the chemical agent.

As the solvent, for example, of lower alcohol having three or fewer carbon atoms and ammonia water, at least the lower alcohol having three or fewer carbon atoms is added.

The volume of the lower alcohol having three or fewer carbon atoms is 0.5 or more and 10 or less in terms of 100 set as the volume of water constituting the solvent. A volume of ammonia water is 0 or more and 5 or less in terms of 100 set as the volume of water constituting the solvent.

The lower alcohol having three or fewer carbon atoms is one or two or more lower alcohols selected from methanol, ethanol, isopropyl alcohol, normal propyl alcohol, and industrial ethanol.

### [Solid lubricant]

The solid lubricant includes black lead and metal soap. The black lead and the metal soap account for 95% or more of a weight of all solid lubrication components.

The solid lubricant is preferably, for example, 10% or more and 20% or less of a total weight of the chemical agent. A main component of the solid lubricant is the metal soap. That is, the metal soap is contained in an amount larger than that of black lead in terms of a weight ratio.

The black lead is, for example, 0.5% or more and 5% or less of the total solid lubricant in terms of a weight ratio. A more preferable range is preferably 1% or more and 3% or less. When the lower limit is 1% or more and the upper limit is 3% or less, a lubrication improving effect by black lead can be further expected, and formation of a tape-structured secondary product is more easily avoided.

Moreover, alkaline soap is added in an amount of 1% or less including 0. Lubrication behavior is achieved in the same manner as the metal soap and the black lead. In addition, as an additional role, the alkaline soap also serves effectively to enable a pin connection and a box connection to slide to a proper meshing position.

In addition, as a suitable range, a particle size of the metal soap and the black lead are preferably, for example, 5 µm or less. A reason thereof is both to avoid that a solid lubrication coating film is susceptible to damage at the time of the make-up/break-out, as mentioned above, and to assist in early drying by making it finer in size.

The metal soap and the alkaline soap will be described. The former is made of one or more soaps made of a compound (metal soap) made of a fatty acid of the following A group and a metal element (metal ions) of the following B group. The latter is made of a compound (alkaline soap) made of a fatty acid of the following A group and a metal element (metal ion) of the following C group.

A group: stearic acid, behenic acid, lauric acid, 12-hydroxystearic acid, oleic acid, montanic acid
B group: Mg, Ca, Zn, Ba
C group: Na, K

### [Binder resin]

The binder resin is a water-soluble or water-dispersible polymer. The polymer is a polymer or a copolymer containing a monomer by 90% or more of a total weight of the binder resin, the monomer classified as acrylates and methacrylates.

The binder resin is, for example, 30% or more and 40% or less of the total weight of the chemical agent.

The water-soluble or water-dispersible polymer constituting the binder resin is, for example, a polymer composed of a single monomer or a copolymer composed of two or more monomers among monomers to be described in (1) to (4).
(1) Monomers including acrylates, methacrylates and individual derivatives of acrylates and methacrylates, as main components
(2) Monomers combined with monomers including alkyl ester, vinyl ester, styrene ester, carboxylic acid ester, and individual derivatives of these esters and acrylates and methacrylates, and individual derivatives of acrylates and the methacrylates
(3) Monomers grafted with respect to the above-described (1) and (2)
(4) Monomers in which one or both monomers of any one of a vinyl compound and a urethane compound are integrally formed with at least one or more monomers of (1) to (3)

Regarding the chemical agent, the viscosity of the chemical agent is 1,000 mPa·sec or lower.

When the chemical agent is applied to a metal surface by an application amount of 1 mg/mm² or less, the chemical agent has an early drying property enabling drying to be completed within 30 minutes when the chemical agent is left to be dried in a windless atmospheric environment at an ambient temperature. However, normal-temperature drying in the atmosphere means drying at an ambient temperature (15 to 30°C, e.g. 24°C).

### <Method for manufacturing chemical agent>

Regarding the chemical agent, the metal soap is formulated by dispersing and opacifying the metal soap in the lower alcohol and then putting the metal soap into water of a solvent.

### <Method for repairing oil country tubular goods>

A method for repairing oil country tubular goods is provided to repair a lubrication film of a thread portion for oil country tubular goods.

A coating agent of this disclosure is applied to at least a cured part after curing a region where galling has occurred in the thread portion for oil country tubular goods. In this manner, a scraped region can be filled with a film containing black lead and repaired.

### <Method for improving lubrication of oil country tubular goods>

The coating agent of this disclosure is applied onto an existing lubrication coating film formed on oil country tubular goods and formed on a thread portion. In this manner, the lubrication performance is improved.

### <Oil country tubular goods and threaded joint for oil country tubular goods>

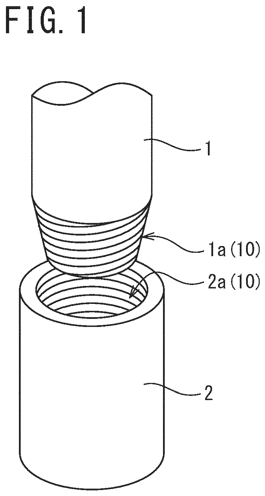

The oil country tubular goods include a box 2 having a female thread 2a and a pin 1 having a male thread 1a as illustrated in FIG. 1.

As illustrated in FIG. 1, the threaded joint for oil country tubular goods is configured of the box 2 such as a coupling having the female thread 2a and a pin 1 having the male thread 1a. A lubrication coating film including the solid lubrication coating film of this disclosure is formed on a contact surface (fastening surface 10) of the thread portion in at least one component of the box 2 and the pin 1.

The lubrication coating film including the solid lubrication coating film is formed on the thread portion for oil country tubular goods of the embodiment.

The solid lubrication coating film includes a binder resin and a solid lubricant dispersed in the binder resin.

In the solid lubrication coating film, the solid lubricant is dispersed in the binder resin as a matrix component.

The solid lubricant contains black lead and metal soap, and the black lead and the metal soap account for 95% or more of a weight of all solid lubrication components.

A particle size of black lead is, for example, 5 µm or less, and a particle size of the metal soap is, for example, 5 µm or less.

The metal soap is, for example, 0.5% or more and 5% or less of a total amount of the solid lubricant in terms of a weight ratio.

The metal soap includes, for example, one or more kinds of metal soaps made of a compound made of a fatty acid selected from the following A group and a metal element (metal ion) selected from the following B group.

The alkaline soap includes, for example, one or more kinds of alkaline soaps made of a compound made of a fatty acid selected from the following A group and a metal element (metal ion) selected from the following C group.
A group: stearic acid, behenic acid, lauric acid, 12-hydroxystearic acid, oleic acid, montanic acid
B group: Mg, Ca, Zn, Ba
C group: Na, K

The binder resin is a water-soluble or water-dispersible polymer, and the polymer is a polymer or a copolymer containing 90% or more of a monomer classified as acrylates and methacrylates when the total weight of the binder resin weight is a denominator.

The water-soluble or water-dispersible polymer constituting the binder resin is, for example, a polymer composed of a single monomer or a copolymer composed of two or more monomers of monomers to be described in (1) to (4).
(1) Monomers including acrylates, methacrylates and individual derivatives of acrylates and methacrylates, as main components
(2) Monomers combined with monomers including alkyl ester, vinyl ester, styrene ester, carboxylic acid ester, and individual derivatives of these esters and acrylates and methacrylates, and individual derivatives of acrylates and the methacrylates
(3) Monomers grafted with respect to the above-described (1) and (2)
(4) Monomer in which one or both monomers of any one of a vinyl compound and a urethane compound are integrally formed with at least one or more monomers of (1) to (3)

The solid lubrication coating film is a soft coating film having a film thickness of 10 µm or more and 100 µm or less and a film hardness of B or lower in pencil hardness. However, this film thickness refers to a so-called crest part (portion corresponding to a crest) on a surface of a crest part where the film thickness can be measured nondestructively by ultrasonic waves or the like. In particular, a connection for oil country tubular goods refers to a ridge part (flat part) of a thread which is often found at a premium joint to have an inverted hook shape for the box connection and a hook shape for the pin connection. The film thickness is not a film thickness of a part of a stabbing flank and a loading flank where the crest stands vertically.

Further, a base film (not illustrated), for example, an Mn phosphate chemical conversion film, an electroplating film, or the like, may be provided at a lower layer of the solid lubrication coating film.

At least one oil country tubular goods of the box and the pin is formed by the oil country tubular goods on which the lubrication coating film of this disclosure is formed.

When one oil country tubular goods of the box and the pin is the oil country tubular goods on which the lubrication coating film of this disclosure is formed, a coating film having a higher hardness than that of the solid lubrication coating film is preferably formed on a thread portion of the other oil country tubular goods.

As described above, the chemical agent of this disclosure is a coating agent including a main component-based coating agent in which a water-soluble or water-dispersible polymer (aqueous polymer) is used as a binder resin, a solid lubricant is mixed with metal soap and black lead, and a solvent is water.

The chemical agent of this disclosure is utilized as the solid lubrication coating film of the connection for oil country tubular goods. At the same time, for example, the chemical agent of this disclosure is also used in a case where lubricity needs to be further improved by one level for the already formed solid lubrication coating film. For the purpose of improving lubricity, or for the purpose of avoiding galling including a preventive meaning thereof, it is also possible to apply the chemical agent of this disclosure onto an already existing solid lubrication coating film.

In addition, for example, the chemical agent is used in a case where light galling occurs only at a thread part of a thread configured to have the thread part and the seal part. That is, the chemical agent of this disclosure is applied to a surface to be repaired after curing at a time of a partial touch-up repair performed at a well site. In this manner, the oil country tubular goods and the threaded joint for oil country tubular goods of this disclosure are configured.

The following parameter groups are set in association with each other regarding necessary properties and are realized in the upper and lower limit ranges defined in this disclosure.

First, a target necessary property will be described, and then a definition range of each parameter and a meaning thereof will be described.

Further, this disclosure is intended to support the lubrication and to perform the lubrication during the partial touch-up repair. Therefore, corrosion resistance is not particularly intended. Corrosion resistance is achieved by the already existing solid lubrication coating film, and in the partial touch-up repair at a well site, make-up is performed immediately after the repair, and thus only the lubrication is intended.

### (Regarding target lubrication characteristics, lubrication supporting characteristics, and repair of lightly galled part)

When this disclosure is utilized as the solid lubrication coating film of the connection for oil country tubular goods as intended, the characteristics are determined based on the lubrication characteristics of the solid lubrication coating film, and gradual wear and tear of the film which is specific to the solid lubrication coating film is also considered. Accordingly, the lubrication performance is determined based on a standard slightly different from the specifications and the like of API-5C5 and ISO 13679. A pass criterion for a casing size is twice or more times of the make-up/break-out, and determination criteria for a tubing size is five or more times of the make-up/break-out. As described above, the characteristics are evaluated on the premise that the characteristics are checked by a new evaluation method in which an actual well can be simulated.

In the characteristic evaluation as lubrication support, the lubrication characteristics of an increase in the number of times of the make-up/break-out that can be achieved by the threaded joint by once or more times by applying the coating agent of this disclosure are determined as having a good effect. Lubrication supporting refers to improving the lubricity by applying the chemical agent of this disclosure to the entire surface of the solid lubrication coating film already provided on the thread portion. In many cases, a target increase in the number of times of make-up/break-out is twice to three or more times, but lubrication supporting is regarded as good (pass) when the number of times of make-up/break-out can be increased even once. Further, the determination is made on the basis of the lubrication characteristics of the solid lubrication coating film that has already been applied. Therefore, the standard of "the casing size for three or more times" used in the specifications and the like of API-5C5 and ISO 13679, or the like is not used. Similarly, the characteristics are evaluated on the premise that the characteristics are checked by an actual well simulation evaluation.

Regarding the repair of the light galled part, for example, the galled part is limited to galling of a crest part, and galling of the seal part is excluded.

The repair is performed to secure lubrication again after curing the galled part using a grinder, a file, paper, or the like. Specifically, the chemical agent of this disclosure is applied on a region including a galled position and only the vicinity thereof or over the entire surface.

A further increase in the number of times of make-up by once or more times from a galling state is regarded as good (pass). Moreover, an additional increase in the number of times of make-up/break-out as it is by once or more times (twice or more times in total) is considered to be better. Regarding the evaluation of the repair of this lightly galled part, the evaluation is performed on the premise that the evaluation method is checked by the above-described new evaluation method in which an actual well can be simulated.

In this simulation, a situation is intentionally created in which after the make-up/break-out is performed once at the actual well simulation, physical damage is applied, and the damaged part is cured with a grinder, a file, sandpaper, or the like. Thereafter, the chemical agent of this disclosure is applied to perform a touch-up repair.

### (Regarding target early drying property)

In this disclosure, an aqueous solvent is employed, but early drying of the applied chemical agent is intended by the following. That is, volatility of lower alcohol and ammonia is utilized, and a formulating range and a size of the metal soap and the black lead are controlled. Moreover, a measure is taken to prevent the metal soap and the black lead from forming a lump. In addition, a change or the like in a method of taking the solid lubricant into the binder resin is performed.

The level of early drying is determined based on two criteria.

The first criterion is a criterion about whether or not it is possible to achieve quick drying as compared with the case where the above-described measures are not taken. When drying is performed by leaving a drying target in the atmosphere, comparison is made between cases of drying performed by leaving a drying target in the atmosphere, and when air blow drying is performed, comparison is made between cases of air blow drying, in which a goal is early drying. The place and position to be compared are also evaluated at equivalent positions.

The second criterion is whether or not drying can be performed within 5 minutes, more preferably within 1 minute in drying (non-heating) by blowing air. In drying at an ambient temperature when a drying target is left outdoors or indoors, a goal is to perform drying within 30 minutes or less, desirably 15 minutes, and more desirably 5 minutes. The drying as used herein means a semi-cured level or a cured dry level beyond a touch dry level. Further, the paint terms such as touch dry and semi-dry are defined in accordance with JIS K5500-2000. However, air blowing in an atmospheric environment without heating is examined in this disclosure, based on a result of checking in an environment of 14 to 18°C.

Specifically, when an application amount to a metal surface is set to 0.1 g/mm² or less, it is preferable to have an appropriate early drying property enabling drying to be performed within 30 minutes at an ambient temperature when the applied metal surface is left to dry in the atmosphere. The early drying property is at a level that can be achieved by the group of parameters defined in this disclosure, including the following detailed description. When the early drying property can be achieved, drying can be performed earlier by air blow drying or hot air drying.

In this disclosure, a coating agent prepared to have a low viscosity and high fluidity is used.

Regarding the evaluation positions, when an aqueous coating material based on the aqueous acrylic binder resin is applied on the connection for oil country tubular goods which is laid on a side thereof, a liquid tends to drip along a thread groove and accumulate at the 6 o'clock position. Therefore, since the drying of the part tends to be slightly delayed, drying is compared between places for the comparative evaluation which are from 9 o'clock to 3 o'clock positions. In a case of a pin connection, when the connection for oil country tubular goods is erected and applied with the coating agent, a dripping material drops to the ground as it is so that there is no particular accumulation. However, a droplet-shaped sag may be formed at a front end of the pin. In that case, a drying time is evaluated excluding the part. In a case of a box connection, a dripping material drops downward as well. However, in a case of a premium joint, accumulation at a step of a shoulder part may not be zero, and the drying time is discussed excluding that part.

In addition, a part cured at an actually galled place has a physical dent or the like, and the chemical agent of this disclosure is applied also for the purpose of filling the part. Therefore, only a dry state of a surface may be discussed. The drying time at an unproblematic position of the above-described positions is evaluated, and the early drying property is discussed.

The reason why the early drying property is required is that the coating agent and the solid lubrication coating film using the coating agent are assumed to be used for touch-up repair work due to other troubles such as light galling at a well site as the most severe conditions. Therefore, it is intended that the problematic position is scraped and fixed with a file, polishing paper, or the like, and then repair is performed with the coating agent of this disclosure. Repairing with the coating agent refers to filling a part to be repaired and ensuring lubrication. Therefore, on the premise that the coating agent can be used in a fire-prohibited state, and on the assumption that utilities related to drying cannot be used, early drying was intended to be achieved by undisturbed drying in the atmosphere and drying the coating agent by blowing air.

### (Regarding means for achieving early drying property)

In this disclosure, an aqueous solvent is used to achieve early drying by the following measures. That is, the volatility of lower alcohol and ammonia is utilized. In addition, a formulating range and a size of the metal soap and the black lead are controlled. Moreover, a change or the like in measure taken to prevent the metal soap and the black lead from forming a lump and method for taking the solid lubricant into the binder resin is performed. In this manner, the early drying is achieved.

Details thereof will be described below for each individual item, and the design concept of the coating agent will be described regarding the entire outline.

The chemical agents of this disclosure include a lower alcohol.

Regarding a lower alcohol content, the chemical agent is intended to be usable even in a fire-prohibited environment, and thus the concentration is adjusted so that the flash point of the chemical agent can be regarded as 60°C or higher or nonflammable. Accordingly, the volatility of the lower alcohol is utilized to achieve the early drying.

Further, the chemical agent of this disclosure does not use a thinner VOC. This is to cope with strict fire prohibition at the well site and to ensure safety and hygiene of workers and enable the workers to work without setting up exhaust facilities such as drafts.

Depending on a situation, the volatility of ammonia water is also utilized, and the concentration thereof is controlled within an appropriate range at a level at which the coating agent can be used without using a draft facility.

In addition, the concentration and the particle size of the contained metal soap and black lead are controlled within appropriate ranges to realize the early drying. Specifically, a size having a small average particle size is selected, and the concentration thereof is adjusted to an appropriate amount. In this manner, the total surface area of the solid lubricant is gained, and volatilization of lower alcohol and ammonia is utilized to form a film early.

The size (average particle size) of each of the metal soap and the black lead is 5 µm or less, and preferably 1 µm or less. This results in an increase in surface area of the solid lubricant to enhance drying. At the same time, it is possible to reduce damage to the solid lubrication coating film, which is likely to be broken from an interface between the binder resin and the metal soap and the black lead at the time of the make-up/break-out. When the size is more than 5 µm, there may be a situation in which the solid lubricant is distributed penetrating the film at a vertical wallshaped part where the solid lubrication coating film tends to be thin, and therefore the solid lubrication coating film is easily broken. Examples of the vertical wall-like part include a part of a stabbing flank and a load flank.

In addition, gathering of each soap of the metal soaps or the black leads results in forming lumps in the dissolution of the solid lubricant, and thus a measure needs to be taken to prevent an apparent size of the lumps from becoming larger than the individual size. In order to avoid the formation of the lumps, the metal soap and the black lead are used by once dissolving the metal soap with the lower alcohol and then mixing the metal soap with a solvent composed of water or a mixed liquid of an aqueous polymer.

The metal soap also serves as a main component of the lubricant. Similarly, the black lead serves to support the lubricant and also plays a role of filling a dent part formed on the repair surface at the time of the touch-up repair.

By preparing the coating agent to have a viscosity of 1,000 mPa·sec or lower, the chemical agent is prepared not to be applied thickly. In short, the chemical agent is intended to have a low viscosity and a smooth liquid viscosity. The lower limit of the viscosity is not set but is about 40 mPa·sec or higher. When a water-soluble or water-dispersible polymer material is added and formulated into a water-soluble agent, the viscosity of the chemical agent is not 1 mPa·sec which is the viscosity of water, and the viscosity becomes high. As a result, the level is approximately 40 mPa·sec or higher.

### (Basic Composition of coating agent for supporting lubrication or repairing lightly galled part)

The chemical agent is mainly composed of a solid lubricant, a binder resin, and a solvent that does not remain on the coating film after the chemical agent is applied.

The solvent is composed of water as a main component. One or two or more kinds of lower alcohols having three or fewer carbon atoms were further added to the water as an additive. Depending on a situation, ammonia water may also be added as the additive.

The additive accounts for 10 or less in terms of 100 set as the volume of water. In addition, the total volume of water and the additive accounts for 95% (vol/vol%) or more of a total solvent volume.

The main components of the solid lubricant are black lead and metal soap. Regarding the main component, a total weight of the black lead and the metal soap accounts for 95% or more of the weight of all solid lubrication components.

The binder resin contains a water-soluble or water-dispersible polymer as a main component. Regarding the polymer, a polymer or a copolymer composed of a monomer classified as acrylates and methacrylates accounts for 90% or more of the weight of all binder resin components.

As described above, in this disclosure, the basic composition is composed of the solvent composed of water as a main component, the solid lubricant mainly composed of black lead + metal soap, and the binder resin composed of a polymer composed of a monomer classified as acrylates and methacrylates and a copolymer thereof, as a main component. The term, main component, means 95% or more, 95% or more, or 90% or more in each component unit. In short, the term means that mixing with slight impurities, unavoidable mixtures, or nasal drops is acceptable.

When the criteria are not satisfied, the stability of the film formed by the application of the chemical agent deteriorates, and thus the properties expected by this disclosure may not be realized. Further, in a state of the film, the solvent including alcohol and ammonia volatilizes and evaporates and does not remain in the film.

The Polymer itself composed of a monomer classified as acrylates and methacrylates becomes a dry film (matrix). The film is a film which homogeneously holds the solid lubricant composed of the metal soap and the black lead in the film (matrix). A part of the solid lubricant adheres to a surface layer of the film (matrix), or a part of the solid lubricant is embedded in the film (matrix) and a part thereof is exposed to the surface.

Further, the lower alcohol and ammonia are contained for homogeneous dissolution of the metal soap and early drying of the film by utilizing the volatility. This will be described in detail again below.

### (Formulating proportion of binder resin, solid lubricant, and water)

In this disclosure, regarding formulating proportion of the binder resin, the solid lubricant, and water, the binder resin (water-soluble or water-dispersible polymer), the solid lubricant (metal soap and black lead), and the solvent composed of water as a main component as a solvent have preferably the following values as respective lower limit values. That is, the lower limit values are preferably 30% or more, 10% or more, and 40% or more, respectively. In addition, the upper limit values are preferably adjusted to 40% or less, 20% or less, or 50% or less, respectively. Further, the coating agent is prepared such that a total of the limit values of the components becomes 100%.

Water has no environmental issues. For this reason, water is selected as a main component of the solvent. Water as the solvent volatilizes and evaporates to come out of the film when the film is formed.

In order to achieve an early drying property of the film, a small amount of water is considered to result in easy drying. However, this is not the case in practice. When the amount of water is small and the viscosity is too high, it is rather difficult to dry in many cases.

In this disclosure, the solid lubricant having the following amounts and sizes and volatile but less problematic lower alcohol and ammonia water are used. Nevertheless, the most important is that the chemical agent can be applied thinly.

Therefore, although details will be described below, a measure is taken for thin application by reducing the viscosity of the coating agent to have good fluidity. Therefore, in this disclosure, in order to lower the viscosity, it is preferable to add 40% or more of water as described above.

At the same time, the water content is an amount satisfying an amount sufficient to contain a necessary amount of the water-soluble or water-dispersible polymer. The upper limit of water is set to 50% or less because the binder resin itself becomes too thin and the viscosity becomes too low to apply a necessary amount of the chemical agent when the water exceeds the upper limit.

The water-soluble or water-dispersible polymer refers to a polymer composed of an aqueous acrylic (methacrylic) resin as a main component. Preferably, the polymer is prepared by 30% or more and 40% or less.

This range is defined in order to ensure the early drying property by setting the viscosity in an appropriate range, to mix and hold the solid lubricant into the binder resin film, and to position the solid lubricant as a single material to adhere to the surface side of the solid lubrication coating film. When the polymer content is less than 30%, the liquid viscosity of the chemical agent is too low to increase the fluidity, and the solid lubrication coating film becomes thin so that the lubrication characteristics of the film cannot be maintained. When the polymer content is more than 40%, the viscosity of the chemical agent increases, and there is a high possibility that the film will become locally thick depending on how the film is applied and cannot achieve the early drying property. In addition, a film having unevenness may be formed, and the lubrication characteristics may deteriorate.

The solid lubricant contains the metal soap and the black lead as main components, and the metal soap is the main component. That is, the metal soap is contained in a larger amount than the black lead.

The reason why the content of the solid lubricant is set to a preferable range of 10% or more and 20% or less is that the range is also an appropriate range set for simultaneously satisfying complex factors. The reason why the content is 10% or more is that the target lubrication cannot be achieved unless the solid lubricant is added more than necessary. In addition, at the same time, this is because an effect of promoting the early drying by securing the surface area and the amount of the solid lubricant to be described below is expected. In addition, the reason why the content is set to 20% or less is to avoid adverse effects due to an excessive amount of black lead. This is because when the content exceeds the range, depending on an amount of aqueous acrylic, the secondary product formed at the time of lubrication is formed into a tape shape, and the fragments thereof clog the thread gap, and the secondary product is highly likely to cause galling. At the same time, there is a high concern that the black lead may form lumps due to the gathering, and the lubrication itself may deteriorate or the black lead may not be properly mixed into the aqueous solvent.

Here, since the solvent does not volatilize, the solid lubricant and the binder resin remain as a solid lubrication coating film on the thread surface.

Hence, in order to realize the properties as the solid lubrication coating film, on the premise that the solid lubricant can be dissolved in the solvent composed of water as a main component, it is important to perform preparation in which a weight ratio between the binder resin and the solid lubricant as a weight ratio of the solid lubricant to a weight of the binder resin is set to a range of 0.25 to 0.66. More desirably, the weight ratio is preferably in a range of 0.3 or more and 0.5. This proportion results in the formation of a solid lubrication coating film on the threaded surface.

In order to uniformly disperse and dispose the solid lubricant in the binder resin, there is a limit value regarding improvement of the lubrication. If the amount of the solid lubricant is too large, the solid lubricant is not completely put in the film but merely adheres to the surface, and this is disadvantageous for sufficiently achieving improvement in lubrication. Hence, the upper limit of the preferred range is 0.5. Conversely, when the amount is too small, the solid lubricant necessary for lubrication is insufficient, and a target lubrication level cannot be maintained. Thus, the preferred lower limit is 0.3.

### (Utilization of lower alcohol and utilization of ammonia water)

As a solvent component other than water, one or two or more kinds of lower alcohols having three or fewer carbon atoms are added in an amount of 0.5 or more and 10 or less in terms of 100 set as the volume of water. Further, the ammonia water can be added in an amount of 0 or more and 5 or less with respect to 100 set as the volume of water.

The lower alcohol having three or fewer carbon atoms is preferably one or more kinds of lower alcohols selected from methanol, ethanol, isopropyl alcohol, normal propyl alcohol, and industrial ethanol.

The lower alcohol is one means for promoting the early drying. The chemical agent of this disclosure is assumed to be used at the time of touch-up repair at a well site. Therefore, under the most severe conditions, the chemical agent needs to be used even when fire is strictly prohibited. In addition, in consideration of safety and health for workers, it is preferable not to use a thinner organic solvent represented by toluene, xylene, and benzene and to prevent the chemical agent from having a low flash point. Therefore, a lower alcohol having three or fewer carbon atoms is used.

As will be described in detail below, in order to make the chemical agent have a flash point of 60°C or higher or be nonflammable, it is necessary to adjust the flash point of the chemical agent to be high by limiting the upper limit of the concentration of the lower alcohols.

The lower alcohols have a flash point of 10 to 15°C and a boiling point of about 65 to 100°C when each lower alcohol has a composition of 100% as a single alcohol. Therefore, the lower alcohols need to be prepared to be mixed with water as a solvent, a binder resin, or a solid lubricant so that the chemical agent has an appropriate flash point. Accordingly, it is dangerous in a fire-prohibited environment to mix a large amount of lower alcohols to promote the early drying of the chemical agent.

The definition of the lower limit (0.5 or more in terms of 100 set as the volume of water) means the minimum at which the volatility can be utilized. The definition of the upper limit (10 or less in terms of 100 set as a volume of water) is set as a possible upper limit for the adjustment of the flash point.

Ammonia water may be added to adjust pH to a pH at which the aqueous polymer can be stably present. Therefore, the ammonia water is added to reach the upper limit range of the pH range defined by each aqueous polymer, and volatilization of ammonia can be further utilized. The reason why the upper limit of addition of ammonia water is set to 5 or less in terms of 100 set as the volume of water is as follows. That is, the upper limit value is practically set so that only about 5 or less is added. Usually, the upper limit is often 1 to 2 in terms of 100 set as the volume of water.

In this specification, ammonia water is expressed as concentrated ammonia water (containing ammonia 28 to 30%). When thin ammonia is used, a ratio that is reassigned and defined is read as a formulating proportion of concentrated ammonia water.

In addition, the lower alcohol having three or fewer carbon atoms refers to methanol, ethanol, isopropyl alcohol, normal propyl alcohol, and industrial ethanol. Alcohol having four or more carbon atoms is not used because the solid solubility with water is slightly lowered.

At the same time, the lower alcohol has a role of formulating the metal soap, which is a solid lubricant, such that the metal soap does not form a lump, by avoiding the gathering of the metal soap with a size maintained from the time of addition.

When the metal soap is simply dissolved in water, the metal soaps are not mixed in water and gather each other to form lumps due to the water repellency. Despite of an attempt to mix the metal soap having a particle size equal to or less than a defined value with the chemical agent, the metal soap is not sufficiently dispersed when directly mixed with water. Therefore, even in the state of a film, the metal soap is not uniformly taken into the binder resin, and the film has an inclination, and the inclination is not good for lubrication. Therefore, a method of mixing a mixture having a state in which the lower alcohol and the metal soap are mixed, in a dispersion liquid of a water-soluble or water-dispersible polymer and water has to be employed. In this case, it is necessary to adjust the concentration of the lower alcohol and the content of the metal soap to fall within the ranges defined by this disclosure.

### (Regarding black lead and metal soap of solid lubricant)

The black lead has an average particle size of 5 µm or less, and the metal soap has an average particle size of 5 µm or less.

In addition, in the solid lubricant, the black lead has a weight ratio of 0.5% or more and 5% or less, and the remaining main component is the metal soap. At the same time, the alkaline soap can be contained to an upper limit of 1%.

In this disclosure, lubrication is mainly provided by the metal soap and further improved by the black lead. The alkaline soap can also be expected to have a lubrication improving effect. However, as an additional effect brought about by the alkaline soap, the alkaline soap has the following functions. That is, the alkaline soap serves effectively to guide the pin connection and the box connection to slide from initial misalignment of the meshing position to the normal meshing position. The alkaline soap is particularly effective in a situation where there is some moisture. Additionally, the alkaline soap has an effect of causing the crest to slide to a normal thread meshing position even in a situation where the crest is wet in a situation where there is rainfall or backflow from a well.

Defining the size of the solid lubricant is one of the means for promoting the early drying. In particular, the metal soap and the black lead which are solid lubricants and insoluble in water increase a contact surface area with the solvent, when the particle sizes thereof are small, and thus the early drying is achieved together with utilization of the volatility of the lower alcohol and the ammonia.

The smaller the particle size of black lead and metal soap, the better. The size is preferably 1 µm or less. When the particle size exceeds 5 µm, a solid lubricant is produced at the same level as the film thickness of the solid lubrication coating film. In addition, when the metal soap and the black lead are not embedded within the film thickness, the film is caused to be easily broken at the time of make-up/break-out of the connection for oil country tubular goods. From this viewpoint, the particle size needs to be 5 µm or less. In this disclosure, as will be described below, the film thickness is defined in a preferable range of 10 µm or more and 100 µm or less. When the particle size of the black lead and the metal soap is 5 µm or less, desirably 1 µm or less, it is possible to reduce the concern that the film will be easily broken at the time of make-up/break-out of the connection for oil country tubular goods.

As described above, the solid lubricant is mainly composed of the black lead and the metal soap. However, if the content is less than 5%, impurities other than the black lead and the metal soap may be mixed as the solid lubricant. For example, BN (boron nitride), mica, talc, melamine cyanurate (MCA), polytetrafluoroethylene (PTFE), and an alkaline soap group do not interfere with the effect of the invention intended by this disclosure as long as being contained in a trace amount.

### (Measures for preventing formation of tape-shaped secondary product)

The tape-shaped secondary product tends to be formed at the time of make-up/break-out due to the addition of the black lead. The source of the tape-shaped secondary product is a structure formed of the black lead elongating along the thread groove, as a main component. When the tape-shaped secondary product made of black lead is formed to elongate and clogs somewhere of the thread gap such that the addition of black lead results in cancelling the lubrication improving effect, there is a high concern that galling may occur.

Since the black lead is dispersed in the binder resin, a tendency of structurally forming the tape-shaped secondary product cannot be denied. However, galling is avoided by changing the tape shape into a peeled off piece shape, a broken piece shape, or a powder shape.

The black lead is deformed, similarly to each playing card which slides sideways when the stacked playing cards are pressed and caused to slide by fingers. However, when the black lead is present in the binder resin, the binder resin is combined with the black lead and firmly connected to the black lead and is formed into a tape shape, as the black lead content in the film increases. This is the main cause of galling. Small distances between black leads (low density of black lead) and a large size of individual black leads result in an increase in length of the tape-shaped secondary product. Hence, the concentration of the black lead of this disclosure needs to be 0.5% or more and 5% or less in terms of the weight of the total solid lubricant. The lower limit is a value suitable for utilizing the lubrication improving effect of black lead. The upper limit is a value suitable for inducing the tape-shaped secondary product to have a flaky shape or a powdery shape. The concentration of 5% or less is defined based on an experimental result, but it can be estimated that even if individual black leads are deformed, it is difficult for the black lead to be connected to each other to form a long tape shape. When the concentration exceeds 5%, the amount of the tape-shaped secondary product derived from the solid lubricant in the binder resin and the amount of black lead having a shape in which the black lead adheres to the surface without being taken into the binder resin may be too large. Therefore, the tape-shaped secondary product is formed only from the black lead, and as a result, a strong tape-shaped secondary product may be formed. Accordingly, at the time of the make-up/break-out, it is unavoidable that the secondary product clogs the thread gap and causes galling.

Furthermore, the black lead has a size of preferably 5 µm or less. The tape-shaped secondary product is formed in a case where the individually elongated black leads are connected to each other at the time of the make-up/break-out and a case where the size of the individual black lead is larger than 5 µm, and the tape-shaped secondary product has the following tendency. That is, a shape formed by elongation of a large black lead as a single substance tends to be extended to form a long tape structure. When the particle size is set to 5 µm or less, such a state is suppressed. At the same time, it cannot be denied that the solid lubrication coating film is considered to have a thickness of about 5 µm in a thin part. Therefore, when the size of the black lead is larger than the film thickness in a local part, the solid lubrication coating film itself is easily broken starting from an interface between the binder resin and the solid lubricant at the time of the make-up/break-out. Accordingly, the particle size set to 5 µm or less means to avoid such a state.

In addition, the reason why the size of the metal soap is defined as preferably 5 µm or less has also a meaning to avoid that the solid lubrication coating film itself is likely to be broken, similarly to the black lead.

At the same time, since both the metal soap and the black lead are fine structures, a contact area with the solvent increases, and thereby the drying points increase. Therefore, the particle size of 5 µm or less also contributes to the early drying.

In this disclosure, there are a case in which metal soap or black lead individually or in combination thereof contributes to the lubrication and a case in which a solid lubricant distributed to be placed on a film is present. Adjustment is performed to have a concentration distribution as described above and the suitable size such that a tape-shaped secondary product mainly formed of the black lead is not formed. In order to achieve such a state, the compounding definitions of the weights of the binder resin of the aqueous polymer (acrylic), the solid lubricant, and water are set to 30% or more, 10% or more, and 40% or more, respectively, as the lower limit value with respect to the weight of all the constituent components. In addition, the upper limit values were set to 40% or less, 20% or less, or 50% or less, respectively.

What is important is that the solid lubricant is 10% or more and 20% or less with respect to the total weight of the chemical agent. Accordingly, most of the solid lubricant is made of the metal soap rather than the black lead, and the amount of the black lead is adjusted to an amount equivalent to 0.5% or more and 5% or less with respect to the weight of the total solid lubricant (containing: alkaline soap). The lower limit is set to 0.5% to maintain high lubrication without forming a tape-shaped secondary product as described above. In addition, at such a level, the black lead can be homogeneously mixed into water as a solvent. The upper limit of 5% or less is to avoid adverse effects due to an excessive amount of black lead. This is because when the weight exceeds the values, there is a high concern that lumps may be formed due to the gathering of black lead particles, the black lead cannot be properly formulated in an aqueous solvent, or a tape-shaped secondary product is remarkably generated.

### (Water-soluble or water-dispersible polymer constituting binder resin)

The water-soluble or water-dispersible polymer constituting the binder resin is a polymer composed of a single monomer of the following (1) to (4) or a copolymer composed of two or more monomers.
(1) Monomers including acrylates, methacrylates and individual derivatives of acrylates and methacrylates, as main components
(2) Monomers combined with monomers including alkyl ester, vinyl ester, styrene ester, carboxylic acid ester, and individual derivatives of these esters and acrylates and methacrylates, and individual derivatives of acrylates and the methacrylates
(3) Monomers grafted with respect to the above-described (1) and (2)
(4) Monomers in which one or both monomers of any one of a vinyl compound and a urethane compound are integrally formed with at least one or more monomers of (1) to (3)

In this disclosure, a water-soluble or water-dispersible polymer is used as the binder resin. In this disclosure, it is naturally conceivable that a film is formed after water is removed (after vaporization and evaporation). Therefore, in a narrow sense, the binder resin refers to a synthetic polymer. Pectin, agar, starch-based materials, cellulose-based materials, and natural gums (alginic acid-based) materials which are well known as natural polymers are excluded. In addition, at a stage of drying (water has been removed), materials that retain semi-dry wetting are also excluded. Further, when carbon steel is coated with a material that is not completely dried, there may be a risk of inducing corrosion.

Specifically, in this disclosure, as a substance corresponding to a water-soluble or water-dispersible polymer, a polymer composed of one polymer and a copolymer composed of two or more monomers are included. The individual monomers correspond to the monomers of (1) to (4) described above. The polymer includes at least one polymer from (1) to (4), or one or both of copolymers composed of two or more monomers which are composed of a polymer forming a copolymer with another compound. The other compounds refer to maleic acid, sulfonic acid, styrene, carboxylic acid, and salts thereof, and monomers thereof. Polymers and copolymers containing acrylate and methacrylate in the basic structure are regarded as monomers classified as acrylates and methacrylates.

The acrylate (acrylic) resin was selected, because the acrylate resin is a chemical agent that is commonly available and an aqueous polymer is easily made from the acrylate resin. In addition, the acrylate resin is widely used, is registered as many kinds of chemical agents in the rules of chemical agents in each country, and is easy to use. Preparation of the acrylate and the solid lubricant in accordance with appropriate regulations enables to obtain a coating agent that has the early drying property and can be used to support the lubrication and repair the lightly galled part.

In the chemical agent of this disclosure, the binder resin is dissolved in a solvent that is mostly composed of water. Accordingly, the coating agent is applied, and water is removed, that is, evaporated and vaporized, to form a film. Further, there is a basic principle of considering the environment. Therefore, design is performed without using heavy metals including lead and a material containing an alkyl group containing fluorine of a group called PFAS, which have recently become a problematic issue.

It is desirable to use a polymer containing 95% or more of monomers classified as acrylates and methacrylates or a copolymer thereof at a stage of finally forming a film. Further, a polymer obtained by copolymerizing monomers including acrylate and methacrylate and another monomer at the time of copolymerization is regarded as an acrylate polymer and a methacrylate polymer and satisfies the definition of 95% or more. The ratio set to 95% or more means that most of the polymer is composed of the acrylate polymer or the methacrylate polymer. In addition, this also means that less than 5% of another polymer is allowable to be contained. Substantially, the copolymer is composed of approximately 100% of an acrylate or methacrylate polymers in reality.

### (Kinds of metal soaps and alkaline soaps)

The metal soap and the alkaline soap include a combination of one or more higher fatty acids and a metal element (metal ion). Each metal soap is preferably a compound composed of a fatty acid selected from the following A group and a metal element (metal ion) selected from the B group. Each alkaline soap is preferably a compound composed of a fatty acid selected from the A group and a metal element (metal ion) selected from the C group.
A group: stearic acid, behenic acid, lauric acid, 12-hydroxystearic acid, oleic acid, montan acid
B group: Mg, Ca, Zn, Ba, Al
C group: Na, K

The metal soap of this disclosure is utilized as a solid lubricant. The metal soap of this disclosure is not used as a thickener that increases the viscosity of an oil-based solvent. When the particle size of the metal soap is 5 µm or less, the metal soap can be used as a solid lubricant.

In a case where the lubrication condition is not good due to lubrication of the connection for oil country tubular goods, a lubrication part may generate heat, and thus it is preferable that the formed solid lubrication coating film has a high melting point. The melting point of the solid lubrication coating film is preferably a melting point of 100°C or higher, and in the above-described preferred case, this condition can be satisfied.

On the other hand, it is preferable to actively add the alkaline soap (Na salt and K salt of fatty acid) up to 1% or less, including a case where the alkaline soap is not contained. When the alkaline soap is added to the aqueous polymer, the viscosity of water is increased, and there is a concern that the drying may be performed for a long time. In addition, application is not easily performed, and there is a possibility of uneven application. On the other hand, alkali metals improve lubrication characteristics. The alkali metal itself is effective as the solid lubricant, and the initial meshing position of the pin connection and the box connection unavoidably becomes as illustrated in FIG. 5 at an actual well. However, when the make-up is started with a power tong, the soap is effective to guide the threads to slide into the regular meshing position and thus contributes to improving the lubrication characteristics. As is experienced in daily life, the alkaline soap has a slipping viscosity when there is a little moisture, and thus the effects described above are easily realized.

### (Flash Point)

It is preferable that the flash point of the chemical agent is 60°C or higher, or preferably the flash point is 150 °C, and preferably the flash point cannot be measured and is considered nonflammable.

When a touch-up repair is assumed at a well site, a case of use in a fire-prohibited environment can be assumed. First, an ambient temperature at which the application is performed is assumed to be about at a temperature range of -50 to +50°C. With a margin, the chemical agent can be assumed to be used at a temperature range of -60 to +60°C. In addition, the highest temperature as a current temperature of a well bottom is exceptionally assumed to 250°C, and 150°C may be assumed as the highest possible temperature that is the temperature of the well site after heat transfer. Therefore, the temperature range was set as described above. In order to reduce a risk to zero, the flash point of the chemical agent is set not to be measured and be classified as nonflammable. The flash point can be adjusted by the selection of the lower alcohol and the formulating proportion thereof.

### (Viscosity and application method of coating agent)

The coating agent preferably has a viscosity of 1,000 mPa·sec or lower.

Setting of a low viscosity of the chemical agent is one of means for promoting the early drying. In addition, the viscosity of the coating agent is lowered to increase the fluidity, thereby preventing the coating agent from being physically thickly applied, and the thickness thereof is reduced. As the means for achieving the early drying, it is preferable to set the viscosity to 1,000 mPa·sec or lower. It is also possible to take a measure to form a thin film by handling such as brush coating. However, since individual differences occur, it is preferable to employ a method of lowering the liquid viscosity to increase the fluidity and make the liquid thin. In addition, since the viscosity is low, it is easy for the chemical agent to enter a partial touch-up repair part, and it is also effective for repair for filling the part.

According to such a definition, it is possible to avoid an inadvertent thick film at the time of coating. As a result, the low viscosity can contribute to early drying. The lower limit of the viscosity is not set but is about 40 mPa·sec or higher. When a water-soluble or water-dispersible polymer material is added and mixed into an aqueous solvent, the viscosity of the chemical agent is not equal to the viscosity of water: 1 mPa·sec. The viscosity tends to increase due to the influence of the polymer material. Therefore, the level is approximately 40 mPa·sec. Setting of the viscosity of the coating agent to 1,000 mPa·sec or lower makes it difficult to perform recoating or thick coating. Accordingly, there is an advantage that the coating film can have a uniform and thin thickness. Adjustment of the viscosity is achieved by adjusting the amount of water, the selection of monomers constituting the aqueous polymer, the concentration of metal soap or alkaline soap, and the formulating proportion including the solvent.

On the other hand, since the viscosity of the coating agent is 1,000 mPa·sec or lower, the viscosity is low, and the coating agent easily flows. The slower the drying, the more the coating agent at an undried part drips, and when the oil country tubular goods are laid horizontally and coated, the coating agent solution tends to accumulate at the 6 o'clock position in terms of a clock. A thick film tends to be formed unintentionally at the part. Therefore, even when the 12 o'clock position is dried and the film is formed, only the 6 o'clock part where the liquid accumulates may not be dried within the above-described time. Hence, preferably, 0.1 g/mm² or less of the coating agent is used for coating. Furthermore, it is preferable that the application amount is set to be dried within 30 minutes in an environment of being left in the atmosphere at an ambient temperature, and it is preferable that the coating amount is set to be dried within 3 minutes by air blowing drying performed by blowing air at 1 m/sec or more. This is a suitable range to avoid an undried state at the 6 o'clock position.

Any method of applying the chemical agent is allowed including brush coating, spray, immersion, manual coating, machine coating, and the like. After the coating is performed by actively utilizing the tendency of dripping, a step of directing an object coated with the coating agent downward or inclining the object obliquely may be performed so that the coating material flows down. In addition, a tubular coating target is preferably coated with a brush or a spray while turning rather than is stationary and is coated. In this manner, drying is also enhanced. Additionally, a remaining amount of the coating agent that has not been formed into a film results in uniform recoating of the metal surface and supporting for forming an even film while the tubular coating target turns. In addition, it is also possible to avoid accumulation at the 6 o'clock position.

### (Method for performing partial repair and method for improving lubricity by performing application on existing solid lubrication coating film)

As the conditions of the coating agent, details of the conditions defined in the above-described conditions are employed.

When light galling occurs in the crest region of the threaded joint for oil country tubular goods, the galled part is cured using a grinder, a file, paper, or the like. After curing, the part is repaired with the chemical agent to ensure lubrication again. Therefore, it is possible to perform partial repair by applying the coating agent to a region including the galled position and only the vicinity thereof or the entire surface thereof. The threaded joint for oil country tubular goods with the lightly galled part repaired at the crest region can be improved again so that the make-up/break-out can be continued once or more times.

Alternatively, in order to improve lubrication of a threaded joint of other oil country tubular goods, the chemical agent of this disclosure may be applied onto an existing solid lubrication coating film (which has never been made up and broken out). In this case, as compared with a case where the coating agent of this disclosure is not applied, it is possible to improve the lubrication characteristics so that the make-up/break-out can be performed once or more times.

### (Characteristics as film: Film thickness)

It is preferable that the solid lubrication coating film formed using the above-described coating agent has a film thickness of 10 µm or more and 100 µm or less, and the formed solid lubrication coating film has a soft film hardness of B or less in terms of pencil hardness.

The film thickness is a film thickness at a stage when the chemical agent is dried and forms the solid lubrication coating film. The film thickness is identified, for example, by observing, with a microscope, each cross section obtained by cutting the thread portion at four points (for example, four positions at every 90 degrees) in a circumferential direction of the thread portion in a longitudinal direction. In the observation, each film thickness at the thickest part and the thinnest part of the coating film is identified. Accordingly, checking is performed whether each film thickness is within the above-described range.

Further, when the tendency of a film thickness distribution is grasped from the past measurement results, the film thickness may be estimated as follows. That is, when the method for applying and drying the chemical agent is the same, it is also possible to estimate the maximum value and the minimum value of the film thickness at the entire thread portion by measuring a film thickness at a predetermined specific region with an electromagnetic film thickness meter.

The meaning of the film thickness is different between a case where a solid lubrication coating film is formed by the chemical agent of this disclosure at the time of partial repair and a case where a solid lubrication coating film is formed by the chemical agent of this disclosure on a solid lubrication coating film that has never been made up and broken out to achieve overall lubrication improvement. Here, the film thickness of 10 µm or more and 100 µm or less defined as a preferable range in this disclosure refers to the following meaning. That is, in the former case, the film thickness means a film thickness applied to a still intact part other than a portion repaired due to damage. In the latter case, the film thickness refers to a film thickness indicating how much the solid lubrication coating film has been further applied from the already existing solid lubrication coating film. The coating material thickness intended to fill the scraped touch-up part is excluded from this film thickness discussion.

Originally, a uniform film thickness of about 10 µm to 50 µm is sufficient to realize lubrication. However, when a chemical agent having the viscosity as described above is applied, the viscosity is small, and thus the coating material that cannot be formed into a film tends to move while dripping even when the drying is enhanced or the application amount is controlled to be low. However, the film thickness is defined as a thickness of the crest (crest portion) for both the pin connection and the box connection. Since it is only the region which can be checked non-destructively, that is, can be touched by a probe, the region is set as a film thickness measurement point.

The lower limit of 10 µm or more is also related to the fact that the size of the black lead or the metal soap of the solid lubricant is set to 5 µm or less. When a load or a torque is applied to the thread portion at the time of make-up/break-out of the connection for oil country tubular goods, there is a high concern that the solid lubrication coating film of this disclosure will be destroyed in a case where the thickness is less than 10 µm. In addition, this is because improvement in lubrication is not achieved due to an insufficient absolute film thickness. The upper limit is set to 100 µm or less, because when the thickness exceeds the upper limit, on the contrary, there is a high concern that a peeled off piece or a powdery material scraped off at the time of make-up/break-out clogs the thread gap to promote galling rather than supporting and improving lubrication. When the thickness exceeds 100 µm, the film is scraped off during lubrication, and the peeled off piece tends to cause galling. In addition, there is also a possibility that the film may be peeled off thoroughly and cause galling.

In the case of a structure having a crest as in the structure of the thread for oil country tubular goods, it cannot be denied that the coating agent tends to further accumulate at a bottom part of the crest, particularly at the 6 o'clock position in terms of a clock. In addition, a corner part of a ridge of the crest structure tends to be thin due to the surface tension of the chemical solution.

### (Characteristics as film: Pencil hardness)

The formed solid lubrication coating film has preferably a hardness of H or lower in terms of a pencil hardness.

This is because the solid lubrication coating film of this disclosure intentionally has a soft film quality and realizes lubrication characteristics on the assumption that the solid lubrication coating film itself is slightly scraped when strongly abutted. The pencil hardness of the film is preferably soft as H or lower. In a case of a film having a high hardness exceeding H, when the black lead and the metal soap of the solid lubricant are put in, the film may be brittle and thoroughly removed by the impact at the time of make-up/break-out. Accordingly, when the destroyed film clogs the thread gap, there is a high concern of galling. The hardness is preferably soft, more preferably 2B or lower of the pencil hardness, still more preferably 4B or lower of the pencil hardness.

Further, the film hardness is measured by pencil hardness. The measurement method is performed by a method specified in JIS K 5600-5-4 (1999). It is written in the JIS standards that this standard is a translation of the standard of "ISO/DIS 15184, Paints and varnishes - Determination of film hardness by pencil test". A test method of the pencil hardness of this disclosure is evaluated based on the JIS standard.

### (Evaluation method for lubrication)

This disclosure has been contrived for the purpose of partial touch-up repair and application onto an existing solid lubrication coating film (which has never been made up and broken out) to improve lubrication characteristics.

In evaluating the characteristics, lubrication is evaluated under the make-up/break-out conditions of the connection for oil country tubular goods along the make-up at the actual well. However, it is not realistic to evaluate the solid lubrication behavior of the connection for oil country tubular goods at an actual well or a simulated well from the viewpoint of cost and time for arranging an experiment.

As a new method for evaluating a condition close to an actual well condition, a weight corresponding to about one to three actual length pins is attached to an upper end portion of a short pin, and the initial set position of the connection is set in a state where about a half of the pin crests are exposed from the box connection. Accordingly, the weight is applied at the time of make-up, and the weight is not applied or an applied load is reduced at the time of break-out, thereby simulating the actual make-up at the actual well. Accordingly, in this evaluation, the upper and lower limits of parameters are determined according to actual conditions. Hereinafter, all of the evaluation methods including the application of the weight, whether or not the load is applied (load is ON at the time of make-up, and load is OFF to reduction at the time of loosening), and the initial set position will be referred to as evaluation with the weight tong.

The background thereof is that when determination is made depending on the evaluation performed by a horizontal power tong using a short pin having a length of about 1 m or the evaluation simply performed by a vertical power tong using a short pin, the evaluation may be wrong. That is, in the "evaluation of a solid lubrication coating film" which is a target of this disclosure, there is a possibility that the solid lubrication coating film will be erroneously evaluated as good. Therefore, the upper and lower limits of the parameters defined by this disclosure are not meaningful. Regarding the solid lubrication coating film, there is a case where the solid lubrication coating film is unavoidably damaged at the time of make-up/break-out. Therefore, the peeled off piece or the powdery peeled off object does not always move in conjunction with the make-up/break-out. Consequently, the peeled off piece clogs the thread gap to induce galling. However, in the evaluation using the short pin, since the short pin is less likely to be damaged, there is a concern that a defective pin in the related art is evaluated as good. Further, regarding lubrication by using a compound in the related art, since the compound is a viscous liquid-like compound, the compound moves in conjunction with the make-up/break-out. Therefore, there is no significant discrepancies between the evaluation result of the short pin and the evaluation at the actual well.

From the above description, regarding the lubrication evaluation of the solid lubrication coating film, it is necessary to perform evaluation by a new evaluation method contrived to simulate the actual well.

Further, in many pieces of past patent literature (literature numbers are not described in this disclosure), in a lubrication test based on a solid lubrication coating film, there are indications that the number of times of make-up/break-out can be up to 15 to 20 times even with a large-diameter size of 9-5/8" or 13-3/8". However, in the solid lubrication coating film having poor lubrication characteristics as compared with the grease-like compound, the number of times of the make-up/break-out described above is substantially impossible. Such states appear to be due to the evaluation using short pins and horizontal or vertical power tong, which is often found in laboratories. Such characteristics are then possible to be achieved. However, in the make-up/break-out at the actual well, in an example of a large-diameter oil country tubular goods using a solid lubrication coating film, a level of 15 to 20 times rarely occurs.

Based on the above-described idea, in the evaluation method in Examples, evaluation was performed by a weight tong test using the apparatus illustrated in FIGS. 6 and 7. The simulation is performed to evaluate the lubricity of the solid lubrication coating film by simulating a make-up condition as illustrated in FIGS. 3A, 3B, and 5 under a condition of simulating a make-up/break-out test that is conducted at an actual well or a simulated well.

What happens at the actual well is that due to the long length of the actual length pins, i.e. the length of about 40 feet (≈ 12 m odd), it is not possible to "set the pins perfectly straight" during initially setting. That is, the pin is inserted obliquely in most cases. The pin connection having the actual length cannot be set ideally straight, even with an attempt to set the pin connection straight either with the support of a stabbing guide or with the support of a compensator. The pin connection is set to be slightly obliquely inclined. It is not possible to actually find a position where the pin connection can be inserted into the box connection and set by further make-up by hand tight, and tightening can be performed until the crest of the pin is hidden by the box connection. The crests are partially abutted against each other on the way of moving, and the crests of the pin do not advance further in a state where five or more ridges or about a half of the total crests are exposed. FIG. 5 illustrates an example of such a case. Hence, at the beginning of the make-up with the tong, the pin connection and the box connection start to mesh at the normal position after several turns (up to about 6.3 turns in FIG. 3A) until the load is lifted. The connection for oil country tubular goods has a tapered structure (FIG. 5) like many threaded structures. Therefore, the thread can mesh at a stable position in the end (FIG. 3B). As illustrated in FIG. 5, in the enlarged view, circled parts are significantly damaged. That is, cracks, peeling, and the like always occur at a microscopic level. A pin connection 1a is set slightly obliquely. Therefore, in relation to a crest portion 2a of a box connection 2, a position hit by the pin connection tends to be significantly damaged near a front end of the pin connection 1a, the center of the crest of the crest portion 2a of the box connection, and a mouth of the crest portion 2a of the box connection. The vicinity of the center of the crest of the crest portion 2a of the box connection means both the vicinity of a position where the pin connection is inserted and is abutted against the box connection and the vicinity of the center of the pin connection 1a. The vicinity of the mouth of the crest portion 2a of the box connection is the vicinity of the mouth of the box connection 2 when the pin connection is inserted.

FIGS. 3A and 3B illustrate occasional rises of spike-shaped torque until several turns, that is, rise of steady torque, until reaching the stable position. Such behavior is directly linked to the fact that the pin connection and the box connection are irregularly abutted against each other, and thereby the solid lubrication coating film is damaged. Based on this, it is necessary to evaluate the lubrication of the solid lubrication coating film. When the threads are irregularly abutted against each other, the solid lubrication coating film is unavoidably scraped. Since the peeled off pieces and fragments do not necessarily move in conjunction with the make-up/break-out of the connection, the thread gap is clogged, and the clogging is a main factor of galling.

The initial set position of the pin connection cannot be set at a normal meshing position at which theoretically straight meshing appear to be performed. Therefore, rattling caused by such a state, the selfweight of the actual length pin, and an unbalanced load which is not uniform due to the superimposition thereof is applied to the part where the pin connection and the box connection first come into contact with each other. As a result of the large load and unbalanced load, the solid lubrication coating film unavoidably peels off or becomes powdery. Accordingly, the peeled off pieces and powdery substances clog the thread gap and cause galling. The effects were evaluated by a new labsimulated manner. In the "solid lubricant composition composed of the metal soap in which a small amount of black lead is contained" of the basic design of this disclosure, the tape-shaped secondary product caused by the presence of the black lead is likely to clog the thread gap at the time of the make-up/break-out. After simulating such state, it is necessary to clarify upper and lower limit definitions of parameters. If this is not done, the tests in the related art, which are often conducted in laboratories and are conducted with horizontal power tong and vertical power tong using short pins of about 1 m, are tests under mild conditions where the large load and unbalanced load are not applied. As a result, in a laboratory test in the related art, even one that fails at an actual well may be considered to be good. Hence, the definition of the parameters has no meaning.

FIG. 6 is an overall conceptual view of the test method, and FIG. 7 is an enlarged view of a part related to a weight. In a weight tong test, a vertical power tong 4 is used. Accordingly, the short thread 1 and the box connection 2 are fastened by the crests of the thread portion 1a of the pin and the crests of the thread portion 2a of the box. At this time, in order to simulate a situation where the crests do not mesh with each other, an initial temporary make-up position is set such that half of the total number of crests of the thread portion 1a of the pin are exposed from the box connection 2. This is one of the causes of rattling. The make-up is started from that state. At this time, a weight 3 is attached to an upper end portion of the pin 1 on the side opposite to a make-up thread of the box connection. A weight of the weight 3 is placed by being calculated as a load equivalent to one to three actual length pins, based on an actual length pin having an outer diameter and a wall thickness of the pin. In a case of 9-5/8" and 53.5#, one pin is about 1 ton (2,200 Lb), and a weight equivalent to connected three pins is about 3 tons (6,600 Lb). A weight equivalent to one pin is assumed to be a land well, and the weight equivalent to three pins is assumed to be the make-up at a sea well.

As illustrated in FIG. 7, the weight 3 is formed by joining an insertion rod 13 welded to a weight body 3A at an axisymmetric position of the weight. The insertion rod 13 is inserted into the pin 1, and the weight is mounted on the upper end of the pin 1. Through-holes 1d and 13a are formed in the pin 1 and the insertion rod 13 in advance, respectively. A penetration rod 12 is inserted and set in the through holes 1d and 13a in order to integrate the weight 3 and the pin 1. A swivel hook 11 is welded to an axial center position of an upper portion of the weight 3 and has a suspended structure from a ceiling suspension device 20 via a suspension chain 21. At the time of make-up, a weight load is applied to the box connection, and the box connection is made up at 5 to 20 rpm until torque rises. The initial temporary make-up position and the highspeed turns of the make-up/break-out are the simulation of rattling. Once the torque has risen, a turning speed is reduced to 0.5 to 2 rpm and make-up is performed to reach the make-up position.

As a simulation of a make-up/break-out test at the actual well, a load of the weight 3 may be applied or may not be applied particularly when loosening the make-up. At the time of break-out, it is preferable not to apply a load of the weight. When the break-out is performed while the load is applied, the weight becomes a "weight" or a balancer when loosened from a make-up completion position, and the weight is loosened similarly to a state where the straight pin connection is lifted. That is, this is because when the threads are broken out without rattling, the solid lubrication coating film is not damaged. Even when the load is not set to zero, the test may be performed by lowering the applied load by lifting the load. The test can be performed under conditions that violent rattling occurs when the load is loosened, including a case where the load is not completely set to zero, and the solid lubrication coating film is more likely to be damaged. Therefore, in the following evaluations, a total load was applied at the time of make-up, and the weight was suspended upward so as not to apply a load at the time of break-out such that the load changes from load zero to a load reduction.

Regarding the turning speed at the time of break-out, when the torque rises, the turning speed is started to be loosened to 0.5 to 2 rpm, and when the torque reaches about 1/10 of a make-up torque value, the turning speed is loosened to high speed turning of 5 to 20 rpm. In this example, the evaluation was performed by a method of separating the pin connection and the box connection from each other by the break-out after the break-out was finished, checking the respective surfaces thereof by blowing air to the surfaces to remove fragments and the like derived from the solid lubrication coating film, and continuing the make-up again.

Regarding the lubrication evaluation, whether or not the lubrication was achieved was determined in accordance with the following determination criteria by the method of using the weight tong described above.

In the case of the partial touch-up repair, an intentionally lightly galled sample was made, which will be described in detail below. Accordingly, a galled position was scraped with a grinder and paper and cured, and then a coating agent was applied. Accordingly, the determination was made based on whether or not the make-up/break-out was performed once or more. A re-galled sample was determined as a comparative example (NG), and a sample that could be continuously made up and broken out once or more to twice was determined as a pass. A sample that could be continuously made up and broken out three or more times was determined as a better pass.

In accordance with determination criteria for an example designed to improve the lubrication characteristics by applying a coating agent on an existing solid lubrication coating film (which had never been made up and broken out), an example where a film formed by applying a coating agent overall was applied and was made up and broken out continuously once or more to two times was determined as a pass, when compared with the case where the film was not applied. A sample that could be continuously made up and broken out three or more times was determined as a better pass. An example in which a coating agent was not applied and an example in which the number of times of make-up/break-out was the same or the number of times decreased were determined as a comparative example (NG).

In addition to the number of times of make-up/break-out, when the pin is completely loosened after the break-out, the pin is released to the upper portion, and the pin connection surface and the box connection surface are observed after air blowing to directly check whether galling occurs visually. At the same time, the torque-turn chart is checked, and the determination is made based on whether an abnormal point is observed.

### (Method for simulating generation of artificial galling)

In this disclosure, in order to describe the effects of partial touch-up repair, artificial galling was made as follows.

First, a special solid lubrication coating film for artificial galling was formed on the box connection. Specifically, 1/8 of an entire circumference of the box connection was masked with paper, and a chemical agent for a solid lubrication coating film was applied by spraying. Thereafter, pre-drying and then firing were performed to produce a box connection with a special solid lubrication coating film thereon. Further, even when masking was performed, at a boundary region, a sheer precipice-shaped structure is not formed with/without a film thickness, and a film is formed at the boundary of masking with a gradually decreasing film thickness of the unavoidable solid lubrication coating film. On the other hand, the masked center (near the center as viewed from both ends of the paper masking) is in a state where the base film (Mn phosphate chemical conversion film or electroplating film) is exposed. When the make-up/break-out are performed in this state, it is possible to produce a galled sample as a good imitation in which an Mn phosphate layer or a masking portion made only of electroplating is galled. Further, the weight tong test method described above was also used when the sample was evaluated.

### [Examples]

Next, examples based on this disclosure will be described.

### (Example 1: Technique of formulating metal soap)

In an examination group of Example 1, conditions were sorted according to how the metal soap was mixed with a liquid for the mixing method of the metal soap.

As a final basic composition of the coating agent, a weight ratio of an aqueous polymer, a solid lubricant, and water was adjusted to 40: 20: 40. Here, ethanol was mixed at a proportion of 1 with respect to 100 set as a total weight of the chemical agent in terms of the weight ratio. In addition, a trace amount of ammonia water was slightly added as pH adjustment.

As an aqueous polymer (binder resin), a copolymer of vinyl acetate and acrylic acid composed of a monomer prepared by mixing 10 parts by weight of acrylic acid in terms of 100 parts by weight of vinyl acetate was used. This resulted in 100% polymer classified as acrylates.

The solid lubricant was composed of a metal soap and black lead, and a particle size thereof was 5 µm or less. At this time, the weight ratio of metal soap: black lead was 96: 4. This refers to that the black lead accounts for 4% by weight. In the formulating, a mixture of water and each monomer for making the "copolymer of vinyl acetate and methacrylic acid" of the aqueous polymer is prepared, and the metal soap and the black lead are added and dispersed in the mixture. This example represents various examination details of a method for uniformly dissolving the metal soap and the black lead in the aqueous polymer dissolved in a solvent composed of water as a main component. That is, a degree of homogeneous dispersion was examined in a series of examinations of mixing the metal soap and the black lead with industrial ethanol by the following method. Further, as the metal soap, calcium stearate was used.

### <Condition 1>

Condition 1 is an example where the metal soap and the black lead were directly put into a basic agent and agitated according to the above-described formulating ratio. In this case, industrial ethanol is not used at all.

In Condition 1, the mixture was not sufficiently mixed, and the metal soap or the black lead floated on the surface and gathered with each other so that homogeneous mixing could not be sufficiently performed. Results of condition 1 results in supporting conventional knowledge that the solid lubricants have water repellency and are insoluble in water.

### <Condition 2>

Condition 2 is a case where a metal soap and black lead are put into a basic agent and agitated according to the above-described formulating ratio, and then industrial ethanol: 2.5 is put into a solvent composed of water with respect to water: 100 by a Vol/Vol ratio. This corresponds to 1 part by weight when the final basic composition "aqueous polymer, solid lubricant, and water" of the above-described coating solvent is defined as 100 parts by weight. In this case, the metal soap and the black lead were not sufficiently mixed, and the metal soap and the black lead floated on the surface and aggregated with each other so that homogeneous mixing of the metal soap and the black lead could not be sufficiently performed. Condition 2 indicates that the metal soap and the black lead are not mixed well even when ethanol is mixed later.

### <Condition 3>

Condition 3 is an example in which the amount of industrial ethanol: 2.5 was set with respect to water: 100, and the metal soap and the black lead were agitated in industrial ethanol in separate containers, that is, mixed homogeneously, and then mixtures were put into a basic agent and agitated. Condition 3 can be reported as an example of a substantially homogeneous mixture. The metal soap and black lead are reported to be insoluble in water. However, a situation in which the metal soap and the black lead are finely dispersed in alcohol (industrial ethanol; ethanol as a main component) without forming lumps due to gathering of grains of the metal soap and the black lead with each other can be realized. Hence, it has been found that a situation in which the metal soap or the black lead is homogeneously dissolved can occur by once dissolving the metal soap in industrial ethanol and then developing and agitating the metal soap in the dissolved state in the basic agent.

### <Condition 4>

In Condition 4, an amount of industrial ethanol: 0.5 is set with respect to water: 100, and the metal soap or the black lead is sufficiently agitated in industrial ethanol in a separate container. However, although the amount of alcohol was small, but the metal soap or the black lead was dissolved, a mixture obtained thereby is put in the basic agent in a state where a small amount of the metal soap or the black lead appeared not to be mixed. Condition 4 represents an example in which, subsequently, an amount of industrial ethanol: 2 was put into the basic agent and agitated.

Condition 4 represents an example in which substantially homogeneous adjustment was achieved when a mixture obtained by dissolving the metal soap or the black lead in industrial alcohol in advance is put into an aqueous solvent. Moreover, it could be recognized that when only industrial ethanol: 2 was further added to the basic agent, dissolution further proceeded, and homogeneous dispersion could be realized.

### <Condition 5>

In Condition 5, an amount of industrial ethanol: 2 is set with respect to water: 100, and the metal soap and the black lead are sufficiently agitated in industrial ethanol in separate containers and then are put into the basic agent. Subsequently, as an example, an amount of industrial ethanol: 0.5 was put into the basic agent and agitated. In such a system, calcium stearate which is the metal soap and the black lead were already homogeneously mixed into industrial ethanol: 2. Consequently, from this state, even when industrial ethanol is further added, calcium stearate which is the metal soap is not particularly changed and can be reported as an example of being homogeneously mixed.

As can be found from the examples of the above-described conditions 1 to 5, a solution obtained by uniformly dissolving an appropriate amount or less of the metal soap or the black lead in an appropriate amount of an appropriate lower alcohol (an amount sufficient for the metal soap to be sufficiently mixed) in advance was once prepared. It has been found that the metal soap can be mixed with a solvent composed of water as a main component by putting and agitating the metal soap in the chemical agent itself. Further, in a case of an amount of a metal soap or black lead that could not be uniformly mixed in the volume of the lower alcohol, the black lead or the metal soap was simply put into the basic agent as it was, unless the metal soap and the black lead were not dissolved in 0.5 or more of the lower ethanol with respect to 100 of water in advance. In addition, it is clear that even an addition of industrial ethanol increases the tendency not to mix.

Moreover, the following examples are based on the premise that the coating agent contains uniformly mixed metal soap.

### (Example 2: Examination on early drying property, application amount, particle size of solid lubricant, drying method, and the like)

An examination group of Example 2 is an example where a structure of the connection for oil country tubular goods is coated to sort out good or bad depending on the degree of dryness.

In Example 2, the formulating ratio of alcohol and ammonia water, the difference in alcohol type, and the size of metal soap and black lead were examined. That is, the following individual agents made by different conditions were systematically prepared, and the early drying property was examined.

The weight ratio of the aqueous polymer, the solid lubricant, and water, and as numbers other than the weight ratio, addition amounts of a lower alcohol and ammonia water are expressed by a weight ratio with respect to 100 set as the weight of water. Further, ammonia water (concentrated ammonia water about 28% to 30%) was added to be in a pH range designated by the aqueous polymer.

The solid lubricant includes metal soap, alkaline soap, and black lead. As the aqueous polymer (binder resin), a copolymer composed of a monomer prepared by mixing 6 parts by weight of polyvinyl alcohol in terms of 100 parts by weight of acrylic acid was used. Each formulating ratio was systematically changed and examined as described in the examination details of Example 2. The polyvinyl alcohol is, for example, Poval obtained by saponifying polyvinyl acetate obtained by polymerizing a vinyl acetate monomer.

As common experimental conditions, a connection for oil country tubular goods was prepared to have a carbon steel pin connection having a grade of L80, a size of **5.5"** and 23#, and a connection is a pin connection of JFEBEAR (trademark) and had both ends machined to have a short length of 700 to 1,000 mm.

Regarding the method of applying the chemical agent, first, a general paint brush (Japanese Standard of brush: No. 20: brush width of 50 mm) was dipped in a coating agent. Thereafter, the short pin was rotated by two rollers by the same number of times. In this case, the two rollers come into contact with approximately the 5 o'clock and 7 o'clock positions on the 5.5", 23# pin connection in terms of a clock. Further, when a target pin connection is taken as an analog clock viewed from an end surface side, a center of the target pin connection is set at a center position of a cross section thereof, an upper position from the center in a vertical direction is defined as the 12 o'clock position, a lower position is defined as the 6 o'clock position, a right position in a horizontal direction is defined as the 3 o'clock position, and a left position is defined as the 9 o'clock position. Under the conditions, the short pin was coated by using a brush while being turned at a speed of about 10 seconds per rotation cycle. One brush coating is set as a base, that is, the brush is set at the 12 o'clock position of a rotating pipe. Accordingly, application was performed only once by sweeping with the brush at a constant speed from a front end of the pin connection to a ridge of a crest. Coated parts are the following parts. That is, the coated parts include the entire thread and an end surface of the front end of the pin connection. Moreover, the coated parts include a part positioned about 10 mm inward. The part is unavoidably coated because the brush rolls around. Moreover, the coated parts include a part of about 30 to 50 mm in a non-crest region of a runout part of the crest. The part is unavoidably coated because the brush rolls around. An amount of 6 to 9 g was applied per one end. Regarding an application amount, the coating amount was estimated by a weight change of the brush. However, the dripping of the coating agent from the 6 o'clock position is not taken into consideration.

Both ends of the pin were regarded as one set, first, one side was regarded as an example of leaving the coating agent to dry in the atmosphere, and the one side was coated and then was left. Subsequently, as an example of leaving the coating agent to dry in the atmosphere, similarly, the other side was also coated while being rotated and dried while being exposed to air in an air blowing mode of a hand dryer at a flow rate of about 0.5 m/sec, while the pin is continuously rotated. Accordingly, the drying time was recorded. Thereafter, the rotation of the oil country tubular goods was stopped, and the drying time on a stationary drying side was also recorded. A sample which was not sticky without fingerprint mark from a touch by hand was determined to be dried.

Regarding a position at which the drying was determined, the drying was determined at a position on an upper side of the oil country tubular goods, that is, between 8 o'clock and 4 o'clock positions in terms of a clock. Further, the same determination position was set also on the side being left and dried.

When a large amount of the chemical agent was applied, the chemical agent was accumulated at the 6 o'clock position as the stationary position. However, regions except for the very surface was already hardened. Therefore, based on the determination that there is no problem from the viewpoint of the role (lubrication) of the coating material, the drying time was employed as a determination criterion. The stationary drying was recorded as 30 minutes or longer when the drying cannot be regarded to be completed in 30 minutes. Further, an indoor temperature on that day was 25 to 28°C, and the drying was performed at almost the same temperature. A forced drying condition is set as a simple air blowing condition because the drying is slower than the hot air sending condition, which is a severe condition. However, if the drying is OK in this drying condition, the drying can be determined to be a pass under any forced drying condition. This means that examination is performed under the most severe conceivable conditions.

Further, the application method was used on the premise of the horizontal setting of the pin connection because the horizontal setting is evaluated under more severe conditions than the vertical setting. In actual partial touch-up repair, box connections and pin connections are set vertically. In this situation, the former is set above a drilled hole of the well, and the latter is suspended by the crane. In a situation where a low viscosity coating agent is applied, a redundant amount of a coating material flows down, and thus the coating material cannot be accumulated. However, in a coating test in the horizontal placement state, the coating agent is likely to be accumulated, and thus drying is difficult. Therefore, the coating conditions were set on the premise of the horizontal placement.

Further, when the metal soap or the black lead was mixed into the basic agent, a method of mixing the metal soap after mixing the metal soap in advance by the method ascertained with the examination group of Example 1 "lower alcohol (ethanol: Example 1)" was used. The term, industrial ethanol, as used herein refers to highpurity ethanol mixed with methanol or isopropyl alcohol at a level without violating the Liquor Tax Act. Alkaline soap was added and agitated at the final stage of formulating of the chemical agent.

A coating weight was calculated by a weight difference of the brush. However, since the volatile components are contained, only an amount of the volatilized components is lost from a film constituent substance. Hence, strictly speaking, it is difficult to say that the coating weight calculated by the weight difference of the brush is a coating weight. However, in this disclosure, the weight difference of the brush is set as the coating weight and organized. However, since the coating agent had a low viscosity and high fluidity, the semi-dry coating material appeared to be accumulated at the 6 o'clock position particularly on the side where the coating agent was left after being applied. Ultimately, there was also a part to which the coating agent dripped from the 6 o'clock position, but the application amount was obtained without reflecting such a dripping amount. In addition, the viscosity of the liquid was prepared not to be significantly changed at about 600 to 900 mPa·sec with exceptions and to be determined reflecting influences of other conditions. The exceptions include examples of an example of a coating agent obtained by a high formulating ratio of a solvent, that is, being mixed thin with an aqueous solvent, and conversely, an example in which the viscosity was increased by decreasing the amount of water or increasing the amount of the aqueous polymer.

Details of results and conditions thereof are illustrated in Tables 1 and 2.

**[Table 1]**

| | | | | | | | | | |
|---|---|---|---|---|---|---|---|---|---|
| *: Result exceeding definition range | | | | | | | | | |
| **: Result exceeding preferable range | | | | | | | | | |

| No. | Blending ratio (wt.% with respect to weight of chemical agent excluding low alcohol and ammonia water, to be added later) | | | Blending ratio of types of water-soluble or water-dispersible polymers and each monomer | Solid lubricant | | | | |
|---|---|---|---|---|---|---|---|---|---|
| | | | | | Metal soap | | Black lead | | Other lubricant |
| | Water-soluble or water-dispersible polymer | Solid lubricant | Water | | size | Chemical name of metal soap | size | Blending ratio (wt.% of black lead with respect to total weight of solid lubricant) | Type and ratio |
| 2-1 | 35 | 15 | 50 | In terms of 100 parts by weight of acrylic acid, polyvinyl alcohol (Poval; obtained by saponifying polyvinyl acetate obtained by polymerizing a vinyl acetate monomer): 6 parts by weight | (Not added)* | - | (Not added)* | - | - |
| 2-2 | 35 | 15 | 50 | | (Not added)* | - | (Not added)* | - | - |
| 2-3 | 35 | 15 | 50 | | 5 µm | Calcium stearate | 5 µm | 0.5 | - |
| 2-4 | 35 | 15 | 50 | | 5 µm | Calcium stearate | (Not added)* | 0.5 | - |
| 2-5 | 35 | 15 | 50 | | (Not added)* | - | 5 µm | - | - |
| 2-6 | 35 | 15 | 50 | | 5 µm | Calcium stearate | 5 µm | 0.5 | - |
| 2-7 | 30 | 20 | 50 | Methacrylic acid/styrene copolymer | (Not added)* | - | (Not added)* | - | - |
| 2-8 | 30 | 20 | 50 | | 5 µm | Calcium stearate | 5 µm | 0.5 | - |
| 2-9 | 30 | 20 | 50 | | 1 µm | Calcium stearate | 1 µm | 0.5 | - |
| 2-10 | 30 | 20 | 50 | | 5 µm | Calcium stearate | 5 µm | 5 | - |
| 2-11 | 30 | 20 | 50 | | 5 µm | Calcium stearate | 5 µm | 6* | - |
| 2-12 | 30 | 20 | 50 | | 1 µm | Zinc stearate | 1 µm | 0.5 | - |
| 2-13 | 30 | 20 | 50 | 9 parts by weight of styrene in terms of 100 parts by weight of methacrylic acid | 1 µm | Magnesium stearate | 1 µm | 0.5 | - |
| 2-14 | 30 | 20 | 50 | | 5 µm | Calcium 12-hydroxystearate | 1 µm | 0.5 | - |
| 2-15 | 30 | 20 | 50 | | 5 µm | Calcium montanate | 1 µm | 0.5 | - |
| 2-16 | 30 | 20 | 50 | | 5 µm | Calcium behenate | 1 µm | 1.0 | |
| 2-17 | 30 | 20 | 50 | | 3 µm | Calcium oleate | 1 µm | 1.0 | |
| 2-18 | 30 | 20 | 50 | | 3 µm | Calcium laurate | 1 µm | 1.0 | |

**[Table 2]**

| |
|---|
| *: Result exceeding definition range |
| **: Result exceeding preferable range |

| No. | Solvent addition other than water (weight ratio in terms of 100 of water) | | | Viscosity (mPa·sec) | Pencil hardness | Application amount (g) | Application amount (mg/mm²) | Flash point (°C) | Drying time | Note |
|---|---|---|---|---|---|---|---|---|---|---|
| | Alcohol | | Ammonia water | | | | | | | |
| | Chemical name of alcohol | Kind of alcohol and ratio with respect to water | Blending ratio of ammonia water with respect to water | | | | | | | |
| 2-1 | -* | (Not added)* | | | 2B | | | Nonflammable | Air blowing drying side: 15 min** | Reference example (*reference) |
| | | | | | | | | | Undisturbed drying side: not dried in 30 min 15 min** Moreover, undried coating agent is accumulated in five to seven hr.** | |
| 2-2 | Industrial ethanol | 0.5 | | | 2B | | | Nonflammable | Air blowing drying side: 7 min** | Comparative Example |
| | | | | | | | | | Undisturbed drying side: 22 min** | |
| 2-3 | -* | (Not added)* | | | 2B | | | Nonflammable | Air blowing drying side: 12 min** | Comparative Example |
| | | | 0.1 to 0.2 | 700 to 850 mPa·sec | | 7 to 11 g | 0.05 to 0.08 mg/mm² | | Undisturbed drying side: 27 min** | |
| 2-4 | Industrial ethanol | 0.5 | | | 2B | | | Nonflammable | Air blowing drying side: 3 min 50 sec** | Comparative Example |
| | | | | | | | | | Undisturbed drying side: 13 min | |
| 2-5 | Industrial ethanol | 0.5 | | | 2B | | | Nonflammable | Air blowing drying side: 58 sec | Comparative Example |
| | | | | | | | | | Undisturbed drying side: 4.5 min | |
| 2-6 | Industrial ethanol | 0.5 | | | 2B | | | Nonflammable | Air blowing drying side: 50 sec | Inventive Example |
| | | | | | | | | | Undisturbed drying side: 4.5 min | |
| 2-7 | -* | (Not added)* | 0.2 to 0.3 | 350 to 550 mPa·sec | 4B | 5 to 8 g | 0.04 to 0.06 mg/mm² | Nonflammable | Air blowing drying side: 16 min** | Reference example (*reference) |
| | | | | | | | | | Undisturbed drying side: 28 min | |
| 2-8 | Industrial ethanol | 0.5 | | | 4B | | | Nonflammable | Air blowing drying side: 65 sec | Inventive Example |
| | | | | | | | | | Undisturbed drying side: 5.5 min | |
| 2-9 | Industrial ethanol | 0.5 | | | 4B | | | Nonflammable | Air blowing drying side: 53 sec | Inventive Example |
| | | | | | | | | | Undisturbed drying side: 4 min 15 sec | |
| 2-10 | Industrial ethanol | 10 | | | 4B | | | 60°C | Air blowing drying side: 40 sec | Inventive Example |
| | | | | | | | | | Undisturbed drying side: 3 min 10 sec | |
| 2-11 | Industrial ethanol | 50* | | | 4B | | | 38°C** | Air blowing drying side: 25 sec | Comparative Example (usable if fire is not prohibited) |
| | | | | | | | | | Undisturbed drying side: 1 min 20 sec | |
| 2-12 | Industrial ethanol | 1 | | | 4B | | | Nonflammable | Air blowing drying side: 70 sec | Inventive Example |
| | | | | | | | | | Undisturbed drying side: 5 min 50 sec | |
| 2-13 | Industrial ethanol | 1 | | | 4B | | | Nonflammable | Air blowing drying side: 70 sec | Inventive Example |
| | | | | | | | | | Undisturbed drying side: 5 min 45 sec | |
| 2-14 | Methanol | 0.5 | | | 4B | | | Nonflammable | Air blowing drying side: 75 sec | Inventive Example |
| | | | | | | | | | Undisturbed drying side: 6 min | |
| 2-15 | Isopropyl alcohol | 0.5 | | | 4B | | | Nonflammable | Air blowing drying side: 80 sec | Inventive Example |
| | | | | | | | | | Undisturbed drying side: 6 min 15 sec | |
| 2-16 | Isopropyl alcohol | 2 | | | 4B | | | Nonflammable | Air blowing drying side: 80 sec | Inventive Example |
| | | | | | | | | | Undisturbed drying side: 6 min 15 sec | |
| 2-17 | Isopropyl alcohol | 2 | | | 4B | | | Nonflammable | Air blowing drying side: 70 sec | Inventive Example |
| | | | | | | | | | Undisturbed drying side: 5 min 45 sec | |
| 2-18 | Normal propyl alcohol | 2 | | | 4B | | | Nonflammable | Air blowing drying side: 53 sec | Inventive Example |
| | | | | | | | | | Undisturbed drying side: 3 min 50 sec | |

Examination examples of Nos. 2-1 to 2-6 are case for examining the early drying property of a copolymer of acrylic acid and polyvinyl alcohol (Poval; obtained by saponifying polyvinyl acetate obtained by polymerizing a vinyl acetate monomer), which is the aqueous polymer composed of 6 parts by weight of polyvinyl alcohol in terms of 100 parts by weight of acrylic acid. In this case, the viscosity of the coating agent is examined by using a chemical agent having a low viscosity of 700 to 850 mPa·sec. The formulating ratio of the aqueous polymer, the solid lubricant (metal soap and black lead), and water is 35: 15: 50 in common, and only a trace amount of ammonia is added in common for pH adjustment. In addition, in this case, examination is performed by systematically changing the sizes of the metal soap and the black lead, the types of alcohols, and the formulating amount ratios thereof. Further, the formed films had a pencil hardness of 2B, and the flash points were treated as nonflammable in all examples. The alkaline soap was added at a weight ratio of 0.1 with respect to the total weight of the solid lubricant: 15 after the formulating thereof was completed. The alkaline soap is soluble in water, tends to increase viscosity, and have an effect of making it difficult to dry. Therefore, the alkaline soap is added in this examination in order to check the examination on the early drying in severe conditions. However, in the following description and Tables 2 and 3, effects and influences thereof are not particularly mentioned and are assumed to exist as common influence factors.

No. 2-1 is a comparative example containing no metal soap, black lead, or alcohol. The comparative example is a reference for evaluating the early drying. On the other hand, it was determined whether the early drying was possible or whether parameter definitions other than the early drying were satisfied.

No. 2-2 is an example where metal soap is not used, black lead is not used, and an industrial alcohol is added to a solvent. That is, this is an example where metal soap and black lead are not added. Since black lead and metal soap for the purpose of lubrication characteristics are not contained, the case is regarded as a comparative example. No. 2-2 is an example in which the drying time is shortened because volatilization of alcohol is used, but the drying time cannot be shortened to be shorter than a target value of 5 minutes for air blow drying and is a comparative example.

No. 2-3 is a comparative example in which a metal soap and black lead are contained, and alcohol is not added. The metal soap and the black lead are contained for promoting the drying by increasing the surface area. However, since alcohol is not used, the metal soaps easily gather to form lumps. At the same time, the dissolution of the black lead also tended to slightly form lumps. Even when the lubrication behavior is put aside, the reference condition of the drying time (air blow: 5 minutes or less, stationary drying: 30 minutes or less) cannot be satisfied at the same time, and thus this corresponds to a comparative example.

No. 2-4 is an example in which a metal soap is contained, black lead is not contained, and alcohol is added. No. 2-5 is an example in which a metal soap is not contained, black lead is contained, and alcohol is added. Although the determination criteria for the drying time have been clarified, the formulating proportion of the solid lubricant does not fall within the definition range from the viewpoint of lubrication, and thus the case corresponds to a comparative example. The condition of containing only black lead of No. 2-5 also satisfies the determination criteria for the drying time. The drying time tended to be slightly faster. Although the reason is not clear, it may be effective to have a fine structure of black lead which is finely porous. However, since the formulating proportion of the solid lubricant is not within the definition range of this disclosure and only the black lead has no sufficient lubrication characteristics, this case is regarded as a comparative example (reference example).

No. 2-6 is an inventive example in which a metal soap, black lead, and alcohol are contained. This indicates that the early drying can be realized by designing a combination of a solid lubricant, alcohol, ammonia, and the like within the definition range of this disclosure.

In addition, examples of Nos. 2-7 to 2-18 are examples in which the aqueous polymer is composed of a methacrylic acid/styrene copolymer. In addition, the copolymer has a mixing ratio of 9 parts by weight of styrene in terms of 100 parts by weight of methacrylic acid. Since a copolymer is added, the binder resin component is regarded as 100% of methacrylate in this case. In addition, this case is an example for examining the type of soap, the type and concentration of alcohol, and the like. In this case, the viscosity of the coating agent is examined by using a chemical agent having a low viscosity at a level of 350 to 550 mPa·sec. In the examples of Nos. 2-7 to 2-18, the formulating ratio of the aqueous polymer, the solid lubricant (metal soap and black lead), and water is 30: 20: 50 in common. Further, ammonia is commonly contained by a trace amount for pH adjustment. Accordingly, in this case, examination is performed by systematically changing the sizes of the metal soap and the black lead, the types of alcohols, and the formulating amount ratios thereof. Further, the formed films had a pencil hardness of 4B. The flash point varies in conjunction with the addition amount of alcohol.

No. 2-7 is a reference example in which a metal soap, black lead, and alcohol are all not contained.

On the other hand, a determination reference is whether the early drying is possible or whether parameter definitions other than the early drying are satisfied. Nos. 2-8 and 2-9 are examination examples in which the size of calcium stearate which is a metal soap was changed. Nos. 2-8 and 2-9 are inventive examples that satisfy the reference values for the early drying. The reason why the drying is faster in the case of No. 2-9 than in the case of No. 2-8 is assumed to be that the particle sizes of the metal soap and the black lead were 1 µm, and the particles were made smaller than by the particle size of 5 µm of No. 2-8, and the surface area was increased so that early drying was promoted.

Nos. 2-10 and 2-11 are examples in which the amount of metal soap was increased and the addition amount of industrial ethanol was increased. No. 2-10 corresponds to an inventive example as an example in which a metal soap is dissolved by the upper limit of the addition amount in a large amount of industrial ethanol. No. 2-10 has a quick drying time and satisfies the standard regarding drying. However, although the flash point decreases to about 60°C due to an increase in the amount of ethanol, the flash point is at a preferable lower limit, which corresponds to an inventive example. No. 2-11 is an example where the drying time satisfies the standard, but the flash point is in a low temperature range exceeding the preferred lower limit standard of the flash point. There is no problem in using the case as long as being used in an environment where fire is not prohibited, but it is difficult to use the case in a fire-prohibited environment at the well site, and thus it is regarded as a comparative example.

In the examples of Nos. 2-12 to 2-18, various alcohol types and metal soaps were examined. The examples of Nos. 2-12 to 2-18 all satisfy the target level of the early drying and thus is considered to satisfy the early drying property within the prescribed range of this disclosure.

### (Example 3: Influence of each condition on lubricity (partial touch-up repair characteristics))

In an examination group of Example 3, the connection for oil country tubular goods lubricated with the actual solid lubrication coating film was intentionally and artificially galled. In Example 3, the galled position was cured to be scraped off with a grinder or sandpaper. Thereafter, this is an example of examining lubrication by applying candidates of the coating agent examined in this disclosure, including the galled position.

The conditions are illustrated in Tables 3 and 4.

**[Table 3]**

| No. | Box connection side | |
|---|---|---|
| | Solid lubrication coating film | |
| | Base film | Dry film |
| 3-B1 | Mn phosphate (Carbon steel) | Binder resin: polyimide resin |
| | Cu-Sn binary electroplating (stainless, high alloy-based) | Solid lubricant: PTFE |
| 3-B2 | Mn phosphate (Carbon steel) | Binder resin: polyamide-imide resin |
| | Cu-Sn binary electroplating (stainless, high alloy-based) | Solid lubricant: MoS2 |
| 3-B3 | Mn phosphate (Carbon steel) | Binder resin: polyamide-imide resin |
| | Cu-Sn binary electroplating (stainless, high alloy-based) | Solid lubricant: PTFE |

**[Table 4]**

| No. | Pin connection side |
|---|---|
| | Solid lubrication coating film |
| | Dry film |
| 3-P1 | Binder resin: PFAS(C4)-containing acrylic resin |
| | Solid lubricant: PTFE |
| 3-P2 | Binder resin: PFAS(C4)-containing acrylic resin |
| | Solid lubricant: PTFE |
| 3-P3 | Binder resin: PFAS(C4)-containing acrylic resin |
| | Solid lubricant: metal soap (not as thickener but as just solid lubricant) |

A lubrication coating film is prepared to be formed on the connection for oil country tubular goods by combining candidates of the solid lubrication coating film illustrated in Tables 3 and 4 for the box connection side and the pin connection side. However, when the solid lubrication coating film was formed on the box connection, the box connection was masked by attaching paper at one position every 30 degrees at an inner angle in a circumferential direction over a complete thread portion to the entire length of the thread except for the seal part. Accordingly, the solid lubrication coating film was not formed at the masked positions. In this manner, a part where the base chemical conversion film or the electroplating film was exposed was intentionally formed. That is, paper or a tape was attached between 0 o'clock and 1 o'clock in terms of a clock so that a solid lubrication coating film was not formed. Since the boundary region of the masking has a wraparound portion when the solid lubrication coating film is formed, the presence or absence of the solid lubrication coating film is not clearly observed at the boundary due to the wraparound of the chemical agent toward the box connection.

In this state, the weight tong were used to perform the make-up/break-out once. As a result, almost the same galling was realized around the position without the masked dry film. The scope of the invention of this disclosure will be described by performing rework on the galling. Further, the test method of the weight tong is performed in accordance with the above-described method. In addition, a touch-up (rework) of the galled position is performed in a state where the box connection is set in the power tong. That is, in a state of being set in the power tong lower gripping part (lower gripping unit represented by 4 in FIG. 6), the position is cured with a grinder, a file, or abrasive paper, and then the chemical agent is applied by brush coating. Similarly, the pin connection is lifted over the top of the box connection and is cured and coated in that state, for example, as illustrated in FIG. 7. Alternatively, the pin connection is moved from a position immediately above the box connection to a position at which the axial center is slightly shifted by a crane in a suspended state and is cured and coated at the position.

The number of times of make-up/break-out is increased by once or more times, and thus the examination group is regarded as inventive examples in which a touch-up (≈ repair) can be performed. When the next make-up/break-out test was performed, it was determined that those that had been galled again were regarded as comparative examples. When the number of times of make-up/break-out is three or more times after reworking, the cases can be determined to be much better. Tables 5 and 6 illustrate the conditions and results of this example.

**[Table 5]**

| |
|---|
| *: Result exceeding definition range |
| **: Result exceeding preferable range |

| No. | Steel type | OD (inch) | WT (LPF) | Connection type | Solid lubrication coating film on box connection side | Solid lubrication coating film on pin connection side | Test or No test with weight tong | Artificial galling | Blending ratio (wt.% with respect to weight of chemical agent excluding low alcohol and ammonia water, to be added later) | | | Blending ratio of kinds of water-soluble or water-dispersible polymers and each monomer |
|---|---|---|---|---|---|---|---|---|---|---|---|---|
| | | | | | | | √: Test | | | | | |
| | | | | | | | (in parentheses, weight and number of weights equivalent to actual length pin) | √: Presence | | | | |
| | | | | | | | | | Water-soluble or water-dispersible polymer | Solid lubricant | Water | |
| | | | | | | | | -: Absence | | | | |
| | | | | | | | -: No test | | | | | |
| 3-1 | Q125 | 9-5/8" | 53.5# | JFELION | 3-B2 | 3-P2 | √ (1 ton: equivalent to one actual length pin) | VJ | 35 | 20 | 45 | Vinyl acetate-butyl acrylate, polyvinyl polymer (420 : 100 : 75) |
| 3-2 | Q125 | 9-5/8" | 53.5# | JFELION | 3-B2 | 3-P2 | √ (1 ton: equivalent to one actual length pin) | & | 35 | 20 | 45 | Vinyl acetate-butyl acrylate, polyvinyl polymer (420 : 100 : 75) |
| 3-3 | Q125 | 9-5/8" | 53.5# | JFELION | 3-B2 | 3-P2 | √ (1 ton: equivalent to one actual length pin) | VJ | 35 | 20 | 45 | Vinyl acetate-butyl acrylate, polyvinyl polymer (420 : 100 : 75) |
| 3-4 | Q125 | 9-5/8" | 53.5# | JFELION | 3-B2 | 3-P2 | √ (1 ton: equivalent to one actual length pin) | VJ | 20* | 30* | 50 | Vinyl acetate-butyl acrylate, polyvinyl polymer (420 : 100 : 75) |
| 3-5 | Q125 | 9-5/8" | 53.5# | JFELION | 3-B2 | 3-P2 | √ (1 ton: equivalent to one actual length pin) | VJ | 55* | 5* | 40 | Vinyl acetate-butyl acrylate, polyvinyl polymer (420 : 100 : 75) |
| 3-6 | Q125 | 9-5/8" | 53.5# | JFELION | 3-B1 | 3-P1 | √ (1 ton: equivalent to one actual length pin) | √ | 40 | 10 | 50 | Polyvinyl alcohol : Acrylic acid (6 : 100) |
| 3-7 | Q125 | 9-5/8" | 53.5# | JFELION | 3-B1 | 3-P1 | √ (1 ton: equivalent to one actual length pin) | √ | 40 | 10 | 50 | Polyvinyl alcohol : Acrylic acid (6 : 100) |
| 3-8 | Q125 | 9-5/8" | 53.5# | JFELION | 3-B1 | 3-P1 | √ (1 ton: equivalent to one actual length pin) | √ | 30 | 30* | 40 | Polyvinyl alcohol : Acrylic acid (6 : 100) |
| 3-9 | Q125 | 9-5/8" | 53.5# | JFELION | 3-B1 | 3-P1 | √ (1 ton: equivalent to one actual length pin) | √ | 50* | 10 | 40 | Polyvinyl alcohol : Acrylic acid (6 : 100) |
| 3-10 | Q125 | 9-5/8" | 53.5# | JFELION | 3-B1 | 3-P1 | √ (1 ton: equivalent to one actual length pin) | √ | 35 | 10 | 55* | Polyvinyl alcohol : Acrylic acid (6 : 100) |
| 3-11 | UHP-15CR-125 | 9-5/8" | 47.0# | JFELION | 3-B3 | 3-P3 | √ (2.5 ton: equivalent to three actual length pins) | √ | 40 | 20 | 40 | ethylene-methacrylic acid copolymer resin (30 : 100) (* Here, ethylene refers to parts by weight of ethylene polymerized into methacrylic acid using a random copolymer of ethylene oxide and propylene oxide) |
| 3-12 | UHP-15CR-125 | 9-5/8" | 47.0# | JFELION | 3-B3 | 3-P3 | √ (2.5 ton: equivalent to three actual length pins) | √ | 40 | 20 | 40 | ethylene-methacrylic acid copolymer resin (30 : 100) (* Here, ethylene refers to parts by weight of ethylene polymerized into methacrylic acid using a random copolymer of ethylene oxide and propylene oxide) |
| 3-13 | UHP-15CR-125 | 9-5/8" | 47.0# | JFELION | 3-B3 | 3-P3 | √ (2.5 ton: equivalent to three actual length pins) | √ | 40 | 20 | 40 | ethylene-methacrylic acid copolymer resin (30 : 100) (* Here, ethylene refers to parts by weight of ethylene polymerized into methacrylic acid using a random copolymer of ethylene oxide and propylene oxide) |
| 3-14 | UHP-15CR-125 | 9-5/8" | 47.0# | JFELION | 3-B3 | 3-P3 | √ (2.5 ton: equivalent to three actual length pins) | √ | 40 | 20 | 40 | ethylene-methacrylic acid copolymer resin (30 : 100) (* Here, ethylene refers to parts by weight of ethylene polymerized into methacrylic acid using a random copolymer of ethylene oxide and propylene oxide) |
| 3-15 | UHP-15CR-125 | 9-5/8" | 47.0# | JFELION | 3-B3 | 3-P3 | √ (2.5 ton: equivalent to three actual length pins) | √ | 55* | 5* | 40 | ethylene-methacrylic acid copolymer resin (30 : 100) (* Here, ethylene refers to parts by weight of ethylene polymerized into methacrylic acid using a random copolymer of ethylene oxide and propylene oxide) |

**[Table 6]**

| |
|---|
| *: Result exceeding definition range |
| **: Result exceeding preferable range |

| No. | Solid lubricant | | | | | Solvent addition other than water (weight ratio in terms of 100 of water) | | | Viscosity (mPa·sec) | Pencil hardness | Application amount (g) | Application amount (mg/mm²) | Flash point (°C) | Drying time | Number of times of M/B (in parentheses, number of times of M/B after rework) or (increase in number of times of M/B after coating) | Note |
|---|---|---|---|---|---|---|---|---|---|---|---|---|---|---|---|---|
| | Metal soap | | Black lead | | Other lubricants | Alcohol | | Ammonia water | | | | | | | | |
| | Size | Chemical name of metal soap | Size | Blending ratio (wt.% of black lead with respect to total weight of solid lubricant) | Type and ratio | Chemical name of alcohol | Kinds of alcohols and ratio with respect to water | Blending ratio of ammonia water with respect to water | | | | | | | | |
| 3-1 | 1 µm | Calcium stearate | 1 µm | 0.5 | Sodium stearate: 1% | Industrial ethanol | 2 | 0.8 | 1000 mPa·sec | 2B | Equivalent to 13 - 15 g | Impossible to define (having curing position) | Nonflammable | Air blowing 55 sec | (+ Three or more times) | Inventive Example |
| 3-2 | 1 µm | Calcium stearate | 5 µm | 0.5 | Sodium stearate: 1% | industrial ethanol | 2 | 0.8 | 1000 mPa·sec | 2B | Equivalent to 13 -15 g | Impossible to define (having curing position) | Nonflammable | Air blowing 50 sec | (+ Three or more times) | Inventive Example |
| 3-3 | 1 µm | Calcium stearate | 10 µm** | 0.5 | Sodium stearate: 1% | Industrial ethanol | 2 | 0.8 | 1000 mPa·sec | 2B | Equivalent to 13 - 15 g | Impossible to define (having curing position) | Nonflammable | Air blowing 63 sec | (+ Once) | Inventive Example |
| 3-4 | 1 µm | Calcium stearate | 1 µm | 0.5 | Sodium stearate: 1% | Industrial ethanol | 5 | 0.8 | 800 mPa·sec | B | Equivalent to 13 - 15 g | Impossible to define (having curing position) | Nonflammable | Air blowing 90 sec | (Zero times) | Comparative Example |
| 3-5 | 1 µm | Calcium stearate | 1 µm | 0.5 | Sodium stearate: 1% | Industrial ethanol | 0.3* | 0.8 | 1800 mPa·sec** | 2B | Equivalent to 13 - 15 g | Impossible to define (having curing position) | Nonflammable | Air blowing 3 min | (Zero times) | Comparative Example |
| 3-6 | 1 µm | Zinc stearate | 1 µm | 1.0 | None | Industrial ethanol | 1 | 0.8 | 750 mPa·sec | 2B | Equivalent to 10 g | Impossible to define (having curing position) | Nonflammable | Air blowing 50 sec | (+ Three or more times) | Inventive Example |
| 3-7 | 1 µm | Zinc stearate | 10 µm** | 5.0 | None | Industrial ethanol | 10 | 0.8 | 750 mPa·sec | 2B | Equivalent to 10 g | Impossible to define (having curing position) | Nonflammable | Air blowing 35 sec | (+ Twice or more times) | Inventive Example |
| 3-8 | 1 µm | Zinc stearate | 1 µm | 1.0 | None | Industrial ethanol | 1 | 0.8 | 750 mPa·sec | 2B | Equivalent to 10 g | Impossible to define (having curing position) | Nonflammable | Air blowing 60 sec | (Zero times) | Comparative Example |
| 3-9 | 1 µm | Zinc stearate | 0.8 µm | 0.5 | None | Industrial ethanol | 2 | 1.1 | 850 mPa·sec | 2B | Equivalent to 10 g | Impossible to define (having curing position) | Nonflammable | Air blowing 50 sec | (Zero times) | Comparative Example |
| 3-10 | 1 µm | Zinc stearate | 0.8 µm | 0.5 | None | Industrial ethanol | 2 | 0.7 | 600 mPa·sec | 2B | Equivalent to 10 g | Impossible to define (having curing position) | Nonflammable | Air blowing 1 min 50 sec | (Zero times) | Comparative Example |
| 3-11 | 5 µm | Calcium 12-hydroxystearate | 1 µm | 2.0 | Sodium stearate: 0.5% | Isopropyl alcohol | 1.5 | 1.0 | 600 mPa·sec | 4B | Equivalent to 15 g | Impossible to define (having curing position) | Nonflammable | Air blowing 50 sec | (+ Three or more times) | Inventive Example |
| 3-12 | 5 µm | Calcium 12-hydroxystearate | 1 µm | 5 | Sodium stearate: 0.5% | Isopropyl alcohol | 8 | 1.0 | 600 mPa·sec | 4B | Equivalent to 15 g | Impossible to define (having curing position) | Nonflammable | Air blowing 50 sec | (+ Three or more times) | Inventive Example |
| 3-13 | 5 µm | Calcium 12-hydroxystearate | 1 µm | 7* | None | Isopropyl alcohol | 15* | 1.0 | 600 mPa·sec | 4B | Equivalent to 15 g | Impossible to define (having curing position) | 65°C | Air blowing 50 sec | (Zero times) | Comparative Example |
| 3-14 | 5 µm | Not added* | 1 µm | 100* | None | Isopropyl alcohol | 1.0 | 1.0 | 600 mPa·sec | 4B | Equivalent to 15 g | Impossible to define | Nonflammable | Air blowing 50 sec | (Zero times) | Comparative Example |
| | | | | | | | | | | | | (having curing position) | | | | |
| 3-15 | 1 µm | Calcium 12-hydroxystearate | Not added* | -* | None | Isopropyl alcohol | 8.0 | 1.0 | 600 mPa·sec | 4B | Equivalent to 15 g | Impossible to define (having curing position) | Nonflammable | Air blowing 50 sec | (Zero times) | Comparative Example |

Nos. 3-1 to 3-5 were oil country tubular goods made of a material of carbon steel Q125, having a size of 9-5/8" and 53.5# as oil country tubular goods and used JFELION (trademark) connections. In Nos. 3-1 to 3-5, the solid lubrication coating film of the box connection and the solid lubrication coating film of the pin connection correspond to 3-B2 and 3-P2 in Tables 3 and 4, respectively. Accordingly, threads which are artificially galled were prepared. Further, in the evaluation, the make-up was performed by applying a load of 1 ton by a weight with the weight tong. That is, a load equivalent to the weight of one actual length pin is applied.

Although there is a slight difference in degree, galling of the solid lubrication coating film occurred in each of the masked box connection and the pin connection coming into contact with the masked box connection due to the make-up/break-out performed once. The galling occurred at a masked position (position having no solid lubrication coating film) on the former, and galling occurred at a rubbed part of the pin connection, the pin connection being rubbed when the galling occurred.

After the galling, the galled position was cured with a grinder, a file, or abrasive paper, and then a coating agent was applied. A mixture of a copolymer of vinyl acetate-butyl acrylate and polyvinyl as a binder resin, metal soap, black lead, alcohol, ammonia, and the like were prepared and was applied, and the make-up/break-out was resumed again.

Nos. 3-1 and 3-2 are examples where the partial touch-up repair can be performed with a chemical agent within a range defined in this disclosure, and make-up/break-out can be further performed three or more times, thus, corresponding to an inventive example. In addition, the metal soap + black lead-based agent filled the cured portion with a film without forming a tape-shaped secondary product and contributed to the recovery of high lubrication.

No. 3-3 is an example in which the size of black lead exceeds a suitable definition and has been improved so that the make-up/break-out can be further performed once. However, the improvement effect is not significant. No. 3-4 is a comparative example in which the amount of the solid lubricant was too much, that is, black lead was mixed in a large amount.

No. 3-5 is, conversely, an example where the amount of the solid lubricant is too small. Both are comparative examples in which galling occurs immediately after partial touch-up repair without improvement in make-up/break-out. No. 3-4 had too much amount of the solid lubricant, that is, too much amount of black lead, and the black tape-shaped secondary product clogged the thread gap, and the galling occurred. Conversely, No. 3-5 is considered to have galling due to insufficient lubrication because the solid lubrication coating film contains a small amount of lubricant component.

Examples of Nos. 3-6 to 3-10 represent oil country tubular goods made of a material of carbon steel Q125, having a size of 9-5/8" and 53.5# and used the same JFELION (trademark) connections. In the examples of Nos. 3-6 to 3-10, the solid lubrication coating film of the box connection and the solid lubrication coating film of the pin connection were different from each other and corresponded to 3-B1 and 3-P1 in Table 3, respectively, and in the same manner, threads which are artificially galled were prepared. Further, in the evaluation, a load of 1 ton is applied as a weight with the weight tong, and the make-up/break-out is performed. This means that a load equivalent to the weight of one actual length pin is applied. The difference is a coating agent, and the film is a copolymer coating film of polyvinyl and acrylic acid.

Nos. 3-6 and 3-7 represent cases of using a chemical agent within the range defined by this disclosure. Both cases were partially repaired in a touch-up manner. The former represents an example where the make-up/break-out can be further performed three or more times. The latter is improved only to withstand the make-up/break-out twice. Both cases correspond to inventive examples. The black lead filled the cured portion without forming a tape-shaped secondary product and contributed to the recovery of high lubrication. It is assumed that the difference between Nos. 3-6 and 3-7 is due to the difference in the size of black lead. The latter is estimated to have smaller improvement effect due to the exacerbation of a blocking effect on the thread gap by the large black lead.

On the other hand, No. 3-8 is an example where a ratio of the solid lubricant is high. No. 3-9 is an example where a ratio of the aqueous polymer is high. No. 3-10 is an example where a lot of water is contained. Nos. 3-8 to 3-10 are comparative examples in which the stability of the solid lubrication coating film was not good, the necessary lubrication could not be secured, and galling occurred even after repair.

Examples of Nos. 3-11 to 3-15 represent oil country tubular goods made of stainless steel: UHP (trademark)-15CR-125 manufactured by JFE Steel Corporation, having a size of 9-5/8" and 47.0# and used JFELION (trademark) connections as targets. In the examples of Nos. 3-11 to 3-15, the solid lubrication coating film of the box connection and the solid lubrication coating film of the pin connection are different from each other and correspond to 3-B3 and 3-P3 in Table 3, respectively. Accordingly, in the same manner, threads which are artificially galled were prepared. Further, in the evaluation, a load of 2.5 tons is applied as a weight with the weight tong, and the make-up is performed. This means that a load equivalent to the weight of three connected actual length pins is applied. The aqueous polymer is an ethylene-methacrylic acid copolymer resin (30: 100). Here, ethylene refers to parts by weight of ethylene polymerized into methacrylic acid using a random copolymer of ethylene oxide and propylene oxide.

Nos. 3-11 and 3-12 represent cases of using a chemical agent within the range defined by this disclosure. Nos. 3-11 and 3-12 represent examples where the partial touch-up repair can be performed, and the make-up/break-out can be further performed three or more times, thus, corresponding to an inventive example. The black lead filled the cured portion without forming a tape-shaped secondary product and contributed to the recovery of high lubrication.

On the other hand, No. 3-13 represents an example in which too much amount of black lead is contained. This case is a comparative example in which the black lead tends to form lumps, even when the black lead is mixed with alcohol in advance and then mixed with waterbased paint, and there is also a concern about the influence thereof. No. 3-14 represents an example where no metal soap is put and corresponds to a comparative example. In No. 3-14, lubrication was not restored after repair. That is, there is lubrication that cannot be achieved by only a lubricant made of only black lead, and the result indicates that lubrication is achieved by cooperation of the components. No. 3-15 represents, conversely, an example a system containing no black lead and containing only metal soap and corresponds to a comparative example. From No. 3-15, it is estimated that even when the metal soap is dissolved in alcohol in advance, the metal soap is not completely mixed into the aqueous solvent, including some grains which gather to form lumps, and lubrication was insufficient.

### (Example 4: Influence of each condition viewed from lubricity (characteristics of overall lubrication improvement))

Examples of No. 4-1 to 4-5 of Example 4 are obtained by performing two parallel comparative tests on the solid lubrication coating film used in Example 3 described above. One is simply to conduct a make-up/break-out test to examine the number of times of make-up/break-out. In addition, the second test is a method of checking whether the improvement is achieved by a change in the number of times, by uniformly applying the chemical agent of this disclosure to a surface, before the make-up, and performing a weight tong test to examine the number of times of make-up/break-out. This time, a uniform film was formed without intentionally causing the galling.

The results are illustrated in Tables 7 to 10.

**[Table 7]**

| No. | Steel type | OD (inch) | WT (LPF) | Connection type | Solid lubrication coating film on box connection side | Solid lubrication coating film on pin connection side | Test or No test with weight tong √: Test (in parentheses, weight and number of weights equivalent to actual length pin) -: No test | Artificial galling √: Presence -: Absence | Number of times of M/B | Number of times of M/B in case of applying lubrication assisting film using coating agent in conditions provided on right side | Thread surface coated with chemical agent | Blending ratio (wt.% with respect to weight of chemical agent excluding low alcohol and ammonia water, to be added later) | | | Blending ratio of kinds of water-soluble or water-dispersible polymers and each monomer |
|---|---|---|---|---|---|---|---|---|---|---|---|---|---|---|---|
| | | | | | | | | | | | | Water-soluble or water-dispersible polymer | Solid lubricant | Water | |
| 4-1-B | Q125 | 9-5/8" | 53.5# | JFELION | 3-B2 | 3-P2 | √ (1 ton: equivalent to one actual length pin) | - | Seven times | ≥ Ten times | Box connection | 35 | 20 | 45 | Vinyl acetate-butyl acrylate, polyvinyl polymer (420 : 100 : 75) |
| | | | | | | | | | Eight times | ≥ Ten times | | | | | |
| | | | | | | | | | Ten times | ≥ Ten times | | | | | |
| 4-1-P | Q125 | 9-5/8" | 53.5# | JFELION | 3-B2 | 3-P2 | √ (1 ton: equivalent to one actual length pin) | - | Seven times | ≥ Ten times | Pin connection | 35 | 20 | 45 | Vinyl acetate-butyl acrylate, polyvinyl polymer (420 : 100 : 75) |
| | | | | | | | | | Eight times | ≥ Ten times | | | | | |
| | | | | | | | | | Ten times | ≥ Ten times | | | | | |
| 4-1-BP | Q125 | 9-5/8" | 53.5# | JFELION | 3-B2 | 3-P2 | √ (1 ton: equivalent to one actual length pin) | - | Seven times | ≥ Ten times | Both Box connection and Pin connection | 35 | 20 | 45 | Vinyl acetate-butyl acrylate, polyvinyl polymer (420 : 100 : 75) |
| | | | | | | | | | Eight times | ≥ Ten times | | | | | |
| | | | | | | | | | Ten times | ≥ Ten times | | | | | |
| 4-1-BP2 | Q125 | 9-5/8" | 53.5# | JFELION | 3-B2 | Instead of 3-P2, applying chemical agent of corresponding number | √ (1 ton: equivalent to one actual length pin) | - | - | ≥ Ten times | Pin connection Forming as solid lubrication coating film | 35 | 20 | 45 | Vinyl acetate-butyl acrylate, polyvinyl polymer (420 : 100 : 75) |
| | | | | | | | | | | ≥ Ten times | | | | | |
| | | | | | | | | | | ≥ Ten times | | | | | |
| 4-2-B | Q125 | 9-5/8" | 53.5# | JFELION | 3-B2 | 3-P2 | √ (3 ton: equivalent to three actual length pins) | - | Three times | ≥ Ten times | Box connection | 35 | 20 | 45 | Vinyl acetate-butyl acrylate, polyvinyl polymer (420 : 100 : 75) |
| | | | | | | | | | Five times | Eight times | | | | | |
| 4-2-P | Q125 | 9-5/8" | 53.5# | JFELION | 3-B2 | 3-P2 | √ (3 ton: equivalent to three actual length pins) | - | Three times | ≥ Ten times | Pin connection | 35 | 20 | 45 | Vinyl acetate-butyl acrylate, polyvinyl polymer (420 : 100 : 75) |
| | | | | | | | | | Five times | Eight times | | | | | |
| | | | | | | | | | Five times | ≥ Ten times | | | | | |
| 4-2-BP | Q125 | 9-5/8" | 53.5# | JFELION | 3-B2 | 3-P2 | √ (3 ton: equivalent to three actual length pins) | - | Three times | Seven times | Both Box connection and Pin connection | 35 | 20 | 45 | Vinyl acetate-butyl acrylate, polyvinyl polymer (420 : 100 : 75) |
| | | | | | | | | | Five times | Eight times | | | | | |
| | | | | | | | | | Five times | Eight times | | | | | |
| 4-3-B | Q125 | 9-5/8" | 53.5# | JFELION | 3-B1 | 3-P1 | √ (1 ton: equivalent to one actual length pin) | √ | ≥ Ten times | ≥ Ten times | Box connection | 40 | 10 | 50 | Polyvinyl alcohol : Acrylic acid (6 : 100) |
| | | | | | | | | | ≥ Ten times | ≥ Ten times | | | | | |
| | | | | | | | | | Ten times | ≥ Ten times | | | | | |

**[Table 8]**

| No. | Steel type | OD (inch) | WT (LPF) | Connecti on type | Solid lubrication coating film on box connectio n side | Solid lubrication coating film on pin connectio n side | Test or No test with weight tong √: Test (in parentheses, weight and number of weights equivalent to actual length pin) -: No test | Artificial galling √: Presence -: Absence | Number of times of M/B | Number of times of M/B in case of applying lubrication assisting film using coating agent in conditions provided on right side | Thread surface coated with chemical agent | Blending ratio (wt.% with respect to weight of chemical agent excluding low alcohol and ammonia water, to be added later) | | | Blending ratio of kinds of water-soluble or water-dispersible polymers and each monomer |
|---|---|---|---|---|---|---|---|---|---|---|---|---|---|---|---|
| | | | | | | | | | | | | Water-soluble or water-dispersible polymer | Solid lubricant | Water | |
| 4-4-B | Q125 | 9-5/8" | 53.5# | JFELION | 3-B1 | 3-P1 | √ (3 ton: equivalent to one actual length pin) | √ | Seven times | ≥ Ten times | | 40 | 10 | 50 | Polyvinyl alcohol : Acrylic acid (6 : 100) |
| | | | | | | | | | Eight times | ≥ Ten times | | | | | |
| | | | | | | | | | Ten times | ≥ Ten times | | | | | |
| 4-4-B-0 | Q125 | 9-5/8" | 53.5# | JFELION | 3-B1 | 3-P1 | √ (3 ton: equivalent to one actual length pin) | √ | Six times | ≥ Ten times | | 40 | 10 | 50 | Polyvinyl alcohol : Acrylic acid (6 : 100) |
| | | | | | | | | | Eight times | ≥ Ten times | | | | | |
| | | | | | | | | | Seven times | ≥ Ten times | | | | | |
| 4-4-B-0.5 | Q125 | 9-5/8" | 53.5# | JFELION | 3-B1 | 3-P1 | √ (3 ton: equivalent to one actual length pin) | √ | Nine times | ≥ Ten times | | 40 | 10 | 50 | Polyvinyl alcohol : Acrylic acid (6 : 100) |
| | | | | | | | | | ≥ Ten times | ≥ Ten times | | | | | |
| | | | | | | | | | Fight times | ≥ Ten times | | | | | |
| 4-4-B-1.0 | Q125 | 9-5/8" | 53.5# | JFELION | 3-B1 | 3-PI | √ (3 ton: equivalent to one actual length pin) | √ | ≥ Ten times | ≥ Ten times | | 40 | 10 | 50 | Polyvinyl alcohol : Acrylic acid (6 : 100) |
| | | | | | | | | | ≥ Ten times | ≥ Ten times | | | | | |
| | | | | | | | | | ≥ Ten times | ≥ Ten times | | | | | |
| 4-4-B-3.0 | Q125 | 9-5/8" | 53.5# | JFELION | 3-B1 | 3-P1 | √ (3 ton: equivalent to one actual length pin) | √ | ≥ Ten times | ≥ Ten times | | 40 | 10 | 50 | Polyvinyl alcohol : Acrylic acid (6 : 100) |
| | | | | | | | | | ≥ Ten times | ≥ Ten times | | | | | |
| | | | | | | | | | ≥ Ten times | ≥ Ten times | | | | | |
| 4-4-B-5.0 | Q125 | 9-5/8" | 53.5# | JFELION | 3-B1 | 3-P1 | √ (3 ton: equivalent to one actual length pin) | √ | Nine times | ≥ Ten times | | 40 | 10 | 50 | Polyvinyl alcohol : Acrylic acid (6 : 100) |
| | | | | | | | | | Nine times | ≥ Ten times | | | | | |
| | | | | | | | | | Fight times | ≥ Ten times | | | | | |
| 4-4-B-8.0 | Q125 | 9-5/8" | 53.5# | JFELION | 3-B1 | 3-P1 | √ (3 ton: equivalent to one actual length pin) | √ | Three times | ≥ Ten times | | 40 | 10 | 50 | Polyvinyl alcohol : Acrylic acid (6 : 100) |
| | | | | | | | | | Five times | ≥ Ten times | | | | | |
| | | | | | | | | | Five times | ≥ Ten times | | | | | |
| 4-5-B | UHP-15CR-125 | 9-5/8" | 47.0# | JFELION | 3-B3 | 3-P3 | √ (2.5 ton: equivalent to three actual length pins) | √ | ≥ Ten times | ≥ Ten times | Box connection | 40 | 20 | 40 | ethylene-methacrylic acid copolymer resin (30 : 100) (* Here, ethylene refers to parts by weight of ethylene |
| | | | | | | | | | ≥ Ten times | ≥ Ten times | | | | | |
| | | | | | | | | | ≥ Ten times | ≥ Ten times | | | | | |
| | | | | | | | | | | | | | | | polymerized into methacrylic acid using a random copolymer of ethylene oxide and propylene oxide) |

**[Table 9]**

| No. | Solid lubricant | | | | | Solvent addition other than water (weight ratio in terms of 100 of water) | | | Viscosity (mPa·sec) | Film thickness | Pencil hardness | Application amount (g) | Application amount (mg/mm²) | Flash point (°C) | Drying time | Note |
|---|---|---|---|---|---|---|---|---|---|---|---|---|---|---|---|---|
| | Metal soap | | Black lead | | Other lubricants | Alcohol | | Ammonia water | | | | | | | | |
| | Size | Chemical name of metal soap | Size | Blending ratio (wt.% of black lead with respect to total weight of solid lubricant) | Type and ratio | Chemical name of alcohol | Kinds of alcohols and ratio with respect to water | Blending ratio of ammonia water with respect to water | | | | | | | | |
| 4-1-B | 1 µm | Calcium stearate | 1 µm | 0.5 | None | Industrial ethanol | 2 | 0.8 | 1000 mPa·sec | Impossible to define (having curing position) | 2B | Equivalent to 13 - 15 g | Impossible to define (having curing position) | Nonflammable | Air blowing 55 sec | Inventive Example |
| 4-1-P | 1 µm | Calcium stearate | 1 µm | 0.5 | None | Industrial ethanol | 2 | 0.8 | 1000 mPa·sec | Impossible to define (having curing position) | 2B | Equivalent to 13 - 15 g | Impossible to define (having curing position) | Nonflammable | Air blowing 55 sec | Inventive Example |
| 4-1-BP | 1 µm | Calcium stearate | 1 µm | 0.5 | None | Industrial ethanol | 2 | 0.8 | 1000 mPa·sec | Impossible to define (having curing position) | 2B | Equivalent to 13 - 15 g | Impossible to define (having curing position) | Nonflammable | Air blowing 55 sec | Inventive Example |
| 4-1-BP2 | 1 µm | Calcium stearate | 1 µm | 0.5 | None | Industrial ethanol | 2 | 0.8 | 1000 mPa·sec | Impossible to define (having curing position) | 2B | Equivalent to 13 - 15 g | Impossible to define (having curing position) | Nonflammable | Air blowing 55 sec | Inventive Example |
| 4-2-B | 1 µm | Calcium stearate | 1 µm | 0.5 | None | Industrial ethanol | 2 | 0.8 | 1000 mPa·sec | Impossible to define (having curing position) | 2B | Equivalent to 13 - 15 g | Impossible to define (having curing position) | Nonflammable | Air blowing 55 sec | Inventive Example |
| 4-2-P | 1 µm | Calcium stearate | 1 µm | 0.5 | None | Industrial ethanol | 2 | 0.8 | 1000 mPa·sec | Impossible to define (having curing position) | 2B | Equivalent to 13 - 15 g | Impossible to define (having curing position) | Nonflammable | Air blowing 55 sec | Inventive Example |
| 4-2-BP | 1 µm | Calcium stearate | 1 µm | 0.5 | None | Industrial ethanol | 2 | 0.8 | 1000 mPa·sec | Impossible to define (having curing position) | 2B | Equivalent to 13 - 15 g | Impossible to define | Nonflammable | Air blowing 55 sec | Inventive Example |
| | | | | | | | | | | | | | (having curing position) | | | |
| 4-3-B | | Zinc stearate | 1 µm | 1.0 | None | Industrial ethanol | 1 | 0.8 | 750 mPa·sec | Impossible to define (having curing position) | 2B | Equivalent to 10 g | Impossible to define (having curing position) | Nonflammable | Air blowing 50 sec | Inventive Example |

**[Table 10]**

| No. | Solid lubricant | | | | | Solvent addition other than water (weight ratio in terms of 100 of water) | | | Viscosity (mPa·sec) | Film thickness | Pencil hardness | Application amount (g) | Application amount (mg/mm²) | Flash point (°C) | Drying time | Note |
|---|---|---|---|---|---|---|---|---|---|---|---|---|---|---|---|---|
| | Metal soap | | Black lead | | Other lubricants | Alcohol | | Ammonia water | | | | | | | | |
| | Size | Chemical name of metal soap | Size | Blending ratio (wt.% of black lead with respect to total weight of solid lubricant) | Type and ratio | Chemical name of alcohol | Kinds of alcohols and ratio with respect to water | Blending ratio of ammonia water with respect to water | | | | | | | | |
| 4-4-B-0 | | Zinc stearate | 1 µm | 0.0 | None | Industrial ethanol | 1 | 0.8 | 750 mPa·sec | Impossible to define (having curing position) | 2B | Equivalent to 10 g | Impossible to define (having curing position) | Nonflammable | Air blowing 50 sec | Comparative Example |
| 4-4-B-0.5 | | Zinc stearate | 1 µm | 0.5 | None | Industrial ethanol | 1 | 0.8 | 750 mPa·sec | Impossible to define (having curing position) | 2B | Equivalent to 10 g | Impossible to define (having curing position) | Nonflammable | Air blowing 50 sec | Inventive Example |
| 4-4-B-1.0 | | Zinc stearate | 1 µm | 1.0 | None | Industrial ethanol | 1 | 0.8 | 750 mPa·sec | Impossible to define (having curing position) | 2B | Equivalent to 10 g | Impossible to define (having curing position) | Nonflammable | Air blowing 50 sec | Inventive Example |
| 4-4-B-30 | | Zinc stearate | 1 µm | 3.0 | None | Industrial ethanol | 1 | 0.8 | 750 mPa·sec | Impossible to define (having curing position) | 2B | Equivalent to 10 g | Impossible to define (having curing position) | Nonflammable | Air blowing 50 sec | Inventive Example |
| 4-4-B-5.0 | | Zinc stearate | 1 µm | 5.0 | None | Industrial ethanol | 1 | 0.8 | 750 mPa·sec | Impossible to define (having curing position) | 2B | Equivalent to 10 g | Impossible to define (having curing position) | Nonflammable | Air blowing 50 sec | Inventive Example |
| 4-4-B-8.0 | | Zinc stearate | 1 µm | 8.0 | None | Industrial ethanol | 1 | 0.8 | 750 mPa·sec | Impossible to define (having curing position) | 2B | Equivalent to 10 g | Impossible to define (having curing position) | Nonflammable | Air blowing 50 sec | Comparative Example |
| 4-5-B | 5 µm | Calcium 12-hydroxystearate | 1 µm | 2.0 | None | Isopropyl alcohol | 1.5 | 1.0 | 600 mPa·sec | Impossible to define (having curing position) | 4B | Equivalent to 15 g | Impossible to define (having curing position) | Nonflammable | Air blowing 50 sec | Inventive Example |

In all examples of Nos. 4-1-B, 4-1-P, 4-1-BP, and 4-1-BP2, a connection pipe for oil country tubular goods having the size and the grade used in the examples of Nos. 3-1 to 3-5 was used. Accordingly, the examples represent examination examples using the chemical agent satisfying the conditions of No. 3-1 of Example 3 as a chemical agent corresponding to this disclosure. In addition, application conditions when the chemical agent of this disclosure is applied onto an already existing solid lubrication coating film (3-B2 or 3-P2 in Table 3) as lubrication supporting are considered. In Nos. 4-1-B, 4-1-P, 4-1-BP, and 4-1-BP2, a weight tong test of applying a weight of 1 ton was performed.

The examples of Nos. 4-1-B, 4-1-P, and 4-1-BP represent examples in which the chemical agent of this disclosure is applied as a lubrication supporting agent to only the box connection (female thread), only the pin connection (male thread), and both the box connection and the pin connection, respectively. The case of No. 4-1-BP2 represents an example where a solid lubrication coating film was formed using a chemical agent under the conditions of No. 3-1 of Example 3 instead of a solid resin coating film formed on the surface of the pin connection with a chemical agent of 3-P2.

In the evaluation before lubrication supporting films of Nos. 4-1-B, 4-1-P, and 4-1-BP were formed, make-up/break-out was performed seven times, eight times, and ten times, respectively. Accordingly, when the chemical agent described in No. 3-1 of Example 3 was applied to an existing solid lubrication coating film, make-up/break-out was performed ten or more times in all three times of tries. Specifically, the test was stopped after ten times of make-up/break-out. From this, it can be found that lubrication was improved. In addition, in the weight tong test in which a load of 1 ton is applied, there is no difference between the three conditions, and it is clear that the lubrication behavior is improved in all the cases.

No. 4-1-BP2 is prepared in a condition in which the solid lubrication film: 3-P2 on the pin connection side is replaced with the lubrication supporting film of this disclosure. In this case, it can be found that the lubrication supporting film also functions as the solid lubrication coating film itself on the pin connection side, and lubrication characteristics can be realized.

An example group of Nos. 4-2-B, 4-1-P, and 4-1-BP represents an example where the weight tong was 3 ton, and a test equivalent to the weight of three connected actual length pins was performed. In the three examples, the chemical agent of this disclosure is applied as a lubrication supporting agent to only the box connection (female thread), only the pin connection (male thread), and both the box connection and the pin connection, respectively. The condition for connecting three pins represents an example of simulating a condition found in the make-up in an offshore rig. In the evaluation before the improvement of the lubrication film, the number of times of make-up/break-out was three times, five times, and five times, respectively. On the other hand, when the chemical agent (same as Nos. 4-1-B, 4-1-P, 4-1-BP, and 4-1-BP2) described in No. 4-2 was applied for improvement of the lubrication behavior and lubrication supporting, the lubrication behavior was improved such that the number of times of make-up/break-out was "≥ 10 times, ≥ 10 times, ≥ 10 times", "≥ 10 times, 8 times, ≥ 10 times", and "7 times, 8 times, 8 times" in the order of No. 4-2-B, 4-1-P, and 4-1-BP. The lubrication improving effect of Nos. 4-2-B and 4-1-P with only the box connection and only the pin connection is superior to the condition applied to both the box and pin connections. By applying the film to both the threads, the amount applied by the lubrication supporting film is about doubled. Therefore, it is estimated that even when the solid lubrication coating film is scraped to be powdery or fragmentary at the time of make-up/break-out, a large amount of the solid lubrication coating film is present to easily block the thread gap and easily results in the galling. Both cases are comparisons of superiority and inferiority within a pass range.

Similar results were obtained in the example of No. 4-3-B. That is, it has been found that lubrication is improved by forming a topcoat in which a coating agent within the definition range is applied to the box connection side with the expectation of a lubrication supporting effect.

Examples of Nos. 4-4-B-0, 4-4-B-0.5, 4-4-B-1.0, 4-4-B-3.0, 4-4-B-5.0, and 4-4-B-8.0 represent examples in which a coating agent within the definition range is expected to have a lubrication supporting effect on the box connection side. The examples provide the results of comparative examination and investigation on the black lead contents, that is, the addition amounts of the black lead with respect to the total weight of the solid lubricant, under the conditions of 0.0%, 0.5%, 1.0%, 3.0%, 5.0%, and 8.0%, respectively.

Under the condition without addition of black lead, there was no lubrication improving effect, and when the black lead content was 0.5 to 5.0%, there was a lubrication improving effect. In particular, a good lubrication improving effect is apparent within a range of 1.0 to 3.0%. On the other hand, in the case of 8.0% where the ratio exceeded 5.0%, deterioration of lubrication characteristics was observed. Thus, formulating of the black lead in an appropriate range is a key to achieving good lubrication behavior.

In the example of No. 4-5-B, even when the lubrication support is not already performed, ten or more times of make-up/break-out has already been realized in all the evaluation results of three times of tries, and thus the improvement cannot be evaluated. However, it can be inferred from the examples of Nos. 4-1 to 4-4 that more severe lubrication conditions have a considerable improvement effect.

### (Other examples)

This disclosure can also have the following configurations.
(1) A coating agent for forming a solid lubrication coating film by being applied to a metal surface, the coating agent including:
   as main components, a solid lubricant; a binder resin; and a solvent, in which
   the solvent contains water as a main component and a lower alcohol having three or fewer carbon atoms which is added as an additive to the water, and the additive has a volume of 0.5 or more and 10 or less in terms of 100 set as a volume of the water,
   95% or more of a volume of the solvent is composed of the water and the additive, and
   as the solid lubricant, black lead and a metal soap account for 95% or more of a weight of all solid lubrication components,
   further as the solid lubricant, an alkaline soap accounts for 0% or more and 1% or less of the weight of all the solid lubrication components,
   the black lead accounts for 0.5% or more and 5% or less of the total solid lubricant in terms of a weight ratio, and
   the binder resin is a water-soluble or water-dispersible polymer, and the polymer is a polymer or a copolymer containing monomers belonging to acrylates or methacrylates in an amount of 90% or more of a total weight of the binder resin.
(2) As the additive, ammonia water is further added.
(3) The binder resin accounts for 30% or more and 40% or less of a total weight of the coating agent,
   the solid lubricant accounts for 10% or more and 20% or less of the total weight of the coating agent, and
   the solvent accounts for 40% or more and 50% or less of the total weight of the coating agent.
(4) Of a lower alcohol and ammonia water, at least the lower alcohol is added as the additive as a solvent component to the water which constitutes, the solvent, and the lower alcohol is composed of one or two or more kinds of lower alcohols having three or fewer carbon atoms,
   a volume of the lower alcohol is 0.5 or more and 10 or less in terms of 100 set as the volume of the water constituting the solvent, and
   a volume of the ammonia water is 0 or more and 5 or less in terms of 100 set as the volume of the water constituting the solvent.
(5) The lower alcohol is a lower alcohol selected from methanol, ethanol, isopropyl alcohol, normal propyl alcohol, and industrial ethanol.
(6) The black lead has an average particle size of 5 µm or less, and the metal soap has an average particle size of 5 µm or less.
(7) The water-soluble or water-dispersible polymer constituting the binder resin is a polymer composed of a single monomer of monomers to be described in the following (1) to (4) or a copolymer composed of two or more monomers of the monomers to be described in the following (1) to (4).
   (1) Monomers including acrylates, methacrylates and individual derivatives of acrylates and methacrylates, as main components
   (2) Monomers combined with monomers including alkyl esters, vinyl esters, styrene esters, carboxylic acid esters, and individual derivatives of these esters and acrylates and methacrylates, and individual derivatives of acrylates and methacrylates
   (3) Monomers grafted with respect to the above-described (1) and (2)
   (4) Monomers in which one or both monomers of any one of a vinyl compound and a urethane compound are integrally formed with at least one or more monomers of (1) to (3)
(8) As the metal soap, one or two or more kinds of metal soaps which are compounds composed of a fatty acid selected from the following A group and a metal element selected from the following B group are contained, and as the alkaline soap, one or two or more kinds of alkaline soaps which are compounds composed of a fatty acid selected from the following A group and a metal element selected from the following C group are contained.
   A group: stearic acid, behenic acid, lauric acid, 12-hydroxystearic acid, oleic acid, montanic acid
   B group: Mg, Ca, Zn, Ba
   C group: Na, K
(9) The coating agent of this disclosure has a flash point of 60°C or higher or is nonflammable.
(10) The coating agent of this disclosure has a viscosity of 1,000 mPa·sec or lower.
(11) When the coating agent is applied to a metal surface by an application amount of 0.1 g/mm² or less and is left and dried at an ambient temperature in an atmospheric environment, the coating agent has an early drying property enabling drying to be performed within 30 minutes.
(12) When the coating agent is applied to a metal surface by an application amount of 0.1 g/mm² or less and is dried by blowing air at 1 m/sec or more at an ambient temperature in an atmospheric environment, the coating agent has an early drying property enabling drying to be performed within three minutes.
(13) A method for manufacturing a coating agent of this disclosure, including: formulating the metal soap by dispersing and opacifying the metal soap in the lower alcohol and then putting the metal soap into water of a solvent.
(14) A method for repairing oil country tubular goods by which a lubrication film of a thread portion for oil country tubular goods is repaired, the method including: applying the coating agent of this disclosure to at least a cured part after curing a region where galling has occurred in the thread portion for oil country tubular goods.
(15) The coating agent of this disclosure is applied on the solid lubrication coating film of oil country tubular goods in which the solid lubrication coating film is formed on a thread portion.
(16) Oil country tubular goods including:
   a lubrication coating film having a solid lubrication coating film formed on a thread portion, in which
   the solid lubrication coating film is formed by dispersing a solid lubricant in a binder resin,
   as the solid lubricant, black lead and a metal soap account for 95% or more of the weight of all solid lubrication components,
   further as the solid lubricant, an alkaline soap accounts for 0% or more and 1% or less of the weight of all the solid lubrication components,
   the black lead accounts for 0.5% or more and 5% or less of the total solid lubricant in terms of a weight ratio, and
   the binder resin is a water-soluble or water-dispersible polymer, and the polymer is a polymer or a copolymer containing monomers belonging to acrylates or methacrylates, by 90% or more of a total weight of the binder resin.
(17) The black lead has an average particle size of 5 µm or less, and
   the metal soap has an average particle size of 5 µm or less.
(18) The metal soap accounts for 0.5% or more and 5% or less of the total solid lubricant in terms of a weight ratio.
(19) The water-soluble or water-dispersible polymer constituting the binder resin is a polymer composed of a single monomer of monomers to be described in the following (1) to (4) or a copolymer composed of two or more monomers of the monomers described in the following (1) to (4).
   (1) Monomers including acrylates, methacrylates and individual derivatives of acrylates and methacrylates, as main components
   (2) Monomers combined with monomers including alkyl esters, vinyl esters, styrene esters, carboxylic acid esters, and individual derivatives of these esters and acrylates and methacrylates, and individual derivatives of acrylates and methacrylates
   (3) Monomers grafted with respect to the above-described (1) and (2)
   (4) Monomers in which one or both monomers of any one of a vinyl compound and a urethane compound are integrally formed with at least one or more monomers of (1) to (3)
(20) As the metal soap, one or two or more kinds of metal soaps which are compounds composed of a fatty acid selected from the following A group and a metal element selected from the following B group are contained, and
   as the alkaline soap, one or two or more kinds of alkaline soaps which are compounds composed of a fatty acid selected from the following A group and a metal element selected from the following C group are contained.
   A group: stearic acid, behenic acid, lauric acid, 12-hydroxystearic acid, oleic acid, montanic acid
   B group: Mg, Ca, Zn, Ba
   C group: Na, K
(21) The solid lubrication coating film has a film thickness of 10 µm or more and 100 µm or less and a soft film hardness of B or lower in pencil hardness.

Here, the description has been provided with reference to a limited number of embodiments, but the scope of rights is not limited thereto, and modifications of each embodiment based on the above-described disclosure are obvious to those skilled in the art.

### Reference Signs List

- 1: pin
- 1a: thread portion
- 2: box
- 2a: thread portion

## Claims

1. A coating agent for forming a solid lubrication coating film by being applied to a metal surface, the coating agent comprising: as main components,
a solid lubricant; a binder resin; and a solvent,
wherein the solvent contains water as a main component and a lower alcohol having three or fewer carbon atoms which is added as an additive to the water, and the additive has a volume of 0.5 or more and 10 or less in terms of 100 set as a volume of the water,
wherein 95% or more of a volume of the solvent is composed of the water and the additive,
wherein, as the solid lubricant, black lead and a metal soap account for 95% or more of the weight of all solid lubrication components,
wherein, further as the solid lubricant, an alkaline soap accounts for 0% or more and 1% or less of the weight of all the solid lubrication components,
wherein the black lead accounts for 0.5% or more and 5% or less of the total solid lubricant in terms of a weight ratio
wherein the metal soap is a salt of a higher fatty acid and a metal ion other than an Na ion or a K ion and the alkaline soap is a salt of a higher fatty acid and an Na ion or a K ion, and
wherein the binder resin is a water-soluble or water-dispersible polymer, and the polymer is a polymer or a copolymer containing monomers classified as acrylates or methacrylates in an amount of 90% or more of a total weight of the binder resin.

2. The coating agent for forming a solid lubrication coating film according to claim 1,
wherein, as the additive, ammonia water is further added.

3. The coating agent for forming a solid lubrication coating film according to claim 1 or 2,
wherein the binder resin accounts for 30% or more and 40% or less of a total weight of the coating agent,
wherein the solid lubricant accounts for 10% or more and 20% or less of the total weight of the coating agent, and
wherein the solvent accounts for 40% or more and 50% or less of the total weight of the coating agent.

4. The coating agent for forming a solid lubrication coating film according to any one of claims 1 to 3,
wherein, of a lower alcohol and ammonia water, at least the lower alcohol is added as the additive as a solvent component to the water which constitutes the solvent, and the lower alcohol is composed of one or two or more kinds of lower alcohols having three or fewer carbon atoms,
wherein a volume of the lower alcohol is 0.5 or more and 10 or less in terms of 100 set as the volume of the water constituting the solvent, and
wherein a volume of the ammonia water is 0 or more and 5 or less in terms of 100 set as the volume of the water constituting the solvent.

5. The coating agent for forming a solid lubrication coating film according to any one of claims 1 to 4,
wherein the lower alcohol is a lower alcohol selected from methanol, ethanol, isopropyl alcohol, normal propyl alcohol, and industrial ethanol.

6. The coating agent for forming a solid lubrication coating film according to any one of claims 1 to 5,
wherein the water-soluble or water-dispersible polymer constituting the binder resin is a polymer composed of a single monomer of monomers to be described in the following (1) to (4) or a copolymer composed of two or more monomers of the monomers to be described in the following (1) to (4),
and wherein:
- (1) Monomers including acrylates, methacrylates and individual derivatives of acrylates and methacrylates, as main components;
- (2) Monomers combined with monomers including alkyl esters, vinyl esters, styrene esters, carboxylic acid esters, and individual derivatives of these esters and acrylates and methacrylates, and individual derivatives of acrylates and methacrylates;
- (3) Monomers grafted with respect to the monomers of (1) and (2);
- (4) Monomers constituted by integrating one or both monomers of a vinyl compound and a urethane compound with one or more monomers of at least one of (1) to (3).

7. The coating agent for forming a solid lubrication coating film according to any one of claims 1 to 6,
wherein, as the metal soap, one or two or more kinds of metal soaps which are compounds composed of a fatty acid selected from the following A group and a metal element selected from the following B group are contained, and
wherein, as the alkaline soap, one or two or more kinds of alkaline soaps which are compounds composed of a fatty acid selected from the following A group and a metal element selected from the following C group are contained,
and wherein:
- A group: stearic acid, behenic acid, lauric acid, 12-hydroxystearic acid, oleic acid, montanic acid;
- B group: Mg, Ca, Zn, Ba;
- C group: Na, K.

8. The coating agent for forming a solid lubrication coating film according to any one of claims 1 to 7, wherein the coating agent has a flash point of 60°C or higher or is nonflammable.

9. The coating agent for forming a solid lubrication coating film according to any one of claims 1 to 8, wherein, when the coating agent is applied to a metal surface at an application amount of 0.1 g/mm² or less and is left and dried at an ambient temperature in an atmospheric environment, the coating agent has an early drying property enabling drying to be performed within 30 minutes.

10. The coating agent for forming a solid lubrication coating film according to any one of claims 1 to 9, wherein, when the coating agent is applied to a metal surface by an application amount of 0.1 g/mm² or less and is dried by blowing air at 1 m/sec or more at an ambient temperature in an atmospheric environment, the coating agent has an early drying property enabling drying to be performed within three minutes.

11. A method for manufacturing a coating agent for forming a solid lubrication coating film which is a method for manufacturing the coating agent according to any one of claims 1 to 10, the method comprising:
formulating the metal soap by dispersing and opacifying the metal soap in the lower alcohol and then putting the metal soap into water of a solvent.

12. A method for repairing oil country tubular goods by which a lubrication film of a thread portion for oil country tubular goods is repaired, the method comprising:
applying the coating agent for forming a solid lubrication coating film according to any one of claims 1 to 10 to at least a cured part after curing a region where galling has occurred in the thread portion for oil country tubular goods.

13. A method for improving lubrication of oil country tubular goods, the method comprising:
applying the coating agent for forming a solid lubrication coating film according to any one of claims 1 to 10 on the solid lubrication coating film of oil country tubular goods in which the solid lubrication coating film is formed on a thread portion.

14. Oil country tubular goods comprising:
a lubrication coating film having a solid lubrication coating film formed on a thread portion,
wherein the solid lubrication coating film is formed by dispersing a solid lubricant in a binder resin,
wherein, as the solid lubricant, black lead and a metal soap account for 95% or more of the weight of all solid lubrication components,
wherein, further as the solid lubricant, an alkaline soap accounts for 0% or more and 1% or less of the weight of all the solid lubrication components,
wherein the black lead accounts for 0.5% or more and 5% or less of the total solid lubricant in terms of a weight ratio
wherein the metal soap is a salt of a higher fatty acid and a metal ion other than an Na ion or a K ion and the alkaline soap is a salt of a higher fatty acid and an Na ion or a K ion, and
wherein the binder resin is a water-soluble or water-dispersible polymer, and the polymer is a polymer or a copolymer containing monomers classified as acrylates or methacrylates, by 90% or more of a total weight of the binder resin.

15. The oil country tubular goods according to claim 14,
wherein the metal soap accounts for 0.5% or more and 5% or less of the total solid lubricant in terms of a weight ratio.

16. The oil country tubular goods according to claim 14 or 15,
wherein the water-soluble or water-dispersible polymer constituting the binder resin is a polymer composed of a single monomer of monomers to be described in the following (1) to (4) or a copolymer composed of two or more monomers of the monomers described in the following (1) to (4),
and wherein:
- (1) Monomers including acrylates, methacrylates and individual derivatives of acrylates and methacrylates, as main components;
- (2) Monomers combined with monomers including alkyl esters, vinyl esters, styrene esters, carboxylic acid esters, and individual derivatives of these esters and acrylates and methacrylates, and individual derivatives of acrylates and methacrylates;
- (3) Monomers grafted with respect to the monomers of (1) and (2);
- (4) Monomers constituted by integrating one or both monomers of a vinyl compound and a urethane compound with one or more monomers of at least one of (1) to (3).

17. The oil country tubular goods according to any one of claims 14 to 16
wherein, as the metal soap, one or two or more kinds of metal soaps which are compounds composed of a fatty acid selected from the following A group and a metal element selected from the following B group are contained, and
wherein, as the alkaline soap, one or two or more kinds of alkaline soaps which are compounds composed of a fatty acid selected from the following A group and a metal element selected from the following C group are contained,
and wherein:
- A group: stearic acid, behenic acid, lauric acid, 12-hydroxystearic acid, oleic acid, montanic acid;
- B group: Mg, Ca, Zn, Ba;
- C group: Na, K.

18. The oil country tubular goods according to any one of claims 14 to 16,
wherein the solid lubrication coating film has a film thickness of 10 µm or more and 100 µm or less and a soft film hardness of B or lower in pencil hardness.

## Patentansprüche

1. Beschichtungsmittel zur Bildung eines festen Schmierbeschichtungsfilms, indem es auf eine Metalloberfläche aufgebracht wird, wobei das Beschichtungsmittel Folgendes umfasst: als Hauptkomponenten,
einen festen Schmierstoff; ein Bindemittelharz; und ein Lösungsmittel,
wobei das Lösungsmittel Wasser als eine Hauptkomponente und einen niederen Alkohol, der drei oder weniger Kohlenstoffatome aufweist, der dem Wasser als ein Additiv hinzugefügt ist, enthält, und das Additiv ein Volumen von 0,5 oder mehr und 10 oder weniger bezogen auf 100, das als ein Volumen des Wassers festgelegt ist, aufweist,
wobei 95 % oder mehr eines Volumens des Lösungsmittels aus dem Wasser und dem Additiv zusammengesetzt ist,
wobei, als der feste Schmierstoff, Graphit und eine Metallseife 95 % oder mehr des Gewichts aller festen Schmierkomponenten ausmachen,
wobei, ferner als der feste Schmierstoff, eine Alkaliseife 0 % oder mehr und 1 % oder weniger des Gewichts aller der festen Schmierkomponenten ausmacht,
wobei das Graphit 0,5 % oder mehr und 5 % oder weniger des gesamten festen Schmierstoffs bezogen auf ein Gewichtsverhältnis ausmacht
wobei die Metallseife ein Salz einer höheren Fettsäure und eines Metallions, das ein anderes als ein Na-Ion oder ein K-Ion ist, ist und die Alkaliseife ein Salz einer höheren Fettsäure und eines Na-Ions oder eines K-Ions ist, und
wobei das Bindemittelharz ein wasserlösliches oder wasserdispergierbares Polymer ist, und das Polymer ein Polymer oder ein Copolymer ist, das Monomere, die als Acrylate oder Methacrylate klassifiziert sind, in einer Menge von 90 % oder mehr eines Gesamtgewichts des Bindemittelharzes enthält.

2. Beschichtungsmittel zur Bildung eines festen Schmierbeschichtungsfilms nach Anspruch 1,
wobei, als das Additiv, Ammoniakwasser ferner hinzugefügt ist.

3. Beschichtungsmittel zur Bildung eines festen Schmierbeschichtungsfilms nach Anspruch 1 oder 2,
wobei das Bindemittelharz 30 % oder mehr und 40 % oder weniger eines Gesamtgewichts des Beschichtungsmittels ausmacht,
wobei der feste Schmierstoff 10 % oder mehr und 20 % oder weniger des Gesamtgewichts des Beschichtungsmittels ausmacht, und
wobei das Lösungsmittel 40 % oder mehr und 50 % oder weniger des Gesamtgewichts des Beschichtungsmittels ausmacht.

4. Beschichtungsmittel zur Bildung eines festen Schmierbeschichtungsfilms nach einem der Ansprüche 1 bis 3,
wobei, von einem niederen Alkohol und Ammoniakwasser, mindestens der niedere Alkohol als das Additiv als eine Lösungsmittelkomponente dem Wasser, das das Lösungsmittel bildet, hinzugefügt ist, und der niedere Alkohol aus einer oder zwei oder mehr Arten von niederen Alkoholen, die drei oder weniger Kohlenstoffatome aufweisen, zusammengesetzt ist,
wobei ein Volumen des niederen Alkohols 0,5 oder mehr und 10 oder weniger bezogen auf 100, das als das Volumen des Wassers, das das Lösungsmittel bildet, festgelegt ist, beträgt, und
wobei ein Volumen des Ammoniakwassers 0 oder mehr und 5 oder weniger bezogen auf 100, das als das Volumen des Wassers, das das Lösungsmittel bildet, festgelegt ist, beträgt.

5. Beschichtungsmittel zur Bildung eines festen Schmierbeschichtungsfilms nach einem der Ansprüche 1 bis 4,
wobei der niedere Alkohol ein niederer Alkohol ist, der aus Methanol, Ethanol, Isopropylalkohol, Normalpropylalkohol und Industrieethanol ausgewählt ist.

6. Beschichtungsmittel zur Bildung eines festen Schmierbeschichtungsfilms nach einem der Ansprüche 1 bis 5,
wobei das wasserlösliche oder wasserdispergierbare Polymer, das das Bindemittelharz bildet, ein Polymer, das aus einem einzelnen Monomer von Monomeren, die im folgenden (1) bis (4) zu beschreiben sind, zusammengesetzt ist, oder ein Copolymer, das aus zwei oder mehr Monomeren der Monomere, die im folgenden (1) bis (4) zu beschreiben sind, zusammengesetzt ist, ist,
und wobei:
- (1) Monomere, die Acrylate, Methacrylate und einzelne Derivate von Acrylaten und Methacrylaten als Hauptkomponenten beinhalten;
- (2) Monomere, die mit Monomeren, die Alkylester, Vinylester, Styrolester, Carbonsäureester und einzelne Derivate dieser Ester und Acrylate und Methacrylate und einzelne Derivate von Acrylaten und Methacrylaten beinhalten, kombiniert sind;
- (3) Monomere, die in Bezug auf die Monomere von (1) und (2) gepfropft sind;
- (4) Monomere, die gebildet sind, indem ein oder beide Monomere einer Vinylverbindung und einer Urethanverbindung mit einem oder mehreren Monomeren von mindestens einem von (1) bis (3) integriert werden.

7. Beschichtungsmittel zur Bildung eines festen Schmierbeschichtungsfilms nach einem der Ansprüche 1 bis 6,
wobei, als die Metallseife, eine oder zwei oder mehr Arten von Metallseifen, die Verbindungen sind, die aus einer Fettsäure, die aus der folgenden A-Gruppe ausgewählt ist, und einem Metallelement, das aus der folgenden B-Gruppe ausgewählt ist, zusammengesetzt sind, enthalten sind, und
wobei, als die Alkaliseife, eine oder zwei oder mehr Arten von Alkaliseifen, die Verbindungen sind, die aus einer Fettsäure, die aus der folgenden A-Gruppe ausgewählt ist, und einem Metallelement, das aus der folgenden C-Gruppe ausgewählt ist, zusammengesetzt sind, enthalten sind,
und wobei:
- A-Gruppe: Stearinsäure, Behensäure, Laurinsäure, 12-Hydroxystearinsäure, Ölsäure, Montansäure;
- B-Gruppe: Mg, Ca, Zn, Ba;
- C-Gruppe: Na, K.

8. Beschichtungsmittel zur Bildung eines festen Schmierbeschichtungsfilms nach einem der Ansprüche 1 bis 7, wobei das Beschichtungsmittel einen Flammpunkt von 60 °C oder höher aufweist oder nicht brennbar ist.

9. Beschichtungsmittel zur Bildung eines festen Schmierbeschichtungsfilms nach einem der Ansprüche 1 bis 8, wobei, wenn das Beschichtungsmittel auf eine Metalloberfläche in einer Auftragsmenge von 0,1 g/mm² oder weniger aufgebracht wird und bei einer Umgebungstemperatur in einer atmosphärischen Umgebung belassen und getrocknet wird, das Beschichtungsmittel eine frühe Trocknungseigenschaft aufweist, die es ermöglicht, dass ein Trocknen innerhalb von 30 Minuten durchgeführt wird.

10. Beschichtungsmittel zur Bildung eines festen Schmierbeschichtungsfilms nach einem der Ansprüche 1 bis 9, wobei, wenn das Beschichtungsmittel auf eine Metalloberfläche in einer Auftragsmenge von 0,1 g/mm² oder weniger aufgebracht wird und durch Blasen von Luft mit 1 m/sec oder mehr bei einer Umgebungstemperatur in einer atmosphärischen Umgebung getrocknet wird, das Beschichtungsmittel eine frühe Trocknungseigenschaft aufweist, die es ermöglicht, dass ein Trocknen innerhalb von drei Minuten durchgeführt wird.

11. Verfahren zum Herstellen eines Beschichtungsmittels zur Bildung eines festen Schmierbeschichtungsfilms, das ein Verfahren zum Herstellen des Beschichtungsmittels nach einem der Ansprüche 1 bis 10 ist, wobei das Verfahren umfasst:
Formulieren der Metallseife, indem die Metallseife in dem niederen Alkohol dispergiert und getrübt wird und dann die Metallseife in Wasser eines Lösungsmittels gegeben wird.

12. Verfahren zum Reparieren von Ölbohrrohren, durch das ein Schmierfilm eines Gewindeabschnitts für Ölbohrrohre repariert wird, wobei das Verfahren umfasst:
Aufbringen des Beschichtungsmittels zur Bildung eines festen Schmierbeschichtungsfilms nach einem der Ansprüche 1 bis 10 auf zumindest ein gehärtetes Teil nach einem Härten eines Bereichs, wo in dem Gewindeabschnitt für Ölbohrrohre ein Festfressen aufgetreten ist.

13. Verfahren zum Verbessern einer Schmierung von Ölbohrrohren, wobei das Verfahren umfasst:
Aufbringen des Beschichtungsmittels zur Bildung eines festen Schmierbeschichtungsfilms nach einem der Ansprüche 1 bis 10 auf den festen Schmierbeschichtungsfilm von Ölbohrrohren, in dem der feste Schmierbeschichtungsfilm auf einem Gewindeabschnitt gebildet ist.

14. Ölbohrrohre, umfassend:
einen Schmierbeschichtungsfilm, der einen festen Schmierbeschichtungsfilm aufweist, der auf einem Gewindeabschnitt gebildet ist,
wobei der feste Schmierbeschichtungsfilm durch Dispergieren eines festen Schmierstoffs in einem Bindemittelharz gebildet ist,
wobei, als der feste Schmierstoff, Graphit und eine Metallseife 95 % oder mehr des Gewichts aller festen Schmierkomponenten ausmachen,
wobei, ferner als der feste Schmierstoff, eine Alkaliseife 0 % oder mehr und 1 % oder weniger des Gewichts aller der festen Schmierkomponenten ausmacht,
wobei das Graphit 0,5 % oder mehr und 5 % oder weniger des gesamten festen Schmierstoffs bezogen auf ein Gewichtsverhältnis ausmacht
wobei die Metallseife ein Salz einer höheren Fettsäure und eines Metallions, das ein anderes als ein Na-Ion oder ein K-Ion ist, ist und die Alkaliseife ein Salz einer höheren Fettsäure und eines Na-Ions oder eines K-Ions ist, und
wobei das Bindemittelharz ein wasserlösliches oder wasserdispergierbares Polymer ist, und das Polymer ein Polymer oder ein Copolymer ist, das Monomere, die als Acrylate oder Methacrylate klassifiziert sind, zu 90 % oder mehr eines Gesamtgewichts des Bindemittelharzes enthält.

15. Ölbohrrohre nach Anspruch 14,
wobei die Metallseife 0,5 % oder mehr und 5 % oder weniger des gesamten festen Schmierstoffs bezogen auf ein Gewichtsverhältnis ausmacht.

16. Ölbohrrohre nach Anspruch 14 oder 15,
wobei das wasserlösliche oder wasserdispergierbare Polymer, das das Bindemittelharz bildet, ein Polymer, das aus einem einzelnen Monomer von Monomeren, die im folgenden (1) bis (4) zu beschreiben sind, zusammengesetzt ist, oder ein Copolymer, das aus zwei oder mehr Monomeren der Monomere, die im folgenden (1) bis (4) zu beschreiben sind, zusammengesetzt ist, ist,
und wobei:
- (1) Monomere, die Acrylate, Methacrylate und einzelne Derivate von Acrylaten und Methacrylaten als Hauptkomponenten beinhalten;
- (2) Monomere, die mit Monomeren, die Alkylester, Vinylester, Styrolester, Carbonsäureester und einzelne Derivate dieser Ester und Acrylate und Methacrylate und einzelne Derivate von Acrylaten und Methacrylaten beinhalten, kombiniert sind;
- (3) Monomere, die in Bezug auf die Monomere von (1) und (2) gepfropft sind;
- (4) Monomere, die gebildet sind, indem ein oder beide Monomere einer Vinylverbindung und einer Urethanverbindung mit einem oder mehreren Monomeren von mindestens einem von (1) bis (3) integriert werden.

17. Ölbohrrohre nach einem der Ansprüche 14 bis 16
wobei, als die Metallseife, eine oder zwei oder mehr Arten von Metallseifen, die Verbindungen sind, die aus einer Fettsäure, die aus der folgenden A-Gruppe ausgewählt ist, und einem Metallelement, das aus der folgenden B-Gruppe ausgewählt ist, zusammengesetzt sind, enthalten sind, und
wobei, als die Alkaliseife, eine oder zwei oder mehr Arten von Alkaliseifen, die Verbindungen sind, die aus einer Fettsäure, die aus der folgenden A-Gruppe ausgewählt ist, und einem Metallelement, das aus der folgenden C-Gruppe ausgewählt ist, zusammengesetzt sind, enthalten sind,
und wobei:
- A-Gruppe: Stearinsäure, Behensäure, Laurinsäure, 12-Hydroxystearinsäure, Ölsäure, Montansäure;
- B-Gruppe: Mg, Ca, Zn, Ba;
- C-Gruppe: Na, K.

18. Ölbohrrohre nach einem der Ansprüche 14 bis 16,
wobei der feste Schmierbeschichtungsfilm eine Filmdicke von 10 µm oder mehr und 100 µm oder weniger und eine weiche Filmhärte von B oder niedriger in Bleistifthärte aufweist.

## Revendications

1. Agent de revêtement pour former un film de revêtement de lubrification solide par application sur une surface métallique, l'agent de revêtement comprenant : en tant que composants principaux,
un lubrifiant solide ; une résine liante ; et un solvant,
dans lequel le solvant contient de l'eau en tant que composant principal et un alcool inférieur ayant trois atomes de carbone ou moins qui est ajouté en tant qu'additif à l'eau, et l'additif a un volume de 0,5 ou plus et de 10 ou moins, l'eau étant prise comme volume de référence égal à 100,
dans lequel 95 % ou plus d'un volume du solvant est composé de l'eau et de l'additif,
dans lequel, en tant que lubrifiant solide, le graphite et un savon métallique représentent 95 % ou plus du poids de tous les composants de lubrification solide,
dans lequel, en outre, en tant que lubrifiant solide, un savon alcalin représente 0 % ou plus et 1 % ou moins du poids de tous les composants de lubrification solide,
dans lequel le graphite représente 0,5 % ou plus et 5 % ou moins du lubrifiant solide total en termes de rapport pondéral
dans lequel le savon métallique est un sel d'un acide gras supérieur et d'un ion métallique autre qu'un ion Na ou un ion K et le savon alcalin est un sel d'un acide gras supérieur et d'un ion Na ou d'un ion K, et
dans lequel la résine liante est un polymère soluble dans l'eau ou dispersible dans l'eau, et le polymère est un polymère ou un copolymère contenant des monomères classés comme acrylates ou méthacrylates en une quantité de 90 % ou plus d'un poids total de la résine liante.

2. Agent de revêtement pour former un film de revêtement de lubrification solide selon la revendication 1,
dans lequel, en tant qu'additif, de l'eau ammoniacale est en outre ajoutée.

3. Agent de revêtement pour former un film de revêtement de lubrification solide selon la revendication 1 ou 2,
dans lequel la résine liante représente 30 % ou plus et 40 % ou moins d'un poids total de l'agent de revêtement,
dans lequel le lubrifiant solide représente 10 % ou plus et 20 % ou moins du poids total de l'agent de revêtement, et
dans lequel le solvant représente 40 % ou plus et 50 % ou moins du poids total de l'agent de revêtement.

4. Agent de revêtement pour former un film de revêtement de lubrification solide selon l'une quelconque des revendications 1 à 3,
dans lequel, parmi un alcool inférieur et de l'eau ammoniacale, au moins l'alcool inférieur est ajouté en tant qu'additif en tant que composant solvant à l'eau qui constitue le solvant, et l'alcool inférieur est composé d'un ou de deux types d'alcools inférieurs ou plus ayant trois atomes de carbone ou moins,
dans lequel le volume de l'alcool inférieur est de 0,5 ou plus et de 10 ou moins, l'eau constituant le solvant étant prise comme volume de référence égal à 100, et
dans lequel un volume de l'eau ammoniacale est de 0 ou plus et de 5 ou moins, l'eau constituant le solvant étant prise comme volume de référence égal à 100.

5. Agent de revêtement pour former un film de revêtement de lubrification solide selon l'une quelconque des revendications 1 à 4,
dans lequel l'alcool inférieur est un alcool inférieur choisi parmi le méthanol, l'éthanol, l'alcool isopropylique, l'alcool propylique normal et l'éthanol industriel.

6. Agent de revêtement pour former un film de revêtement de lubrification solide selon l'une quelconque des revendications 1 à 5,
dans lequel le polymère soluble dans l'eau ou dispersible dans l'eau constituant la résine liante est un polymère composé d'un monomère unique parmi les monomères à décrire ci-après en (1) à (4), ou d'un copolymère composé de deux monomères ou plus parmi les monomères à décrire ci-après en (1) à (4),
et dans lequel :
- (1) Monomères comportant des acrylates, des méthacrylates et des dérivés individuels d'acrylates et de méthacrylates, en tant que composants principaux ;
- (2) Monomères combinés avec des monomères comportant des esters alkyliques, des esters vinyliques, des esters de styrène, des esters d'acide carboxylique, et des dérivés individuels de ces esters et acrylates et méthacrylates, et des dérivés individuels d'acrylates et de méthacrylates ;
- (3) Monomères greffés par rapport aux monomères en (1) et (2) ;
- (4) Monomères constitués en intégrant un ou les deux monomères d'un composé vinylique et d'un composé uréthane avec un ou plusieurs monomères d'au moins l'un des points (1) à (3).

7. Agent de revêtement pour former un film de revêtement de lubrification solide selon l'une quelconque des revendications 1 à 6,
dans lequel, en tant que savon métallique, un ou deux types de savons métalliques ou plus qui sont des composés composés d'un acide gras choisi dans le groupe A suivant et d'un élément métallique choisi dans le groupe B suivant sont contenus, et
dans lequel, en tant que savon alcalin, un ou deux types de savons alcalins ou plus qui sont des composés composés d'un acide gras choisi dans le groupe A suivant et d'un élément métallique choisi dans le groupe C suivant sont contenus,
et dans lequel :
- Un groupe : acide stéarique, acide béhénique, acide laurique, acide 12-hydroxystéarique, acide oléique, acide montanique ;
- Groupe B : Mg, Ca, Zn, Ba ;
- Groupe C : Na, K.

8. Agent de revêtement pour former un film de revêtement de lubrification solide selon l'une quelconque des revendications 1 à 7, dans lequel l'agent de revêtement a un point d'éclair de 60 °C ou plus ou est ininflammable.

9. Agent de revêtement pour former un film de revêtement de lubrification solide selon l'une quelconque des revendications 1 à 8, dans lequel, lorsque l'agent de revêtement est appliqué sur une surface métallique à une quantité d'application de 0,1 g/mm² ou moins et est est laissé à sécher à une température ambiante dans un environnement atmosphérique, l'agent de revêtement a une propriété de séchage rapide permettant la réalisation d'un séchage en moins de 30 minutes.

10. Agent de revêtement pour former un film de revêtement de lubrification solide selon l'une quelconque des revendications 1 à 9, dans lequel, lorsque l'agent de revêtement est appliqué sur une surface métallique avec une quantité d'application de 0,1 g/mm² ou moins et est laissé à sécher par soufflage d'air à 1 m/s ou plus à une température ambiante dans un environnement atmosphérique, l'agent de revêtement a une propriété de séchage rapide permettant la réalisation d'un séchage en moins de trois minutes.

11. Procédé de fabrication d'un agent de revêtement pour former un film de revêtement de lubrification solide qui est un procédé de fabrication de l'agent de revêtement selon l'une quelconque des revendications 1 à 10, le procédé comprenant :
la formulation du savon métallique en dispersant et en opacifiant le savon métallique dans l'alcool inférieur, puis en plaçant le savon métallique dans de l'eau ou un solvant.

12. Procédé de réparation de produits tubulaires destinés à l'industrie pétrolière par lequel un film de lubrification d'une partie de filetage pour des produits tubulaires destinés à l'industrie pétrolière est réparé, le procédé comprenant :
l'application de l'agent de revêtement pour former un film de revêtement de lubrification solide selon l'une quelconque des revendications 1 à 10 sur au moins une pièce durcie après durcissement d'une région où un grippage s'est produit dans la partie de filetage pour les produits tubulaires destinés à l'industrie pétrolière.

13. Procédé d'amélioration de la lubrification de produits tubulaires destinés à l'industrie pétrolière, le procédé comprenant :
l'application de l'agent de revêtement pour former un film de revêtement de lubrification solide selon l'une quelconque des revendications 1 à 10 sur le film de revêtement de lubrification solide de produits tubulaires destinés à l'industrie pétrolière dans lesquels le film de revêtement de lubrification solide est formé sur une partie de filetage.

14. Produits tubulaires destinés à l'industrie pétrolière comprenant :
un film de revêtement lubrifiant ayant un film de revêtement de lubrification solide formé sur une partie de filetage,
dans lequel le film de revêtement de lubrification solide est formé en dispersant un lubrifiant solide dans une résine liante,
dans lequel, en tant que lubrifiant solide, le graphite et un savon métallique représentent 95 % ou plus du poids de tous les composants de lubrification solide,
dans lequel, en outre, en tant que lubrifiant solide, un savon alcalin représente 0 % ou plus et 1 % ou moins du poids de tous les composants de lubrification solide,
dans lequel le graphite représente 0,5 % ou plus et 5 % ou moins du lubrifiant solide total en termes de rapport pondéral
dans lequel le savon métallique est un sel d'un acide gras supérieur et d'un ion métallique autre qu'un ion Na ou un ion K et le savon alcalin est un sel d'un acide gras supérieur et d'un ion Na ou d'un ion K, et
dans lequel la résine liante est un polymère soluble dans l'eau ou dispersible dans l'eau, et le polymère est un polymère ou un copolymère contenant des monomères classés comme acrylates ou méthacrylates, de 90 % ou plus d'un poids total de la résine liante.

15. Produits tubulaires destinés à l'industrie pétrolière selon la revendication 14,
dans lequel le savon métallique représente 0,5 % ou plus et 5 % ou moins du lubrifiant solide total en termes de rapport pondéral.

16. Produits tubulaires destinés à l'industrie pétrolière selon la revendication 14 ou 15,
dans lequel le polymère soluble dans l'eau ou dispersible dans l'eau constituant la résine liante est un polymère composé d'un monomère unique parmi les monomères à décrire ci-après en (1) à (4), ou d'un copolymère composé de deux monomères ou plus parmi les monomères décrits ci-après en (1) à (4),
et dans lequel :
- (1) Monomères comportant des acrylates, des méthacrylates et des dérivés individuels d'acrylates et de méthacrylates, en tant que composants principaux ;
- (2) Monomères combinés avec des monomères comportant des esters alkyliques, des esters vinyliques, des esters de styrène, des esters d'acide carboxylique, et des dérivés individuels de ces esters et acrylates et méthacrylates, et des dérivés individuels d'acrylates et de méthacrylates ;
- (3) Monomères greffés par rapport aux monomères en (1) et (2) ;
- (4) Monomères constitués en intégrant un ou les deux monomères d'un composé vinylique et d'un composé uréthane avec un ou plusieurs monomères d'au moins l'un des points (1) à (3).

17. Produits tubulaires destinés à l'industrie pétrolière selon l'une quelconque des revendications 14 à 16
dans lequel, en tant que savon métallique, un ou deux types de savons métalliques ou plus qui sont des composés composés d'un acide gras choisi dans le groupe A suivant et d'un élément métallique choisi dans le groupe B suivant sont contenus, et
dans lequel, en tant que savon alcalin, un ou deux types de savons alcalins ou plus qui sont des composés composés d'un acide gras choisi dans le groupe A suivant et d'un élément métallique choisi dans le groupe C suivant sont contenus,
et dans lequel :
- Un groupe : acide stéarique, acide béhénique, acide laurique, acide 12-hydroxystéarique, acide oléique, acide montanique ;
- Groupe B : Mg, Ca, Zn, Ba ;
- Groupe C : Na, K.

18. Produits tubulaires destinés à l'industrie pétrolière selon l'une quelconque des revendications 14 à 16,
dans lequel le film de revêtement de lubrification solide a une épaisseur de film de 10 µm ou plus et de 100 µm ou moins et une dureté de film tendre de B ou inférieure selon la dureté au crayon.
